# EUROPÄISCHE PATENTSCHRIFT

(11) **EP 3 866 947 B1**
(45) Veröffentlichungstag und Bekanntmachung des Hinweises auf die Patenterteilung: **16.07.2025**
(21) Anmeldenummer: 19797980.0
(22) Anmeldetag: 14.10.2019
(51) Int. Cl.: B01D 46/02, B01D 51/08, B01D 49/00

(54) **PARTIKELFILTER MIT ULTRASCHALLVORRICHTUNG**
PARTICLE FILTER WITH ULTRASOUND DEVICE
FILTRE A PARTICULE AVEC DISPOSITIF DE ULTRA-SON

(30) Priorität: 18.10.2018 DE 102018008259
(43) Veröffentlichungstag der Anmeldung: 25.08.2021
(73) Patentinhaber: Smart Material Printing B.V., 7532 XJ Enschede (NL)
(72) Erfinder: LUTHE, Gregor, 48599 Gronau (Westf.) (DE); SCHÄFERS, Silke, 48485 Neuenkirchen (DE); TEN THIJE, Niels, 7545 Enschede (NL)
(74) Vertreter: Vossius & Partner Patentanwälte Rechtsanwälte mbB
(86) Internationale Anmeldenummer: PCT/EP2019/000293
(87) Internationale Veröffentlichungsnummer: WO 2020/078577

(56) Entgegenhaltungen:
- WO-A1-2011/152796
- WO-A1-2017/154804
- CN-U- 205 669 422
- JP-A- S59 154 151
- US-A1- 2003 200 864

## Beschreibung

Die vorliegende Erfindung betrifft Filteranlagen für Schwebstoffe mit Teilchengrößen von 400 pm bis ≤500 µm sowie für Noxen.

Außerdem betrifft die vorliegende Erfindung Filtrierverfahren zur Entfernung von Schwebstoffen mit Teilchengrößen von 400 pm bis ≤500 µm sowie Noxen aus gasförmigen, flüssigen und gelartigen Fluiden.

Des Weiteren betrifft die vorliegende Erfindung die Verwendung der besagten Filteranlagen und der Filtrierverfahren für die Entfernung von umweltschädlichen, gesundheitsschädlichen und/oder toxischen Schwebstoffen mit Teilchengrößen von 400 pm bis ≤500 µm aus den Fluiden auf den unterschiedlichsten technologischen Gebieten.

Nicht zuletzt betrifft die vorliegende Erfindung Gerätschaften und Anlagen, die die besagten Filteranlagen enthalten.

### Stand der Technik

Schwebstofffilter sind Filter zur Abscheidung von Schwebstoffen aus der Luft. Sie zählen zu den Tiefenfiltern und scheiden Schwebstoffen Teilchen mit einem aerodynamischen Durchmesser kleiner als 1 µm ab. Sie werden zur Ausfilterung von Bakterien und Viren, Pollen, Milbeneiern und Milbenausscheidungen, Stäuben, Aerosolen, Rauchpartikeln, Feinstaub oder Ultrafeinstaub verwendet.

Nach ihrer Abscheidungswirksamkeit können sie in
- Hochleistungs-Partikelfilter (EPA = Efficient Particulate Air filter), kleinste filtrierbare Teilchengröße: 100 nm,
- Schwebstofffilter (HEPA = High Efficiency Particulate Air filter), kleinste filtrierbare Teilchengröße: 100 nm,
- Hochleistungs-Schwebstofffilter (ULPA = Ultra Low Penetration Air filter), kleinste filtrierbare Teilchengröße: 50 nm,
- Medium-Filter, kleinste filtrierbare Teilchengröße: 300 nm,
- Vorfilter, kleinste filtrierbare Teilchengröße: 1000 nm, und
- Automobilinnenraumfilter, kleinste filtrierbare Teilchengröße: 500 nm
unterteilt werden. Für den Bereich von 1 nm bis 50 nm stehen somit keine Filter zur Verfügung.

Je nach Partikelgröße beruht ihre Filterwirkung auf den folgenden Effekten:
- Diffusionseffekt: Sehr kleine Partikel (Partikelgröße: 50 nm bis 100 nm) folgen nicht dem Gasstrom, sondern haben durch ihre Zusammenstöße mit den Gasmolekülen einer der Brownschen Bewegung ähnliche Flugbahn und stoßen dadurch mit den Filterfasern zusammen, woran sie haften bleiben. Dieser Effekt wird auch als Diffusionscharakteristik (diffusion regime) bezeichnet.
- Sperreffekt: Kleinere Partikel (Partikelgröße: 100 nm bis 500 nm), die dem Gasstrom um die Faser folgen, bleiben haften, wenn sie der Filterphase zu nahe kommen. Dieser Effekt wird auch als Abfangcharakteristik (interception regime) bezeichnet.
- Trägheitseffekt: Größere Partikel (Partikelgröße: 500 nm bis >1 µm) folgen nicht dem Gasstrom um die Faser, sondern prallen aufgrund ihrer Trägheit dagegen und bleiben daran haften. Dieser Effekt wird auch als inerte Einschlags- und Abfangcharakteristik (inertial impaction regime) bezeichnet.

In dem Partikelgrößenbereich von 100 nm bis 500 nm treten der Diffusionseffekt und der Sperreffekt gemeinsam auf. In dem Partikelgrößenbereich von 500 nm bis >1 µm treten der Trägheitseffekt und der Sperreffekt ebenfalls gemeinsam auf.

Gemäß den Filtereffekten sind Teilchen einer Teilchengröße von 200 nm bis 400 nm am schwersten abzuscheiden. Sie werden auch als MMPS = most penetrating particle size bezeichnet. Die Filtereffizienz senkt in diesem Größenbereich auf 50 %. Größere und kleinere Teilchen werden aufgrund ihrer physikalischen Eigenschaften besser abgeschieden.

Man klassifiziert EPA, HEPA und UPLA nach der Effektivität für diese Korngrößen mittels eines Prüfaerosols aus Di-2-ethylhexyl-sebacat (DEHS). K. W. Lee und B. Y. H. Liu geben in ihrem Artikel "On the Minimum Efficiency and the Most Penetrating Particle Size for Fibrous Filters" in Journal of the Air Pollution Control Association, Bd. 30, Nr. 4, April 1980, Seiten 377 bis 381, Formeln an, die es gestatten, die kleinste Effizienz und MMPS für Faserfilter aufgrund des Diffusionseffekts und des Trägheitseffekts zu berechnen. Die Ergebnisse zeigen, dass MMPS mit steigender Filtriergeschwindigkeit und mit steigender Faservolumenanteil abnimmt und mit zunehmender Fasergröße zunimmt.

Besonders kritisch ist aber auch die Tatsache, dass es für Nanopartikel einer mittlerer Teilchengröße d₅₀ von 1 nm bis <50 nm keine Filter gibt. Ausgerechnet diese Teilchen lagern sich leicht in Bronchien und Lungenbläschen ab und haben generell die höchste Mortalität und Toxizität. Sie können daher Krankheiten wie Asthma, Bronchitis, Arteriosklerose, Arrythmie, Dermitis, Autoimmunerkrankungen, Krebs, Morbus Crohn oder Organversagen hervorrufen.

Das ist besonders kritisch, da die Tiefenfilter oder Schwebstofffilter unter anderem im medizinischen Bereich wie Operationsräumen, Intensivstationen und Laboratorien sowie in Reinräumen, in der Kerntechnik und in Luftwäschern eingesetzt werden.

Eine weitere in dieser Hinsicht problematische Technologie sind Elektrofilter für die elektrische Gasreinigung, Elektro-Staubfilter oder Elektrostate, die auf der Abscheidung von Partikeln aus Gasen mittels des elektrostatischen Prinzips beruhen. Die Abscheidung im Elektrofilter kann in fünf getrennte Phasen:
1. Freisetzung von elektrischen Ladungen, meist Elektronen,
2. Aufladung der Staubpartikel im elektrischen Feld oder lonisator,
3. Transport der geladenen Staubteilchen zu der Niederschlagselektrode
4. Anhaftungen der Staubpartikel an der Niederschlagselektrode und
5. Entfernung der Staubschicht von der Niederschlagselektrode.

Es gelingt indes nicht Partikeln im Nanometerbereich vollständig abzutrennen, sodass die Gefahr einer Kontamination mit lungengängigen Partikeln in der Umgebung solcher Anlagen besteht.

Diese Elektro-Staubfilter werden häufig in der Abgasaufbereitung eingesetzt. Dabei werden Amine, Kohlendioxid, Ammoniak, Salzsäure, Schwefelwasserstoff und andere giftige Gase mithilfe von Membranen den Abgasstrom entzogen. Da die Elektro-Staufilter die feinsten Partikel nicht vollständig entfernen können, schädigen diese die Membranen und der niedrigen deren Trenneffizienz

Zu Einzelheiten betreffend die Toxikologie wird auf die Übersichtsartikel von Günter Oberdörster, Eva Oberdörster und Jan Oberdörster, "Nanotoxicology. An Emerging Discipline Evolving from Studies of Ultrafine Particles", in Environmental Health Perpectives Volume 113. (7), 2005, 823-839, und Günter Oberdörster, Vicki Stone und Ken Donaldson, "Toxicology of nanoparticles: A historical perpective", Nanotoxicology, March 2007; 1(1): 2-25.

Aus der internationalen Patentanmeldung WO 2017/153038A2 ist eine Aggregiervorrichtung zur Abscheidung und/oder Reinigung von Aerosolen und Feststoffpartikeln und -fasern aus Gasen sowie von Feststoffpartikeln und -fasern aus Flüssigwerkstoffen durch Akustophorese bekannt, umfassend
I) ein Fördermittel, ausgewählt aus der Gruppe, bestehend aus einem Förderband, einem Flüssigkeitsdruck, einer Flüssigkeitssäule und einer Flüssigkeitswelle des Flüssigwerkstoffs, in Förderrichtung modulierten Schallwellen, einer Zentrifugalkraft, einer Zentripedalkraft, einer Corioliskraft, der Gravitation, einem Injektor, einem Venturi, einem Diffusor, einem Liquidmultiplier, einem Gasmultiplier, einem Dyson, einer Mantelturbine, einem Deltaflügelkonzentrator, einem Ringventuri, einer Magnuseffektturbine, einem Berwian oder Berliner Windkraftanlage, einer passiven und aktiven Konvektion, Effusion und Diffusion, zur Aufnahme und/oder Förderung eines Aerosols und/oder eines Flüssigwerkstoffs in eine Förderrichtung in der Aggregiervorrichtung,
II) mindestens einen Erreger zum Erzeugen einer akustischen Schallwelle, die zum Beaufschlagen des Aerosols und/oder des Flüssigwerkstoffs vorgesehen ist, und
III) ein Mittel zum Separieren eines ersten, kondensierte Flüssigkeiten und/oder aggregierte Feststoffe enthaltenden Werkstoffteils von dem Aerosol und/oder dem Flüssigwerkstoff,
und ihre Verwendung zur Durchführung akustophoretischer Verfahren. Der Aggregiervorrichtung ist ein Luftfilter, insbesondere ein HEPA, vorgeschaltet und/oder nachgeschaltet.

Die bekannte Aggregiervorrichtung hat eine hohe Abscheiderate, es besteht aber nach wie vor die Gefahr, dass die Abscheiderate oder Filtrationseffizienz sich signifikant verringert, wenn besonders viele Schwebstoffe oder Schwebeteilchen mit MMPS in dem Gas vorhanden sind. Es werden keine Maßnahmen angegeben, wie diese MMPS-Teilchen effizient, d.h. zu mehr als 99 %, filtriert werden können. Außerdem werden keine Maßnahmen angegeben, wie Teilchen mit mit Teilchengrößen im Bereich von 1 nm bis 50 nm filtriert werden können, da diese weder durch ULPA noch durch EPA und HEPA abgefangen werden.

Aus dem amerikanischen Patent US 6,447,574 B1 sind ein Verfahren eine Vorrichtung für die Entfernung von Molekülen und Schmutzpartikel bekannt, bei dem man einen verschmutzten Gasstrom durch Feuchtigkeit enthaltende Schockwellen leitet, wodurch die Schmutzpartikel und Moleküle verändert werden oder anwachsen und so aus dem Gasstrom abscheidbar werden. In der Patent wird außerdem darauf hingewiesen, dass elektrostatische Abscheidern größtenteils ineffektiv bei der Abscheidung von Partikeln einer Teilchengröße <2 bis 3 µm sind.

Aus dem amerikanischen Patent US 5,769,913 ist eine akustische Kammer mit einem Querschnitt von 0,5 × 0,5 m und einer Länge von 2 m bekannt, in der Aerosolströme von 1000 bis 2000 m³/Stunde durch vier plattenförmige Sender mit einem Durchmesser von 48 cm Strahlung eine Energie von 300 W/Sender abgeben. Die Sender sind in Gruppen längs der Kammerwände oder alternierend angeordnet. Ohne zugeordnete Reflektoren beträgt die effektive akustische Energie etwa die Hälfte der abgestrahlten Energie in der Größenordnung von etwa 150 W/Sender. Es bedeutet, dass die gesamte Energie, die auf den Aerosolstrom einwirkt, bei 600 W liegt. Der Leistungspegel im Inneren der Kammer ist größer als 160 dB. Dadurch erreicht man mit Frequenzen von 20 kHz mit Aerosolen mit Partikeln von 0,2 bis 2 µm und Konzentrationen von 0,1 bis 4 g/m³ eine Teichvergrößerung um eine Größenordnung auf 1 bis 10 µm. Diese Teilchenvergrößerung ist entscheidend für die Filtrierbarkeit durch elektrostatische Filter, da diese erst ab einer Teilchengröße > 5 µm effektiv sind.

Aus der deutschen Patentanmeldung DE 198 46 115 A1 ist eine Einrichtung zur Absorption von Partikeln in einem Gasstrom bekannt, die ein im Strömungsfeld des Gasstroms angeordnetes Resonanzrohr mit einer Schallquelle zur Erzeugung einer stehenden Druckwelle umfasst. Die stehende Druckwelle fängt die Partikel aus dem durchgeleiteten Gasstrom ab, wonach diese durch Vorrichtungen zur Entfernung der Partikel ausgeleitet werden.

Aus der internationalen Patentanmeldung WO 92/09354 ist eine akustische Kammer für die Behandlung von Abgasen bekannt. Die Abgase fließen geradlinig längs der Kammerachse durch die Kammer, worin sie einem akustischen Feld ausgesetzt werden. Die Kammer hat einen regulären polygonalen Querschnitt mit 2k Seiten, in denen k Schallquellen vorhanden sind. Die Achsen der Schallquellen schließen einen Winkel von 180/k ein, wenn sie auf eine Querschnittsfläche projiziert werden. Die Schallquellen sind einer jeweiligen Seitenwand zugeordnet. Die ausgesendeten Schallwellen werden deshalb mehrfach von den Wänden der Kammer reflektiert, bevor sie auf einen schräg angeordneten Reflektor am Ende der Kammer auftreffen. Dadurch entstehen stehende Wellen mit unterschiedlichen Frequenzen, durch die die feinteiligen Partikel im Abgasstrom abgefangen werden. Die Variable k ist 2 oder 3. Es werden Frequenzen <25 kHz verwendet. Weitere Dokumente aus dem Stand der Technik sind WO 2017/154804 A1, JP S59 154151 A, CN 205 669 422 U, US 2003/200864 A1 und WO 2011/152796 A1.

### Aufgabe der vorliegenden Erfindung

Der vorliegenden Erfindung lag daher die Aufgabe zu Grunde, Filteranlagen vorzuschlagen, mit denen Schwebstoffe einer mittleren Teilchengröße d₅₀ von 400 pm bis ≤500 µm mit einer Effektivität >80% aus Fluiden, insbesondere aus Gasen, speziell aus der Luft, entfernt werden können. Außerdem sollen die Filteranlagen und die hiermit durchgeführten Filtrierverfahren in zahlreichen wissenschaftlichen, technischen und medizinischen Gebieten verwendbar sein.

### Erfindungsgemäße Lösung

Demgemäß wurden Filteranlagen für Schwebstoffe einer Teilchengröße von 400 pm bis ≤500 µm in strömenden Fluiden eines Volumenstroms von 10⁻² mL/sec bis 10⁵ mL/sec, die Filteranlagen jeweils umfassend mindestens eine Vorrichtung zur ≥80%-igen Verringerung der spezifischen Teilchenzahl (N/Vt) von Schwebstoffen mit Teilchengrößen von 400 pm bis 50 nm und/oder zur ≥80%-igen Verringerung der spezifischen Teilchenzahl (N/Vt) von Schwebstoffen mit MPPS-(most penetrating particle size)-Teilchengrößen von ≥200 nm bis ≤400 nm in strömenden Fluiden und/oder in von den Fluiden durchströmbaren und in den Fluiden fixierten Körpern, ausgewählt aus der Gruppe, bestehend aus fluidurchlässigen, schwingenden Membranen, Schaumstoffen, Netzen, Fäden und Geweben, durch einen Energieeintrag von 0,25 W bis 1 kW durch mindestens ein stationäres akustisches Ultraschallfeld eines Leistungspegels von 40 bis 250 dB aus stehenden, modulierten und unmodulierten Ultraschall-Longitudinalwellen und ihren Oberschwingungen und/oder Ultraschall-Transversalwellen und ihren Oberschwingungen einer Frequenz von 1 kHz bis 800 MHz, sodass strömende Fluide mit Schwebstoffen einer spezifischen Teilchenzahl (N/Vt) von unterhalb der Nachweisgrenze bis <0,1% und/oder mit Schwebstoffen einer spezifischen Teilchenzahl (N/Vt) von unterhalb der Nachweisgrenze bis <0,1% sowie mit Schwebstoffen mit Teilchengrößen von ≥50 nm bis ≤200 nm und einer spezifischen Teilchenzahl (N/Vt) >99 % und/oder mit Schwebstoffen mit Teilchengrößen ≥400 nm bis 500 µm einer spezifischen Teilchenzahl (N/Vt) >99 % erhältlich sind, die Vorrichtung des Weiteren umfassend mindestens einen wandlosen Strömungsbereich und/oder mindestens ein Strömungsrohr mit einer geschlossenen Wand (2.1.1), die mindestens einen Strömungskanal umschließt oder umschließen, zum Durchströmen von zunächst den Fluiden und in seinem weiteren Verlauf von den behandelten Fluiden, wobei
- der mindestens eine wandlosen Strömungsbereichs (i) mindestens zwei Paare einander zugeordneter und einander gegenüberliegender Erreger oder Erreger-Empfänger von Ultraschallwellen und/oder mindestens zwei Paare aus einem Erreger oder Erreger-Empfänger von Ultraschallwellen und einem zugeordneten, gegenüberliegenden Reflektor, deren gedachte Verbindungslinien zwischen den jeweiligen Paaren sich unter einem Winkel von 90° kreuzen, und/oder durch (ii) mindestens zwei mittig angeordnete Erreger von Ultraschallwellen zur Erzeugung des mindestens einen stationären akustischen Ultraschallfelds aufweist,
- das mindestens eine Strömungsrohrs (i) mindestens zwei Paare aus einander zugeordneten und einander gegenüberliegenden Erregern oder Erreger-Empfängern von Ultraschallwellen und/oder mindestens zwei Paare aus einem Erreger oder Erreger-Empfänger von Ultraschallwellen und einem dem Erreger oder Erreger-Empfänger zugeordneten, gegenüberliegenden Reflektor, die auf der Außenseite und/oder der Innenseite und/oder in der jeweiligen geschlossenen Wand selbst derart angeordnet sind, dass sich die gedachten Verbindungslinien zwischen den jeweiligen Paaren unter einem Winkel von 90° kreuzen, und/oder (ii) mindestens zwei mittig angeordnete Erreger von Ultraschallwellen zur Erzeugung des mindestens einen stationären akustischen Ultraschallfelds aufweist,
- wobei des Weiteren mindestens eine elektronische Vorrichtung zur Erzeugung, Überwachung und Stabilisierung der mindestens einen stehenden akustischen Ultraschallfelds mittels mindestens einer Rückkoppelungsschleife vorhanden ist,
- wobei des Weiteren mindestens eine Fördervorrichtung für einen Volumenstrom von 10⁻² mL/sec bis 10⁵ mL/sec für die Fluide in und durch das mindestens eine Strömungsrohr und/oder den mindestens einen wandlosen Strömungsbereich hindurch vorhanden ist,
- wobei des Weiteren mindestens eine fluidmäßige Verbindung des mindestens einen Strömungsrohrs und/oder des mindestens einen wandlosen Strömungsbereichs mit mindestens einem Filter einer kleinsten filtrierbaren Teilchengröße von 50 nm bis 1000 nm, der von den Fluiden durchströmbar ist, wonach die spezifischen Teilchenzahlen (N/Vt) der Schwebstoffe in den aus den Filteranlagen austretenden gefilterten Fluiden jeweils unterhalb der Nachweisgrenze sind oder bis zu 0,1 % betragen, wobei N = Teilchenzahl, V = Volumen [m³], t = Zeit [h], und die vorstehend angegebenen Prozentangaben jeweils auf die jeweiligen spezifischen Starterzahlen (N/Vt) der jeweiligen Schwebstoffe = 100 % bezogen ist.

Im Folgenden wird diese Filteranlage als »erfindungsgemäße Filteranlage« bezeichnet. Außerdem wurde das Filtrierverfahren gefunden, das die folgenden Verfahrensschritte I bis V umfasst:
(I) Fluide, die Schwebstoffe einer Teilchengröße von 400 pm bis ≤500 µm enthalten, werden mithilfe mindestens einer, insbesondere einer, Fördervorrichtung in und durch mindestens ein Strömungsrohr und/oder mindestens einen, insbesondere einen, wandlosen Strömungsbereich mindestens einer, insbesondere einer Vorrichtung mit einem Volumenstrom von 10⁻² mL/sec bis 10⁵ mL/sec durch mindestens einen, insbesondere einen, Strömungskanal gefördert, wobei das mindestens eine, insbesondere eine, Strömungsrohr von einer geschlossenen Wand umschlossen ist.
(II) In den strömenden Fluiden und/oder in den von den Fluiden durchströmten und in den Fluiden fixierten Körpern wird mittels Ultraschallwellen einer Frequenz von 1 kHz bis 800 MHz mindestens ein, insbesondere ein, stationäres akustisches Ultraschallfeld eines Leistungspegels von 40 bis 250 dB und eines Energieeintrags in den mindestens einen, insbesondere einen, Strömungskanal von 0,25 W bis 1 kW erzeugt, das aus stehenden, modulierten und unmodulierten Ultraschall-Longitudinalwellen und ihren Oberschwingungen und/oder Ultraschall-Transversalwellen und ihren Oberschwingungen besteht, wobei man
   - im Falle des mindestens einen, insbesondere einen, wandlosen Strömungsbereichs das mindestens eine, insbesondere eine, Ultraschallfeld durch (i) mindestens zwei, insbesondere mindestens drei, Paare einander zugeordneter und einander gegenüberliegender Erreger oder Erreger-Empfänger von Ultraschallwellen und/oder durch mindestens zwei, insbesondere mindestens drei, Paare aus einem Erreger oder Erreger-Empfänger von Ultraschallwellen und einem zugeordneten, gegenüberliegenden Reflektor, deren gedachten Verbindungslinien zwischen den jeweiligen Paaren sich unter einem Winkel von 90° kreuzen, und/oder durch (ii) mindestens zwei, insbesondere mindestens drei, mittig angeordnete Erreger von Ultraschallwellen erzeugt,
   - im Falle des mindestens einen, insbesondere einen, Strömungsrohrs das mindestens eine, insbesondere eine, Ultraschallfeld durch (i) mindestens zwei, insbesondere mindestens drei, Paare, einander zugeordneter und einander gegenüberliegender Erreger oder Erreger-Empfänger von Ultraschallwellen und/oder mindestens zwei, insbesondere mindestens drei, Paare aus einem Erreger oder Erreger-Empfänger von Ultraschallwellen und einem dem Erregern oder Erreger-Empfänger zugeordneten, gegenüberliegenden Reflektor, die auf der Außenseite und/oder der Innenseite und/oder in der jeweiligen geschlossenen Wand selbst derart angeordnet sind, dass sich die gedachten Verbindungslinien zwischen den jeweiligen Paaren unter einem Winkel von 90° kreuzen, und/oder durch (ii) mindestens zwei, insbesondere mindestens drei, mittig angeordnete Erreger von Ultraschallwellen (2.4.2) erzeugt.
   - wobei das mindestens eine, insbesondere eine, stehende akustische Ultraschallfeld mit mindestens einer elektronischen Vorrichtung zur Erzeugung von Rückkopplungsschleifen erzeugt, überwacht, moduliert und stabilisiert wird und
   - wobei die Fluide und im weiteren Verlauf des Strömungskanals die behandelten Fluide durch mindestens eine, insbesondere eine, Fördervorrichtung in Förderrichtung in und durch das mindestens eine, insbesondere eine, Strömungsrohr und/oder den mindestens einen, insbesondere eine, wandlosen Strömungsbereich hindurch, durch mindestens eine, insbesondere eine, fluidmäßige Verbindung des mindestens einen, insbesondere einen, Strömungsrohrs und/oder des mindestens einen, insbesondere einen, wandlosen Strömungsbereichs zu mindestens einem, insbesondere einem, Filter einer kleinsten filtrierbaren Teilchengröße von 50 nm bis 1000 nm, der von den Fluiden durchströmt wird, mit einem Volumenstrom von 10⁻² mL/sec bis 10⁵ mL/sec gefördert werden,
   - wobei durch Kondensation, Aggregation, Agglomeration, Zusammenpressen, Auftrennung, Abscheidung, Aufprall, Einschlag, Anwachsung und Wiederablösung, Zugabe von Teilchen einer Teilchengröße >400 nm bis ≤500 µm und/oder Konzentrationsänderungen von Bestandteilen der Schwebstoffe die strömenden Fluide mit Schwebstoffen mit Teilchengrößen von 1 nm bis ≤50 nm und einer spezifischen Teilchenzahl (N/Vt) ≤20% und/oder mit Schwebstoffen mit MPPS-(most penetrating particle size) Teilchengrößen von ≥200 nm bis ≤400 nm und einer spezifischen Teilchenzahl (N/Vt) ≤20% sowie Schwebstoffen mit Teilchengrößen von ≥50 nm bis ≤200 nm und einer spezifischen Teilchenzahl (NNt) ≥80% und/oder mit Schwebstoffen mit Teilchengrößen ≥400 nm bis ≤500 µm einer spezifischen Teilchenzahl (N/Vt) ≥80% gebildet werden,
(III) Es werden die Fluide und im weiteren Verlauf des Strömungskanals die behandelten Fluide durch mindestens eine, insbesondere eine, Fördervorrichtung in Förderrichtung in und durch das mindestens eine, insbesondere eine, Strömungsrohr und/oder den mindestens einen, insbesondere einen, wandlosen Strömungsbereich hindurch, durch mindestens eine, insbesondere eine fluidmäßige Verbindung des mindestens einen, insbesondere einen, Strömungsrohrs und/oder des mindestens einen, insbesondere einen, wandlosen Strömungsbereichs zu mindestens einem, insbesondere einem, Filter einer kleinsten filtrierbaren Teilchengröße von 50 nm bis 1000 nm, der von den Fluiden durchströmt wird, gefördert, wobei durch Kondensation, Aggregation, Agglomeration, Zusammenpressen, Auftrennung, Abscheidung, Aufprall, Einschlag, Anwachsung und Wiederablösung, Zugabe von Teilchen einer Teilchengröße >400 nm bis ≤500 µm und/oder durch Konzentrationsänderungen von Bestandteilen der Schwebstoffe die behandelten strömenden Fluide mit Schwebstoffen einer Teilchengröße von 400 pm bis ≤ 50 nm einer spezifischen Teilchenzahl (N/Vt) ≤20%, vorzugsweise ≤10%, bevorzugt ≤5% und insbesondere ≤1% und/oder mit Schwebstoffen (2.3.2) MPPS-Teilchengrößen von ≥200 nm bis ≤400 nm einer spezifischen Teilchenzahl (N/Vt) ≤20%, vorzugsweise ≤10%, bevorzugt ≤5% und insbesondere ≤1% sowie mit Schwebstoffen mit Teilchengrößen von ≥50 nm bis ≤200 nm und einer spezifischen Teilchenzahl (N/Vt) ≥80%, vorzugsweise ≥90%, bevorzugt ≥95% und insbesondere ≥99% und/oder mit Schwebstoffen (2.3.4) mit Teilchengrößen ≥400 nm bis 500 µm einer spezifischen Teilchenzahl (N/Vt) ≥80%, vorzugsweise ≥90%, bevorzugt ≥95% und insbesondere ≥99% gebildet werden.
(IV) Diese Schwebstoffe werden durch den mindestens einen, insbesondere einen, Filter aus den strömenden Fluiden abgetrennt, wonach die über mindestens eine, insbesondere eine, fluidmäßige Verbindung des mindestens einen, insbesondere einen Filters mit mindestens einer, insbesondere einen, Austrittsvorrichtung austretenden, filtrierten Fluide die Schwebstoffe unterschiedlicher Teilchengrößen in spezifischen Teilchenzahlen (NNt) unterhalb der jeweiligen Nachweisgrenze und/oder bis zu 0,1 % enthalten, wobei N = Teilchenzahl, V = Volumen [m³], t = Zeit [h], und die Prozentangaben auf die jeweiligen spezifischen Starterzahlen (N/Vt) der jeweiligen Schwebstoffe = 100 % bezogen sind.
(V) Alternativ oder zusätzlich werden die besagten Schwebstoffe vor und/oder nach dem mindestens einen Filter mithilfe von Ultraschallstoßwellen und/oder von Überlagerungen stehender Ultraschall-Longitudinalwellen mit ihren stehenden Oberschwingungen aus dem mindestens einen, insbesondere einen Strömungskanal in mindestens eine, insbesondere eine, Abzweigung des mindestens einen, insbesondere einen, Strömungsrohrs und/oder des mindestens einen insbesondere einen, wandlosen Strömungsbereichs ausgeleitet, mindestens einem Filter, insbesondere zwei weiteren Filtern, zugeleitet und filtriert.

Im Folgenden wird das vorstehend aufgeführte Filtrierverfahren als "erfindungsgemäßes Filtrierverfahren" bezeichnet.

Außerdem wurde die Verwendung der erfindungsgemäßen Filteranlagen und des erfindungsgemäßen Filtrierverfahrens für die Entfernung von organischen, anorganischen und/oder biogenen, flüssigen, gelartigen und/oder festen Schwebstoffen einer Teilchengröße von 400 pm bis ≤500µm aus flüssigen, gelartigen und/oder gasförmigen Fluiden gefunden, was im Folgenden als "erfindungsgemäße Verwendung" bezeichnet wird.

Nicht zuletzt wurden die Gerätschaften und Anlagen gefunden, die mindestens eine erfindungsgemäße Filteranlage umfasst und im Folgenden als »erfindungsgemäße Gerätschaften und Anlagen« bezeichnet werden.

### Vorteile der Erfindung

Im Hinblick auf den Stand der Technik war es überraschend und für den Fachmann nicht vorhersehbar, dass die Aufgabe, die der vorliegenden Erfindung zu Grunde lag, mithilfe der erfindungsgemäßen Filteranlagen, des erfindungsgemäßen Filtrierverfahrens, mit der erfindungsgemäßen Verwendung und mit den erfindungsgemäßen Gerätschaften und Anlagen gelöst werden konnte.

Insbesondere war die überraschend, dass die erfindungsgemäßen Filteranlagen und das erfindungsgemäße Filtrierverfahren auf so zahlreichen unterschiedlichen wissenschaftlichen, technischen und medizinischen Gebieten verwendet werden konnten. Außerdem konnten die erfindungsgemäßen Filteranlagen und das erfindungsgemäße Filtrierverfahren nicht nur im industriellen oder klinischen Maßstab angewandt werden, sondern auch im Rahmen von Privathaushalten oder in Arztpraxen, Zahnarztpraxen, analytischen Labors oder chemischen Labors angewandt werden. Dabei erwiesen sie sich als außerordentlich effektiv und waren in der Lage Schwebstoffe, die durch Verfahren des Standes der Technik nicht oder nur sehr schlecht filtriert werden konnten, aus gasförmigen und/oder flüssigen Fluiden mit einer Effektivität >99 %, bezogen auf die jeweiligen spezifischen Starterzahlen (N/Vt) der jeweiligen Schwebstoffe entfernen. Sie war daher hervorragend für Anwendungen geeignet, bei denen es ganz wesentlich auf die Vermeidung von gesundheitlichen Risiken ankommt.

Insbesondere konnten Schwebstoffen mit einer Größe von 400 pm bis 50 nm und MPPS-Teilchen problemlos aus flüssigen, gasförmigen und gelartigen Fluiden mit einer Effektivität >99 % entfernt werden.

Ein weiterer wesentlicher Vorteil der erfindungsgemäßen Filteranlagen der erfindungsgemäßen Filtrierverfahren war, dass sie auch im Mikrobereich zum Beispiel auf Labs-on-a-Chip angewandt werden konnten.

Weitere Vorteile gehen aus der folgenden Beschreibung hervor.

### Ausführliche Beschreibung der Erfindung

Die erfindungsgemäße Filteranlage dient der nahezu vollständigen oder vollständigen Entfernung von Schwebstoffen einer Teilchengröße von 400 pm bis ≤500 µm, vorzugsweise 1 nm bis ≤100 µm, bevorzugt 1 nm bis ≤10 µm und insbesondere 1 nm bis ≤5 µm aus strömenden Fluiden eines Volumenstroms von von 10⁻² mL/sec bis 10⁵ mL/sec durch einen Energieeintrag von 0,25 W bis 1 kW mittels Ultraschallwellen einer Frequenz von 1 kHz bis 800 MHz und eines Leistungspegels von 40 bis 250 dB.

Die Fluide können gasförmig, gelartig flüssig oder Mischphasen sein. Insbesondere sind die Fluide Luft, Industriegase, organische Flüssigkeiten an organischen Flüssigkeiten und Gemische von mindestens zwei dieser Fluide. Insbesondere handelt es sich bei den Fluiden um Luft, Industriegase, Rohgase, medizinische Gase, Abgase, Wasser, Abwasser, organische Lösemittel, Lösungen, Speiseöle, Schmieröle, Getriebeöle, Rohöle, Lebensmittel, Kühlmittel, Dispersionen, Suspensionen und Emulsionen.

Die Schwebstoffe liegen in Aerosolen, Suspensionen und/oder Emulsionen und/oder als Feststoffe, Gele, Aerosole, Suspensionen und/oder Emulsionen vor.

Im Einzelnen kann es sich bei den Schwebstoffen um feinteilige Trübstoffe, Flüssigabfälle, Gärreste, tierische Abfälle, Gülle, Schlachtabfällen, Jauche, Exkrementen Küchenabfälle, Bioabfällen, radioaktive und nicht radioaktive, organische, anorganische, organisch-anorganische und/oder biogenen Partikel, Zigarettenrauch, Zigarrenrauch, Elektrozigarettenrauch, Faserwerkstoffe, Biogasanlagenabfälle, Oberflächenbeschichtungsmittel, Lackresten, Klärschlämme, Effluent, Farben, Lacke, Versiegelungsmaterialien, Polymerabfälle, Makromoleküle, Säureaerosole, durch Kavitation gebildete Gasblasen in Fluiden, Viren und Mikroorganismen Insekteneier, Teile von Insekten, Feinstäube, die beim Straßenverkehr, Schiffsverkehr und Luftverkehr, beim Schweißen, bei mechanischem Abrieb, bei Lecks in Anlagen, bei Sanierungsarbeiten, bei der Holzbearbeitung, bei der Steinbearbeitung sowie bei Gebäudebränden, Waldbränden, Torfbränden, Bränden von Pipelines, Rohölförderanlagen, Erdgasförderanlagen, Bergwerken, Kohleflözen und Chemieanlagen, mechanischen und chemischen Zersetzungen, Explosionen, Vulkanausbrüchen, Reaktorunfällen und Sandstürmen entstehen, handeln.

Die erfindungsgemäße Filteranlage ist für die Filtration von Schwebstoffen einer Teilchengröße von 400 pm bis ≤500 µm in strömenden Fluiden eines Volumenstroms von 10⁻² mL/sec bis 10⁵ mL/sec gedacht. Die erfindungsgemäßen Filteranlagen umfassen mindestens eine, insbesondere eine, Vorrichtung zur ≥80%-igen Verringerung der spezifischen Teilchenzahl (N/Vt) von Schwebstoffen mit Teilchengrößen von 400 pm bis 50 nm und/oder zur ≥80%-igen Verringerung der spezifischen Teilchenzahl (N/Vt) von Schwebstoffen mit MPPS-(most penetrating particle size)-Teilchengrößen von ≥200 nm bis ≤400 nm in strömenden Fluiden und/oder in von den Fluiden durchströmbaren und in den Fluiden fixierten Körpern, ausgewählt aus der Gruppe, bestehend aus fluidurchlässigen, schwingenden Membranen, Schaumstoffen, Netzen, Fäden und Geweben, durch einen Energieeintrag von 0,25 W bis 1 kW durch mindestens ein stationäres akustisches Ultraschallfeld eines Leistungspegels von 40 bis 250 dB aus stehenden, modulierten und unmodulierten Ultraschall-Longitudinalwellen und ihren Oberschwingungen und/oder Ultraschall-Transversalwellen und ihren Oberschwingungen einer Frequenz von 1 kHz bis 800 MHz, sodass strömende Fluide mit Schwebstoffen einer spezifischen Teilchenzahl (N/Vt) von unterhalb der Nachweisgrenze bis <0,1% und/oder mit Schwebstoffen einer spezifischen Teilchenzahl (N/Vt) von unterhalb der Nachweisgrenze bis <0,1% sowie mit Schwebstoffen mit Teilchengrößen von ≥50 nm bis ≤200 nm und einer spezifischen Teilchenzahl (N/Vt) >99 % und/oder mit Schwebstoffen mit Teilchengrößen ≥400 nm bis 500 µm einer spezifischen Teilchenzahl (N/Vt) >99 % erhalten werden.

Die erfindungsgemäß zu verwendende Vorrichtung umfasst des Weiteren mindestens einen, insbesondere einen, wandlosen Strömungsbereich und/oder mindestens ein, insbesondere ein, Strömungsrohr mit einer geschlossenen Wand (2.1.1), die mindestens einen, insbesondere einen, Strömungskanal umschließt oder umschließen, zum Durchströmen von zunächst den Fluiden und in seinem weiteren Verlauf von den behandelten Fluiden.

Der mindestens eine, insbesondere eine, wandlosen Strömungsbereichs umfasst (i) mindestens zwei, insbesondere mindestens drei, Paare einander zugeordneter und einander gegenüberliegender Erreger oder Erreger-Empfänger von Ultraschallwellen und/oder mindestens zwei, insbesondere mindestens drei, Paare aus einem Erreger oder Erreger-Empfänger von Ultraschallwellen und einem zugeordneten, gegenüberliegenden Reflektor, deren gedachte Verbindungslinien zwischen den jeweiligen Paaren sich unter einem Winkel von 90° kreuzen, und/oder durch (ii) mindestens zwei mittig angeordnete Erreger von Ultraschallwellen zur Erzeugung des mindestens einen stationären akustischen Ultraschallfelds.

Das mindestens eine, insbesondere eine, Strömungsrohrs umfasst (i) mindestens zwei, insbesondere mindestens drei, Paare aus einander zugeordneten und einander gegenüberliegenden Erregern oder Erreger-Empfängern von Ultraschallwellen und/oder mindestens zwei, insbesondere mindestens drei, Paare aus einem Erreger oder Erreger-Empfänger von Ultraschallwellen und einem dem Erreger oder Erreger-Empfänger zugeordneten, gegenüberliegenden Reflektor, die auf der Außenseite und/oder der Innenseite und/oder in der jeweiligen geschlossenen Wand selbst derart angeordnet sind, dass sich die gedachten Verbindungslinien zwischen den jeweiligen Paaren unter einem Winkel von 90° kreuzen, und/oder (ii) mindestens zwei mittig angeordnete Erreger von Ultraschallwellen zur Erzeugung des mindestens einen stationären akustischen Ultraschallfelds.

Des Weiteren ist mindestens eine, insbesondere eine elektronische Vorrichtung zur Erzeugung, Überwachung und Stabilisierung des mindestens einen, insbesondere einen, stehenden akustischen Ultraschallfelds mittels mindestens einer Rückkoppelungsschleife vorhanden.

Außerdem ist mindestens eine, insbesondere eine Fördervorrichtung für einen Volumenstrom von 10⁻² mL/sec bis 10⁵ mL/sec für die Fluide in und durch das mindestens eine Strömungsrohr und/oder den mindestens einen wandlosen Strömungsbereich hindurch vorhanden.

Nicht zuletzt ist mindestens eine, insbesondere eine, fluidmäßige Verbindung des mindestens einen, insbesondere einen, Strömungsrohrs und/oder des mindestens einen, insbesondere einen, wandlosen Strömungsbereichs mit mindestens einem Filter oder mit mindestens zwei Filtern, einer kleinsten filtrierbaren Teilchengröße von 50 nm bis 1000 nm, der von den Fluiden durchströmbar ist, vorhanden, wonach die spezifischen Teilchenzahlen (N/Vt) der Schwebstoffe in den aus den Filteranlagen austretenden gefilterten Fluiden jeweils unterhalb der Nachweisgrenze sind oder bis zu 0,1 % betragen, wobei N = Teilchenzahl, V = Volumen [m³], t = Zeit [h], und die vorstehend angegebenen Prozentangaben jeweils auf die jeweiligen spezifischen Starterzahlen (N/Vt) der jeweiligen Schwebstoffe = 100 % bezogen ist.

Die stehenden modulierten und unmodulierten Ultraschallwellen können mit Ultraschallstoßwellen kombiniert werden.

Vorzugsweise handelt es sich bei den Erregern von Longitudinalwellen und ihren Oberschwingungen, vorzugsweise von Verdichtungswellen und ihren Oberschwingungen und insbesondere von Ultraschallwellen und ihren Oberschwingungen, um MEMS (Micro-Electro-Mechanical-Systems), Lautsprecher, vibrierende Membranen, piezoelektrische Lautsprecher, Schallwandler, virtuelle Schallquellen, Tauchspulen, magnetostatische Lautsprecher, Bändchen- , Folien- und Jet-Hochtöner, Horntreiber, Biegewellenwandler, Plasmalautsprecher, elektromagnetische Lautsprecher, Exciter, Ultraschallwandler und Phantomschallquellen.

Bevorzugt sind die Schallquellen von ihren Halterungen schallentkoppelt und vibrationsentkoppelt.

Sofern mindestens ein, insbesondere ein, wandloser Strömungsbereich verwendet wird, ist dieser von Schallquellen umgeben, die vorzugsweise von ihren Halterungen schallentkoppelt und vibrationsentkoppelt sind.

Vorzugsweise werden die Reflektoren aus der Gruppe, bestehend aus ebenen, konkaven und konvexen Schallreflektoren, ausgewählt.

Erfindungsgemäß werden die in den Strömungskanal fixierten Körper aus der Gruppe, bestehend aus fluiddurchlässigen, schwingenden Membranen, Schaumstoffen, Netzen, Fäden und Geweben ausgewählt. Die fixierten Körper können Kunststoffmembrane, Kunststoffgewebe, textile Gewebe, Gaze, Glasfaservliese, Nadelfilz, Papierfilter, Keramikfilter, Glasfilter, Sintermetallfilter und offenporige Schäume sein. Diese Materialien können auch in der Form von Partikeln, insbesondere kugelförmigen Partikel mit einer Teilchengröße im Bereich von 500 µm bis 2 mm sein, mit denen der Strömungskanal ausgefüllt wird.

Vorzugsweise wird der mindestens eine, insbesondere eine, Filter einer kleinsten filtrierbaren Teilchengröße von 50 nm bis 1000 nm aus der Gruppe, bestehend aus Hochleistungs-Partikelfiltern EPA, Schwebstofffiltern HEPA, Hochleistungs-Schwebstofffiltern ULPA, Medium-Filtern, druckverlustfreien Röhrchenfiltern, Vorfiltern, Automobilinnenraumfiltern, Kuchenfiltern, Querstromfiltern, flexiblen Filtern, starre Filtern, Industrie(Siebec)-Filtern, Vliesen, Rückspülfiltern, Wasserfiltern, Anschwemmfiltern, Raumfiltern, Schichtbettfiltern, Membranen, Magnetfiltern, Graphenfiltern, Venturi-Wäschern, Gasseparatoren, Gaswäschern, SCR-Katalysatoren und OCR-Katalysatoren ausgewählt, wobei die Materialien aus der Gruppe, bestehend aus geäzten Metallen, gesinterten Metallen, Metallschäumen, Metallfäden, Metallwolle, Metallgewebe, monolithischen, durchlässigen Kunststoffen, Kunststoffgeweben, Kunststofffäden, Kunststoffwolle, Kunststoffgeweben, Kunststoffschäumen, Papieren, Pappen, Cellulosefäden, Cellulosegeweben, Cellulosewollen, Ligninfäden, Ligninwollen, Ligningeweben, Naturfasern, Naturwolle, Naturfasergeweben, Naturfasergewirken, Naturstoffschäumen, Schwämmen, Glasfasern, Glaswolle, Glasfritten, monolithischen durchlässigen Keramiken, Keramikfritten, Keramikfasern, Keramikgeweben, Keramikwollen, Keramikschäumen, Borfasern und Steinfasern sowie Kompositmaterialien aus mindestens zwei der vorstehend genannten Materialien, ausgewählt werden.

Vorzugsweise wird die mindestens eine, insbesondere eine, insbesondere eine, Fördervorrichtung aus der Gruppe, bestehend aus einem Flüssigkeitsdruck, einer Flüssigkeitssäule und einer Flüssigkeitswelle des flüssigen Fluids, Wind, in Förderrichtung modulierten Schallwellen, einer Zentrifugalkraft, einer Zentripedalkraft, einer Corioliskraft, der Gravitation, einem Injektor, einem Venturi, einem Diffusor, einem Liquidmultiplier, einem Gasmultiplier, einem Dyson, einem Ventilator, einer Mantelturbine, einem Deltaflügelkonzentrator, einem Ringventuri, einer Magnuseffektturbine, einem Berwian oder Berliner Windkraftanlage, einer passiven und aktiven Konvektion, Effusion und Diffusion, verwendet. Bevorzugt werden Gasmultiplyer, Dysons, Ventilatoren, Liquidmultiplier und Ringventuris eingesetzt.

In einer besonders bevorzugten Ausführungsform der erfindungsgemäßen Filteranlage ist mindestens eine, insbesondere eine, Vorrichtung an das mindestens eine, insbesondere eine Strömungsrohr und/oder an den mindestens einen, insbesondere einen, wandlosen Strömungsbereich angeschlossen, mit deren Hilfe Teilchen einer Teilchengröße von 400 nm bis 500 µm in den Strömungskanal dosierbar sind. Hierdurch werde die Teilchengrößenverteilungen der Schwebstoffe in Größenbereiche verschoben, in denen die Partikel besonders effektiv filtrierbar sind.

In einer weiteren Ausführungsform der erfindungsgemäßen Filteranlage wird mindestens eine, insbesondere eine fluidmäßige Verbindung zwischen dem mindestens einen, insbesondere dem einen, Strömungsrohr und mindestens einem, insbesondere einem, Venturi-Rohrstück mit einer fluiddurchlässigen Wand gebildet.

Die Wand des mindestens einen, insbesondere einen Venturi-Rohrstücks ist aufgrund von mindestens vier, vorzugsweise mindestens fünf, bevorzugt mindestens zehn und insbesondere mindestens zwanzig Öffnungen, insbesondere kreisrunden Öffnungen, die kreisförmig um die Wand angeordnet sind, fluiddurchlässig. Vorzugsweise umfasst das mindestens eine, insbesondere-eine Venturi-Rohrstück mindestens zwei, bevorzugt mindestens drei, besonders bevorzugt mindestens vier und insbesondere mindestens fünf dieser kreisförmigen Anordnungen. Des Weiteren sind vor jeder kreisförmigen Anordnung auf der Innenseite der fluiddurchlässigen Wand ein entgegen der Durchflussrichtung geneigtes, vorzugsweise in einem Winkel von 30 bis 70° und insbesondere in einem Winkel von 60° geneigtes, ringförmiges Anstellblech angebracht. Die Anstellbleche wirken gemäß dem Ringventuriprinzip und lenken die Schwebstoffe und einen Teil der Fluide in die Öffnungen in der fluiddurchlässigen Wand zu mindestens einem, insbesondere einem Filter, der das mindestens eine, insbesondere eine, Venturi-Rohrstück in der Form einer Manschette umgibt, die wiederum in einem Abstand von mindestens einer, insbesondere einer, geschlossenen Wand umschlossen ist, sodass mindestens ein, insbesondere ein Sammelspalt für das filtrierte Fluid gebildet wird. Die mindestens eine, insbesondere eine, geschlossene Wand weist mindestens eine, insbesondere eine fluidmäßige Verbindung mit mindestens einer, insbesondere eine Austrittsvorrichtung oder mit mindestens einem, insbesondere einem Kamin für die Ableitung des filtrierten Fluids auf.

Bei dieser Ausführungsform wird das aus dem mindestens einen, insbesondere einen, Filter austretende Fluid in dem mindestens einen, insbesondere einen, Sammelspalt gesammelt und direkt über mindestens eine, insbesondere eine, Austrittsvorrichtung abgeleitet und/oder über mindestens eine, insbesondere eine, Rückführung und mindestens eine, insbesondere einen, Austrittsöffnung in das in dem mindestens einen, insbesondere einen, Fortsetzungsstück des mindestens einen, insbesondere einen, Strömungsrohrs strömende Fluid zurückgeführt. Oder aber das aus dem mindestens einen, insbesondere einen, Filter austretende filtrierte Fluid wird direkt über mindestens eine, insbesondere eine, fluidmäßige Verbindung mindestens einer, insbesondere einer Austrittsvorrichtung zugeleitet wird und/oder das über mindestens eine, insbesondere eine, Rückführung und mindestens eine, insbesondere eine, Austrittsöffnung in das in dem mindestens einen, insbesondere einen Fortsetzungsstück des mindestens einen, insbesondere einen, Strömungsrohrs strömende Fluid zurückgeführt wird.

In einer bevorzugten Ausführungsform kann die Anordnung aus mindestens einem, insbesondere einem Teil des mindestens einen, insbesondere einen, Sammelspalt mit mindestens einem, insbesondere einem, Teil der mindestens einen, insbesondere einen, Rückführung vom Rest der Filteranlage abgenommen werden. Zu diesem Zweck können die Trennstellen mit umlaufenden Flanschverbindungen mit elastomeren Dichtungen und umgreifenden Klemmen befestigt werden. Nach der Trennung und Abnahme der Teile kann der mindestens eine, insbesondere eine, manschettenförmige, verbrauchte Filter gegen mindestens einen, insbesondere einen, frischen Filter ausgetauscht werden.

Alternativ kann das mindestens eine, insbesondere eine Venturi-Rohrstück von mindestens einem, insbesondere einem, nach außen geschlossenen, manschettenförmigen Sammelspalt zur Sammlung und Zuleitung des Fluids über mindestens ein, insbesondere ein, Sammelrohr zu mindestens einem, insbesondere einem, Filter umschlossen sein. Vorzugsweise befindet sich der mindestens eine, insbesondere eine, Filter in einem fluiddichten Filtergehäuse, das mindestens eine, insbesondere eine, der vorstehend beschriebenen Flanschverbindung aufweist. Der Filter kann auf mindestens einer, insbesondere eine Lochplatte liegen und/oder von mindestens einer, insbesondere einer, Lochplatte bedeckt sein. Auf dem Filter kann sich noch mindestens ein, insbesondere ein, Grobfilter befinden, der gegebenenfalls abgelöstes Filtermaterial abfängt, damit es nicht das ausströmende filtrierte Fluid verunreinigt.

Bei dieser Ausführungsform kann das filtrierte Fluid über mindestens eine, insbesondere eine, Rückführung, wie vorstehend beschrieben, in das mindestens eine, insbesondere eine, Fortsetzungsstück zurückgeführt werden. Oder aber das filtrierte Fluid wird anderweitig abgeleitet.

In einer weiteren Ausführungsform verengt sich die lichte Weite des mindestens einen, insbesondere einen, Strömungsrohrs in Durchflussrichtung stetig und/oder sprunghaft, sodass sich das von Schwebstoffen freie oder im Wesentlichen freie Todvolumen der Fluide verringert.

In noch einer weiteren Ausführungsform werden die Schwebstoffe und Teilchen vor und/oder nach dem mindestens einen, insbesondere einen, Filter mithilfe von Stoßwellen und/oder von Überlagerungen stehender Longitudinalwellen mit ihren stehenden Oberschwingungen aus dem mindestens einen, insbesondere einen, Strömungskanal in mindestens eine, insbesondere eine Abzweigung des mindestens einen, insbesondere einen Strömungsrohrs und/oder des mindestens einen, insbesondere einen, wandlosen Strömungsbereichs ausgeleitet und dann mittels des mindestens einen Filters filtriert.

Darüber hinaus kann die vorstehend beschriebene, erfindungsgemäße Filteranlage erschütterungsfrei gelagert, flugtauglich, fahrbar und/oder schwimmfähig ausgerüstet werden, wobei sie über Ansaugungen und Gebläse oder keine Ansaugungen und Gebläse verfügt.

Vorzugsweise wird die erfindungsgemäße Filteranlage für das erfindungsgemäße Filtrierverfahren verwendet, das die folgenden Verfahrensschritte I bis V umfasst:
(I) Fluide, die Schwebstoffe einer Teilchengröße von 400 pm bis ≤500 µm enthalten, werden mithilfe mindestens einer, insbesondere einer, Fördervorrichtung in und durch mindestens ein Strömungsrohr und/oder mindestens einen, insbesondere einen, wandlosen Strömungsbereich mindestens einer, insbesondere einer Vorrichtung mit einem Volumenstrom von 10⁻² mL/sec bis 10⁵ mL/sec durch mindestens einen, insbesondere einen, Strömungskanal gefördert, wobei das mindestens eine, insbesondere eine, Strömungsrohr von einer geschlossenen Wand umschlossen ist.
(II) In den strömenden Fluiden und/oder in den von den Fluiden durchströmten und in den Fluiden fixierten Körpern wird mittels Ultraschallwellen einer Frequenz von 1 kHz bis 800 MHz mindestens ein, insbesondere ein, stationäres akustisches Ultraschallfeld eines Leistungspegels von 40 bis 250 dB und eines Energieeintrags in den mindestens einen, insbesondere einen, Strömungskanal von 0,25 W bis 1 kW erzeugt, das aus stehenden, modulierten und unmodulierten Ultraschall-Longitudinalwellen und ihren Oberschwingungen und/oder Ultraschall-Transversalwellen und ihren Oberschwingungen besteht, wobei man
   - im Falle des mindestens einen, insbesondere einen, wandlosen Strömungsbereichs das mindestens eine, insbesondere eine, Ultraschallfeld durch (i) mindestens zwei, insbesondere mindestens drei, Paare einander zugeordneter und einander gegenüberliegender Erreger oder Erreger-Empfänger von Ultraschallwellen und/oder durch mindestens zwei, insbesondere mindestens drei, Paare aus einem Erreger oder Erreger-Empfänger von Ultraschallwellen und einem zugeordneten, gegenüberliegenden Reflektor, deren gedachten Verbindungslinien zwischen den jeweiligen Paaren sich unter einem Winkel von 90° kreuzen, und/oder durch (ii) mindestens zwei, insbesondere mindestens drei, mittig angeordnete Erreger von Ultraschallwellen erzeugt,
   - im Falle des mindestens einen, insbesondere einen, Strömungsrohrs das mindestens eine, insbesondere eine, Ultraschallfeld durch (i) mindestens zwei, insbesondere mindestens drei, Paare, einander zugeordneter und einander gegenüberliegender Erreger oder Erreger-Empfänger von Ultraschallwellen und/oder mindestens zwei, insbesondere mindestens drei, Paare aus einem Erreger oder Erreger-Empfänger von Ultraschallwellen und einem dem Erregern oder Erreger-Empfänger zugeordneten, gegenüberliegenden Reflektor, die auf der Außenseite und/oder der Innenseite und/oder in der jeweiligen geschlossenen Wand selbst derart angeordnet sind, dass sich die gedachten Verbindungslinien zwischen den jeweiligen Paaren unter einem Winkel von 90° kreuzen, und/oder durch (ii) mindestens zwei, insbesondere mindestens drei, mittig angeordnete Erreger von Ultraschallwellen (2.4.2) erzeugt.
   - wobei das mindestens eine, insbesondere eine, stehende akustische Ultraschallfeld mit mindestens einer elektronischen Vorrichtung zur Erzeugung von Rückkopplungsschleifen erzeugt, überwacht, moduliert und stabilisiert wird und
   - wobei die Fluide und im weiteren Verlauf des Strömungskanals die behandelten Fluide durch mindestens eine, insbesondere eine, Fördervorrichtung in Förderrichtung in und durch das mindestens eine, insbesondere eine, Strömungsrohr und/oder den mindestens einen, insbesondere eine, wandlosen Strömungsbereich hindurch, durch mindestens eine, insbesondere eine, fluidmäßige Verbindung des mindestens einen, insbesondere einen, Strömungsrohrs und/oder des mindestens einen, insbesondere einen, wandlosen Strömungsbereichs zu mindestens einem, insbesondere einem, Filter einer kleinsten filtrierbaren Teilchengröße von 50 nm bis 1000 nm, der von den Fluiden durchströmt wird, mit einem Volumenstrom von 10⁻² mL/sec bis 10⁵ mL/sec gefördert werden,
   - wobei durch Kondensation, Aggregation, Agglomeration, Zusammenpressen, Auftrennung, Abscheidung, Aufprall, Einschlag, Anwachsung und Wiederablösung, Zugabe von Teilchen einer Teilchengröße >400 nm bis ≤500 µm und/oder Konzentrationsänderungen von Bestandteilen der Schwebstoffe die strömenden Fluide mit Schwebstoffen mit Teilchengrößen von 1 nm bis ≤50 nm und einer spezifischen Teilchenzahl (N/Vt) ≤20% und/oder mit Schwebstoffen mit MPPS-(most penetrating particle size) Teilchengrößen von ≥200 nm bis ≤400 nm und einer spezifischen Teilchenzahl (NNt) ≤20% sowie Schwebstoffen mit Teilchengrößen von ≥50 nm bis ≤200 nm und einer spezifischen Teilchenzahl (N/Vt) 280% und/oder mit Schwebstoffen mit Teilchengrößen ≥400 nm bis ≤500 µm einer spezifischen Teilchenzahl (NNt) ≥80% gebildet werden,
(III) Es werden die Fluide und im weiteren Verlauf des Strömungskanals die behandelten Fluide durch mindestens eine, insbesondere eine, Fördervorrichtung in Förderrichtung in und durch das mindestens eine, insbesondere eine, Strömungsrohr und/oder den mindestens einen, insbesondere einen, wandlosen Strömungsbereich hindurch, durch mindestens eine, insbesondere eine fluidmäßige Verbindung des mindestens einen, insbesondere einen, Strömungsrohrs und/oder des mindestens einen, insbesondere einen, wandlosen Strömungsbereichs zu mindestens einem, insbesondere einem, Filter einer kleinsten filtrierbaren Teilchengröße von 50 nm bis 1000 nm, der von den Fluiden durchströmt wird, gefördert, wobei durch Kondensation, Aggregation, Agglomeration, Zusammenpressen, Auftrennung, Abscheidung, Aufprall, Einschlag, Anwachsung und Wiederablösung, Zugabe von Teilchen einer Teilchengröße >400 nm bis ≤500 µm und/oder durch Konzentrationsänderungen von Bestandteilen der Schwebstoffe die behandelten strömenden Fluide mit Schwebstoffen einer Teilchengröße von 400 pm bis ≤ 50 nm einer spezifischen Teilchenzahl (N/Vt) ≤20%, vorzugsweise ≤10%, bevorzugt ≤5% und insbesondere ≤1% und/oder mit Schwebstoffen (2.3.2) MPPS-Teilchengrößen von ≥200 nm bis ≤400 nm einer spezifischen Teilchenzahl (N/Vt) ≤20%, vorzugsweise ≤10%, bevorzugt ≤5% und insbesondere ≤1% sowie mit Schwebstoffen mit Teilchengrößen von ≥50 nm bis ≤200 nm und einer spezifischen Teilchenzahl (N/Vt) ≥80%, vorzugsweise ≥90%, bevorzugt ≥95% und insbesondere ≥99% und/oder mit Schwebstoffen (2.3.4) mit Teilchengrößen ≥400 nm bis 500 µm einer spezifischen Teilchenzahl (N/Vt) ≥80%, vorzugsweise ≥90%, bevorzugt ≥95% und insbesondere ≥99% gebildet werden.
(IV) Diese Schwebstoffe werden durch den mindestens einen, insbesondere einen, Filter aus den strömenden Fluiden abgetrennt, wonach die über mindestens eine, insbesondere eine, fluidmäßige Verbindung des mindestens einen, insbesondere einen Filters mit mindestens einer, insbesondere einen, Austrittsvorrichtung austretenden, filtrierten Fluide die Schwebstoffe unterschiedlicher Teilchengrößen in spezifischen Teilchenzahlen (N/Vt) unterhalb der jeweiligen Nachweisgrenze und/oder bis zu 0,1 % enthalten, wobei N = Teilchenzahl, V = Volumen [m³], t = Zeit [h], und die Prozentangaben auf die jeweiligen spezifischen Starterzahlen (N/Vt) der jeweiligen Schwebstoffe = 100 % bezogen sind.
(V) Alternativ oder zusätzlich werden die besagten Schwebstoffe vor und/oder nach dem mindestens einen Filter mithilfe von Ultraschallstoßwellen und/oder von Überlagerungen stehender Ultraschall-Longitudinalwellen mit ihren stehenden Oberschwingungen aus dem mindestens einen, insbesondere einen Strömungskanal in mindestens eine, insbesondere eine, Abzweigung des mindestens einen, insbesondere einen, Strömungsrohrs und/oder des mindestens einen insbesondere einen, wandlosen Strömungsbereichs ausgeleitet, mindestens einem, insbesondere zwei, weiteren Filtern zugeleitet und filtriert.

In einer weiteren Ausführungsform werden die filtrierten Fluide mindestens einmal in die mindestens eine, insbesondere eine, Filteranlage zurückführt, und das Filtrierverfahren wird mindestens einmal wiederholt.

Die erfindungsgemäßen Filteranlagen und das erfindungsgemäße Filtrierverfahren sind auf allen technischen, naturwissenschaftlichen und medizinischen Gebieten mit Vorteil verwendbar.

So können die erfindungsgemäßen Filteranlagen und das erfindungsgemäße Filtrierverfahren grundsätzlich für die Entfernung von organischen, anorganischen und/oder biogenen, gasförmigen flüssigen und/oder festen Schwebstoffen einer Teilchengröße von 400 pm bis ≤500 µm und/oder von sonstigen molekulardispersen Noxen aus flüssigen und/oder gasförmigen Fluiden und/oder für ihre chemische Umsetzung in diesen Fluiden verwendet werden.

Dabei können die Fluiden Luft, Industriegase, Rohgase, medizinische Gase, Abgase, Wasser, Abwasser, organische Lösemittel, Lösungen, Speiseöle, Schmieröle, Getriebeöle, Rohöle, Lebensmittel, Kühlmittel, Gele, Dispersionen, Suspensionen und/oder Emulsionen sein.

Bei den Schwebstoffen kann es sich um feinteilige Trübstoffe, Flüssigabfälle, Gärreste, tierische Abfälle, Gülle, Schlachtabfällen, Jauche, Exkrementen Küchenabfälle, Bioabfällen, radioaktive und nicht radioaktive, organische, anorganische, organisch-anorganische und/oder biogenen Partikel, Zigarettenrauch, Zigarrenrauch, Elektrozigarettenrauch, Faserwerkstoffe, Biogasanlagenabfälle, Oberflächenbeschichtungsmittel, Lackresten, Klärschlämme, Effluent, Farben, Lacke, Versiegelungsmaterialien, Polymerabfälle, Makromoleküle, Säureaerosole, Quecksilberdämpfe, durch Kavitation gebildete Gasblasen in Fluiden, Zellen, Organellen, Blutzellen, Viren und Mikroorganismen, Prionen, Sporen, Pollen, Samen, Insekteneier, Teile von Insekten, Mehlstäube, Feinstäube, die beim Straßenverkehr, Schiffsverkehr und Luftverkehr, beim Schweißen, beim Löten, bei mechanischem Abrieb, bei Lecks in Anlagen, bei Sanierungsarbeiten, bei der Holzbearbeitung, bei der Steinbearbeitung sowie bei Gebäudebränden, Waldbränden, Torfbränden, Bränden von Pipelines, Rohölförderanlagen, Erdgasförderanlagen, Bergwerken, Kohleflözen und Chemieanlagen, mechanischen und chemischen Zersetzungen, Explosionen, Vulkanausbrüchen, Reaktorunfällen und Sandstürmen entstehen, handeln.

Die erfindungsgemäßen Filteranlagen und das erfindungsgemäße Filtrierverfahren können - nur um einige Beispiele zu nennen - zur Koagulation von Eiweiß, zum Nachverdichten von Gelen, zur Erhöhung der Reaktionsgeschwindigkeit chemischer Reaktionen, der Zerstörung von Mikroorganismen, dem Recycling sowie der Reinigung, der Trocknung und/oder Kühlung von Raumluft, dem Recycling sowie der Reinigung, Trocknung und/oder Kühlung der Luft in Klimaanlagen, Abzügen, Reinräumen, Reinsträumen, Personenschleusen und Überdruck- und Unterdruckkammern, dem Recycling sowie der Reinigung, Trocknung und/oder Kühlung von Luft, Gasen und Flüssigkeiten für die humanmedizinische und tiermedizinische Anwendung, der Reinigung von Zellkulturen, dem Recycling sowie der Reinigung, Trocknung und/oder Kühlung der Atmosphäre in bemannten Weltraufahrzeugen, dem Recycling sowie der Reinigung, Trocknung und/oder Kühlung der Luft in Automobilen, Lastkraftwagen, Bussen, Zügen, Schiffe, Flugzeugen, Tierställen und Toilettenanlagen, dem Recycling sowie der Reinigung der Abgase von Verbrennungsmotoren, der Reinigung der Atmosphäre, dem Sammeln gasförmiger, fester und flüssiger irdischer Proben, dem Sammeln atmosphärischer Proben bis zu der und in der Stratosphäre, dem Sammeln gasförmiger, fester und flüssiger planetarischer und atmosphärischer Proben auf Planeten mit Atmosphäre, der radioaktiven Dekontaminierung, der Gewinnung von flüssigem Wasser aus der irdischen Atmosphäre, dem Schutz von Filtermembranen, Wasserfiltern, Gasfiltern vor Schwebstoffen, der Auflösung und Ablösung von Filterkuchen von Filtern und Membranen sowie der Nachreinigung der Abgase aus Elektro-Staubabscheidern, Venturi-Wäschern, optischen Abscheidern, Gasseparatoren, Gaswäschern, SCR-Katalysatoren, OCR-Katalysatoren und und Elektrostaten dienen.

Die erfindungsgemäßen Filteranlagen können - um einige Beispiele zu nennen - in und an Geräten zur Erhöhung der Geschwindigkeit chemischer Reaktionen, in und an Staubschutzvorhängen, in und an Geräten zur klinischen und außerklinischen Intensiv- und Beatmungspflege, in unteren Anästhesiegeräten, in und an Geräten zur Umwandlung von Ammoniak und NOx in Stickstoff, in und an Geräten zur Belüftung von Reinräumen, Reinsträumen, Personenschleusen, Abzügen, Unterdruck- und Überdruckkammern, in und an Gasmasken und Atemmasken, in und an Geräten zum Schutz vor Viren, Mikroorganismen Insekteneiern und Insektenteilen, in und an Geräten, zum Schutz vor Smog, VOG, Autoabgasen, Stäuben, Aerosolen und Brandgasen, in und an Zigaretten, Zigarren und Elektrozigaretten, in und an Staubsaugern, in und an Absauganlagen von Schweißbrennern, Laserschneidern und Schleifgeräten, in und an den Auspuffanlagen von Verbrennungsmotoren, in und an Geräten zum Schutz vor Schweißspritzern, Schweißnebeln, Spritzlack-Overspray und Staubexplosionen, in und an Lüftungssystemen von Tierställen und Toilettenanlagen und in Geräten, Apparaturen und Anlagen zur Entfernung von Feinstäuben und Noxen bei mechanischem Abrieb, bei Lecks in Anlagen, bei Sanierungsarbeiten, bei der Holzbearbeitung, bei der Steinbearbeitung sowie bei der Müllverbrennung, Gebäudebränden, Waldbränden, Torfbränden, Bränden von Pipelines, Rohölförderanlagen, Erdgasförderanlagen, Bergwerken, Kohleflözen und Chemieanlagen, mechanischen und chemischen Zersetzungen, Explosionen, Vulkanausbrüchen, Reaktorunfällen und Sandstürmen entstehen, in und an Fluggeräten, in und an ferngesteuerten Roboterfahrzeugen zur Sammlung von Staubproben auf der Erde und auf anderen Himmelskörpern mit Atmosphären und zur radioaktiven Dekontaminierung, in und an Anlagen zur Gewinnung von Wasser aus der Atmosphäre, in und an Anlagen mit Elektro-Staubabscheidern und Elektrostaten, in und an Elektrogeräten, Waschmaschinen, Wäschetrocknern, Kühlschränken, Gefrierschränken und -truhen , PCs, Laptops, Notebooks, iPads, Servern, in und an Luftreinigern auf Pflanzenbasis sowie in und an passiv treibenden oder angetriebenen Über- und Unterwasserschwimmgeräten zum Einsammeln von Mikroplastik im Meerwasser, in Seen und in nicht Flüssen.

Mithilfe der erfindungsgemäßen Filteranlagen des erfindungsgemäßen Filtrierverfahren können molekulardisperse Noxen wie teilhalogenierte und perhalogenierte organische Verbindungen, Schwefeldioxid, Schwefeltrioxid, Schwefelsäure, Salzsäure, Blausäure, Schwefelhexafluorid und andere gasförmige Fluoride, NOx, nitrose Gase, Lachgas, Ammoniak, Amine, Phosphine, Phosgen, Pseudohalogene, Halogene, Halogenoxide, Peroxide, Peroxidradikale, radioaktive Verbindungen und Nuklide, Sauerstoffradikale und Ozon entfernt werden.

Insgesamt bieten die erfindungsgemäßen Gerätschaften und Anlagen, die die erfindungsgemäßen Filteranlagen enthalten, die vorstehend geschilderten Vorteile. Beispielhaft genannt seien als Gerätschaften und Anlagen Straßen, Brücken, Gebäude, Klimaanlagen, Kliniken, medizinische Geräte, Labore, Reinraumlabore, Kraftwerke, Kernkraftwerke, Verbrennungsanlagen, chemischen Anlagen, Gastrennanlagen, kerntechnische Anlagen, Fortbewegungsmittel zu Land, zu Wasser, zur Luft, unter der Erde und unter Wasser sowie die Innenräume von Weltraumfahrzeugen, Satelliten und Raumstationen.

Die vorstehenden Aufzählungen der Verwendungen, der Gerätschaften und Anlagen sind beispielhaft und nicht abschließend. Der Fachmann kann aufgrund der erfindungsgemäßen Lehre ohne Weiteres weitere Verwendungen, Gerätschaften und Anlagen vorschlagen.

### Kurze Beschreibung der Figuren

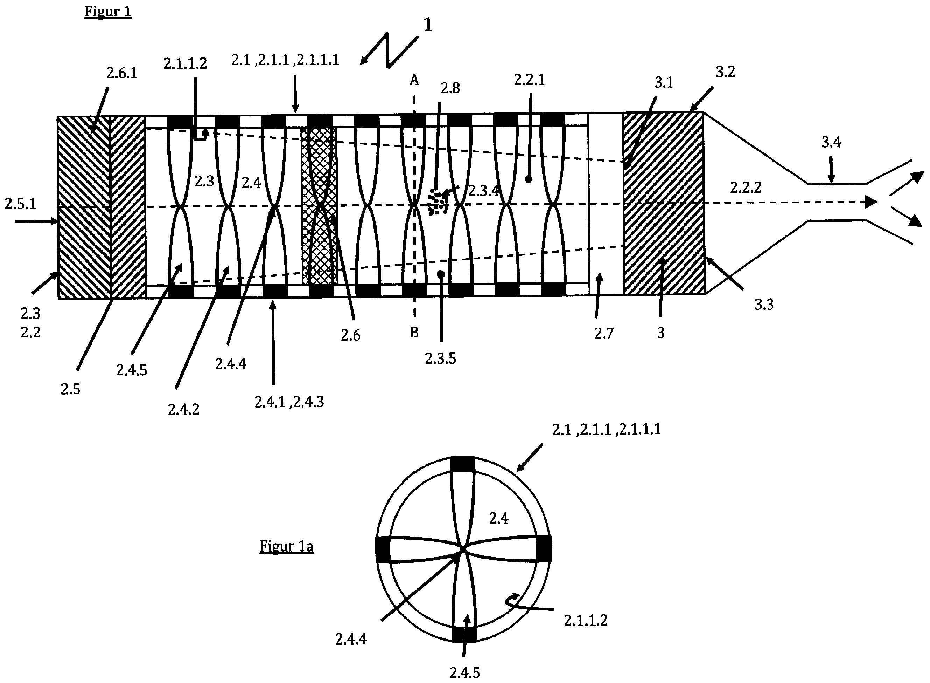

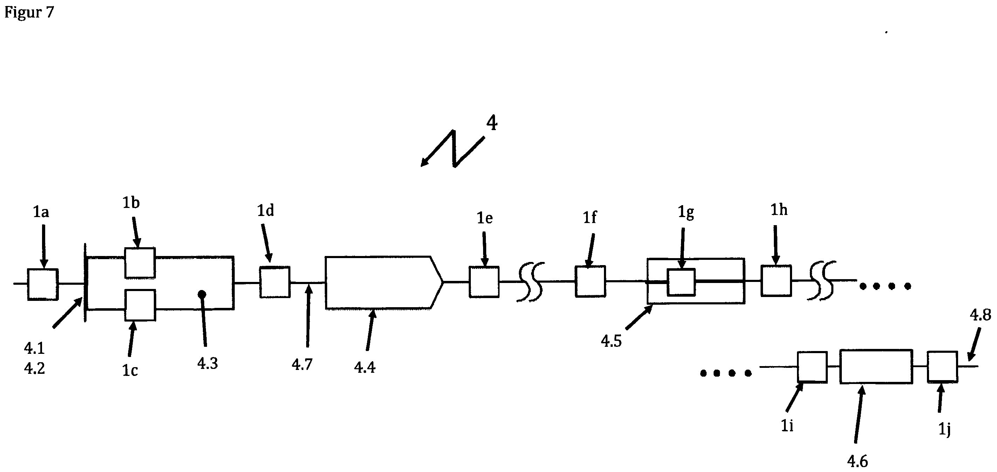

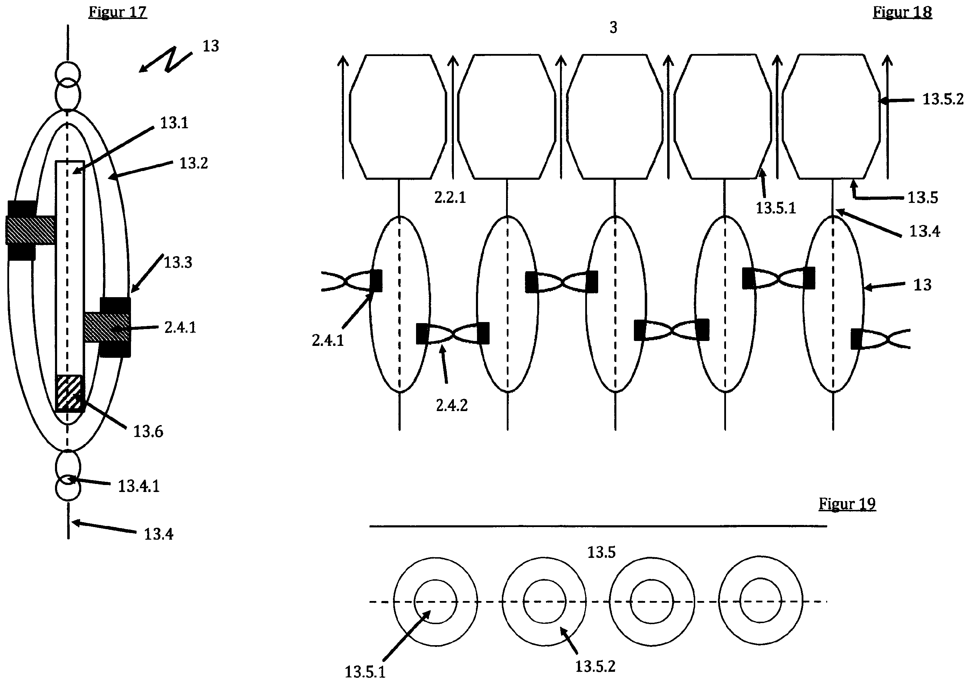

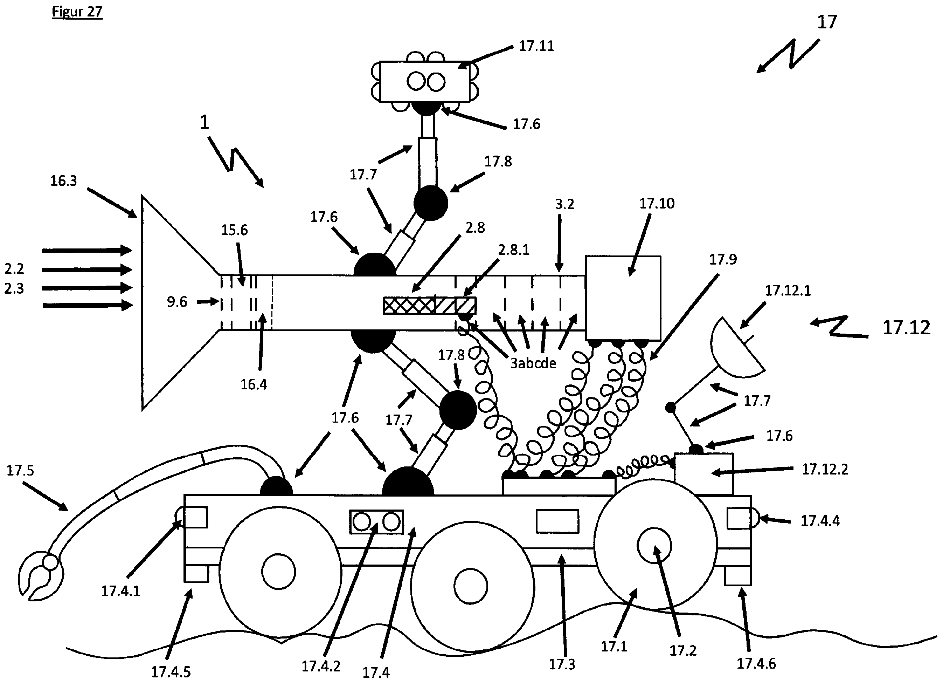

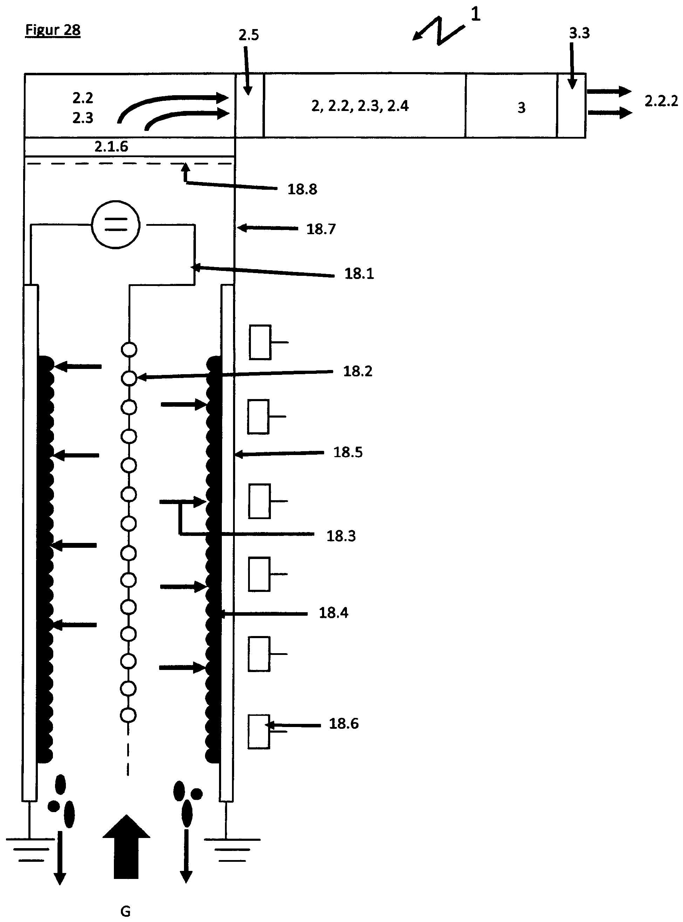

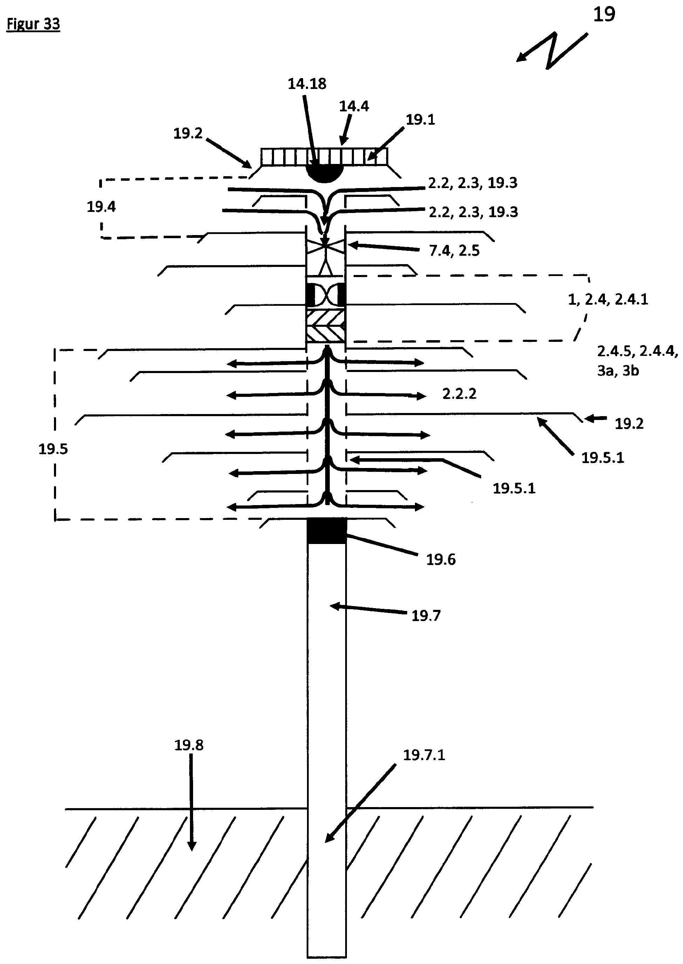

Im Folgenden werden die erfindungsgemäßen Filteranlagen 1, das erfindungsgemäße Filtrierverfahren und deren erfindungsgemäßen Verwendungen anhand der Figuren 1 bis 35 beispielhaft näher erläutert. Die Figuren 1 bis 35 sind schematische Darstellungen, die die wesentlichen Merkmale der erfindungsgemäßen Filteranlagen, des erfindungsgemäßen Filtrierverfahrens und deren erfindungsgemäßen Verwendungen veranschaulichen sollen und deshalb auch nicht maßstabsgetreu ausgeführt werden müssen. Es zeigen in nicht maßstabsgetreuer Darstellung:
- Figur 1: eine Draufsicht auf einen Längsschnitt durch eine erfindungsgemäße Filteranlage 1 mit einer Vorrichtung 2 zur Verringerung spezifischer Teilchenzahlen N/VT [Teilchenzahl/m³h] und einem Filter 3;
- Figur 1a: eine Draufsicht auf einen Querschnitt durch die Vorrichtung 2 längs der Schnittlinie A-B;
- Figur 2: eine Draufsicht auf einen Längsschnitt durch eine erfindungsgemäße Filteranlage 1 mit einem druckverlustfreien Venturi-Rohrstück 2.7.1 und Austrittsöffnungen für das Fluid 2.2.1 zu den manschettenförmigen Filter 3.6;
- Figur 3: eine Draufsicht auf einen Querschnitt der erfindungsgemäßen Filteranlage 1 gemäß der Figur 2;
- Figur 4: eine Draufsicht auf einen Längsschnitt durch eine Filteranlage 1 mit einem druckverlustfreien Venturi-Rohrstück 2.7.1 und einem Sammelrohr 2.7.7 zur Zuführung des Fluids 2.2.1 zu dem Filter 3;
- Figur 5: eine Draufsicht auf einen Längsschnitt durch eine Filteranlage 1 mit Clip-on-Anschlüssen und einem druckverlustfreien Röhrchenfilter 3.3;
- Figur 6: eine Draufsicht auf ein Blockschema einer Auspuffanlage 4 für Benzin- oder eine Dieselmotoren mit Verbaupositionen 1a-1j von Filteranlagen 1;
- Figur 7: eine Draufsicht auf ein Blockschema eines medizinischen Respirators, Beatmungsgeräts oder Anästhesiegeräts 5 mit Verbaupositionen 1k-1n von Filteranlagen 1;
- Figur 8: eine perspektivische Ansicht auf eine Atemschutzmaske 6 mit einer Filteranlage 1 als Inspirator und einem Expirator 6.4 mit Rückschlagventil 6.4.1;
- Figur 9: eine Draufsicht auf einen Längsschnitt durch einen Stalllüftungskamin 7 mit den Verbaupositionen 1o-1s für die Filteranlagen 1;
- Figur 10: eine Draufsicht auf einen Längsschnitt durch eine weitere Ausführungsform eines Stalllüftungskamins 8 mit den Verbaupositionen 1o-1s für Filteranlagen 1;
- Figur 11: eine Draufsicht auf einen Längsschnitt durch einen horizontal gelagerten Umluftreiniger 9 in einem Tierstall mit den Verbaupositionen 1t-1v für die Filteranlagen 1;
- Figur 12: eine Draufsicht auf einen Querschnitt durch einen Gestellrahmen (Rack) 10 zur Halterung von Filteranlagen 1;
- Figur 13: eine Draufsicht auf einen Längsschnitt längs der Schnittlinie C-D durch den Gestellrahmen 10 der Figur 12;
- Figur 14: eine Draufsicht auf einen Längsschnitt durch eine kastenförmige Aufnahmevorrichtung 11 für den Gestellrahmen 10 in einem Stalllüftungskamin 8;
- Figur 15: eine perspektivische Ansicht auf die kastenförmige Aufnahmevorrichtung 11 gemäß der Figur 14;
- Figur 16: eine Draufsicht auf einen Querschnitt durch eine Stahlbedachung 12 mit Verbaupositionen 1w-1z für die Filteranlagen 1;
- Figur 17: eine Draufsicht auf einen Längsschnitt durch eine fluiddichte, 2-seitige Anordnung 13 von jeweils einem Erreger-Empfänger 2.4.1;
- Figur 18: eine Draufsicht auf einen Längsschnitt durch eine Quipu-förmige Anordnung 13a von Anordnungen 13 gemäß Figur 17 mit Hängedrähten 13.4, einem Venturi-Trägerblech 13.5 und einem Filter 3;
- Figur 19: eine Draufsicht von oben auf das Venturi-Trägerblech 13.5 gemäß Figur 18;
- Figur 20: eine Draufsicht auf einen Längsschnitt durch eine autarke, vertikale Wassergewinnungsanlage 14 für aride Gebiete mit vertikalen Filteranlagen 1;
- Figur 21: eine Draufsicht auf einen Querschnitt längs der Schnittlinie E-F durch die autarke, vertikale Wassergewinnungsanlage 14 gemäß der Figur 20;
- Figur 22: eine Draufsicht auf einen vergrößerten Ausschnitt V des Querschnitts E-F gemäß der Figur 21;
- Figur 23: eine Draufsicht auf einen Längsschnitt durch eine autarke, horizontale, schräggelagerte Wassergewinnungsanlage 15 für aride Gebiete mit horizontalen Filteranlagen 1;
- Figur 24: eine Draufsicht auf einen Querschnitt längs der Schnittlinie G-H durch die autarke, horizontale, schräggelagerte Wassergewinnungsanlage 15 mit vertikalen Filteranlagen 1;
- Figur 25: die Seitenansicht einer flugtauglich ausgerüsteten Filteranlage 1;
- Figur 26: die Seitenansicht einer weiteren Ausführungsform einer flugtauglich ausgerüsteten Filteranlage 1;
- Figur 27: eine Seitenansicht eines Roboterfahrzeugs 17 mit einer Filteranlage 1;
- Figur 28: eine Draufsicht auf einen Längsschnitt durch einen Elektro-Staubabscheider oder Elektrostat 18 mit nachgeschalteter Filteranlage 1;
- Figur 29: eine Draufsicht auf einen Längsschnitt durch eine Filteranlage 1 mit einer Abzweigung 2.1.8 des Strömungsrohrs 2.1 und einem zum Strömungsrohr 2.1 parallelen Filterrohr. 2.1.9;
- Figur 29a: eine Draufsicht auf einen Querschnitt durch das Strömungsrohr 2.1 der Filteranlage 1 gemäß Figur 29;
- Figur 30: eine Draufsicht auf einen Längsschnitt durch eine Filteranlage 1 mit einer Abzweigung 2.1.10 des Strömungsrohrs 2.1;
- Figur 30a: eine Draufsicht auf einen Querschnitt durch das Strömungsrohr 2.1 der Filteranlage 1;
- Figur 31: eine Draufsicht auf einen Längsschnitt durch ein Strömungsrohr 2.1 einer Filteranlage 1 mit Erregern 2.4.1, die Ultraschall-Transversalwellen 2.4.2T ausstrahlen;
- Figur 31a: eine Draufsicht auf den Querschnitt des Strömungsrohrs 2.1 der Figur 31 längs der Schnittlinie KL;
- Figur 32: eine Draufsicht auf einen Längsschnitt durch ein Strömungsrohr 2.1 mit längs seiner Mittellinie angeordneten Erregern 2.4.1, die Ultraschall-Transversalwellen 2.4.2T ausstrahlen;
- Figur 33: eine Draufsicht auf einen Längsschnitt durch einen "Frischluftbaum" 19;
- Figur 34: eine Draufsicht auf einen Längsschnitt durch einen Pflanztopf 20 als Luftreiniger und
- Figur 35: eine Draufsicht auf einen Längsschnitt durch einen Pflanztopf 20 als Luftreiniger.

In den Figuren 1 bis 35 haben die Bezugszeichen die folgende Bedeutung:
- 1: Filteranlage
- 1a-1j: Verbaupositionen von Filteranlagen 1 in Auspuffanlagen 4 für Diesel- und Benzinmotoren
- 1k-1n: Verbaupositionen von Filteranlagen 1 in Beatmungsgeräten und Anästhesiegeräten 5
- 1o-1s: Verbaupositionen von Filteranlagen 1 in Stalllüftungskaminen 7 und 8
- 1t-1v: Verbaupositionen von Filteranlagen 1 im Umluftreiniger 9 im Inneren des Viehstalls
- 1w-1z: Verbaupositionen von Filteranlagen 1 in der Stallbedachung 12
- 2: Vorrichtung zur Verringerung spezifischer Teilchenzahlen N/Vt [Teilchenzahl/m³ h]
- 2.1: Wandloser Strömungsbereich oder Strömungsrohr
- 2.1.1: Geschlossene Wand des Strömungsrohrs 2.1
- 2.1.1.1: Außenseite der geschlossenen Wand 2.1.1
- 2.1.1.2: Innenseite der geschlossenen Wand
- 2.1.2: Fortsetzungsstück
- 2.1.2.1: Außengewinde um die Eintrittsöffnung 2.1.2.2 des Fortsetzungsstücks 2.1.2
- 2.1.2.2: Eintrittsöffnung des Fortsetzungsstücks 2.1.2
- 2.1.2.3: Fluiddichte Stoßkante "Kante der Wand 2.1.2.4 des Fortsetzungsstücks 2.1.2 // druckverlustfreies Venturi-Rohrstück 2.7.1"
- 2.1.2.4: Wand des Fortsetzungsstücks 2.1.2
- 2.1.3: Ringspalt
- 2.1.3.1: Lichte Weite von 2.1.3
- 2.1.3.2: Kunststoffschlauch
- 2.1.4: Lichte Weite von 2.1
- 2.1.5: Clip-on-Anschluss
- 2.1.6: Vorfilter, Ausgangsfilter
- 2.1.7: Außengewinde am Ende des Strömungsrohrs 2.1
- 2.1.8: Abzweigung des Strömungsrohrs 2.1
- 2.1.9: Zum Strömungsrohr 2.1 paralleles, durchströmbares Filterrohr
- 2.1.10: Gegen Stoßwellen 2.4.2S verstärktes, vom Strömungsrohr 2.1 abzweigendes Filterrohr
- 2.2: Strömendes Fluid
- 2.2.1: Strömendes Fluid mit einer sehr geringen spezifischen Teilchenzahl N/Vt an MPPS-Teilchen 2.3.2 und Schwebstoffen 2.3.1
- 2.2.2: Filtriertes Fluid
- 2.2.3: Durch Ultraschallwellen und ihren Obertönen 2.4.2Ü gereinigtes, abgeleitetes Fluid
- 2.2.4: Durch Stoßwellen 2.4.2S gereinigtes, abgeleitetes Fluid
- 2.3: Schwebstoffe einer Teilchengröße von 400 pm bis ≤5 µm
- 2.3.1: Schwebstoffe einer Teilchengröße von 400 pm bis ≤50 nm
- 2.3.2: MPPS-Teilchen einer Teilchengröße von ≥200 nm bis ≤400 nm
- 2.3.3: Schwebstoffe einer Teilchengröße ≥50 nm bis ≤200 nm
- 2.3.4: Teilchen einer Teilchengröße ≥400 nm bis 500 µm
- 2.3.5: Teilchenfreies oder -verarmtes Totvolumen der Fluide 2.2 und 2.2.1
- 2.4: Strömungskanal im Strömungsrohr oder Strömungsbereich 2.1
- 2.4.1: Erreger oder Erreger-Empfänger von stehenden und/oder modulierten Ultraschalllongitudinalwellen und/oder -transversalwellen und/oder ihren Oberschwingungen 2.4.2
- 2.4.1S: Erreger von Ultraschallstoßwellen, Ultraschallstoßwellengenerator
- 2.4.2: Stehende, modulierte und unmodulierte Ultraschall-Longitudinalwellen und UltraschallTransversalwellen und ihre stehenden und nicht stehenden Oberschwingungen; stehendes akustisches Ultraschallfeld
- 2.4.2S: Ultraschallstoßwellen
- 2.4.2T: Ultraschalltransversalwellen
- 2.4.2Ü: Überlagerung stehender Ultraschalllongitudinalwellen mit ihren nicht stehenden Oberschwingungen
- 2.4.3: Reflektoren
- 2.4.4: Wellenknoten
- 2.4.5: Wellenbauch
- 2.5: Fördervorrichtung für die Fluide 2.2, 2.2.1 und 2.2.2
- 2.5.1: Durchflussrichtung
- 2.5.2: Eintrittsrohr
- 2.6: Von den Fluiden 2.2 durchströmbarer und darin fixierter Körper
- 2.7: Fluidmäßige Verbindung des Strömungsrohrs 2.1 mit dem Filter 3
- 2.7.1: Druckverlustfreies Venturi-Rohrstück
- 2.7.2: Fluiddurchlässige Wand des Venturi-Rohrstücks 2.7.1
- 2.7.3: Ringförmiges, entgegen der Durchflussrichtung 2.5.1 geneigtes Anstellblech
- 2.7.4: Kreisförmige Austrittsöffnung für das Fluid 2.2.1
- 2.7.5: Rückführung des Fluids 2.2.2 in das Fortsetzungsstück 2.1.2
- 2.7.5.1: Rohrbogen der Rückführung 2.7.5
- 2.7.5.2: Vertikaler Teil der Rückführung 2.7.5
- 2.7.5.3: Bogen in die Horizontale
- 2.7.5.4: Horizontaler Teil der Rückführung 2.7.5 innerhalb des Fortsetzungsstücks 2.1.2
- 2.7.6: Umlaufender Sammelspalt zur Sammlung und Zuleitung des filtrierten Fluids 2.2.2 zu der fluidmäßigen Verbindung 3.9 oder zu dem Kamin 3.9
- 2.7.7: Umlaufender Sammelspalt zur Sammlung und Zuleitung des Fluids 2.2.1 zu einem Sammelrohr 2.7.8
- 2.7.8: Sammelrohr zur Zuführung des Fluids 2.2.1 zu dem Filter 3
- 2.8: Vorrichtung, mit deren Hilfe Teilchen 2.3.4 einer Teilchengröße >400 nm bis 500 µm in den Strömungskanal 2.4 dosierbar sind
- 2.8.1: Vorratsgefäß
- 3: Filter
- 3a-3e: Filter mit unterschiedlicher Trennwirkung
- 3.1: Eintrittsöffnung für das Fluid 2.2.1 in das Filtergehäuse 3.2
- 3.1.1: Zu dem Außengewinde 2.1.7 korrespondierendes Innengewinde 3.1.1
- 3.2: Filtergehäuse
- 3.2.1: Lochplatte
- 3.2.2: Lochplatte
- 3.2.3: Grobfilter
- 3.3: Austrittsöffnung, Austrittsöffnung für das filtrierte Fluid 2.2.2 zum Eintritt in die Venturidüse 3.4
- 3.3.1: Innengewinde um die Austrittsöffnung 3.3
- 3.4: Auslass für das Fluid 2.2.2, Venturidüse
- 3.4.1: Außengewinde an der Venturidüse 3.4 zum Einschrauben in das Innengewinde 3.3.1
- 3.5: Austrittsdüse der Venturidüse 3.4
- 3.6: Manschettenförmiger Filter 3
- 3.6.1: Zapfen-Nut-Verbindung
- 3.7: Manschettenförmige geschlossene Wand um den Filter 3.6
- 3.7.1: zylindrisches Gehäuse
- 3.7.1.1: Vertikaler Teil der Wand 3.7
- 3.7.1.2: Horizontaler Teil der Wand 3.7
- 3.7.2: Innengewinde um die Öffnung 3.7.3 zum Eintritt des Luftstroms 2.2.1 in das druckverlustfreie Venturi-Rohrstück 2.7.1
- 3.7.3: Vorspringende ringförmige Verstärkung um die Eintrittsöffnung 3.7.4 als Träger des Innengewinde 3.7.2 zur Aufnahme des Außengewindes 2.1.7
- 3.7.4: Eintrittsöffnung
- 3.7.4.1: Fluiddichte Stoßkante "druckverlustfreies Venturi-Rohrstück 2.7.1 // Endkante der Wand 2.1.1 des Strömungsrohrs 2.1"
- 3.7.5: Austrittsöffnung
- 3.7.5.1: Vorspringende ringförmige Verstärkung um die Austrittsöffnung 3.7. 5 als Träger des Innengewinde 3.7.2 zur Aufnahme des Außengewindes 2.1.7
- 3.7.5.2: Innengewinde
- 3.8: Abnehmbares Apparateteil zur Entnahme des manschettenförmigen Filters Ziffer 3.6
- 3.8.1: Umlaufende Flanschverbindung
- 3.8.1.1: Elastomere Dichtung
- 3.8.1.2: Die Flanschverbindung 3.8.1 umgreifende Klemme
- 3.9: Fluidmäßige Verbindung (Kamin) zur Rückführung 2.7.5 für die filtrierte Luft 2.2.2 in das Fortsetzungsstück 2.1.2
- 3.9.1: Umlaufende Flanschverbindung in der Rückführung 2.7.5
- 3.9.1.1: Elastomere Dichtung
- 3.9.1.2: Umlaufender, die Flanschverbindungen 3.9.1 umgreifender Spannring
- 3.10: Austrittsrohr
- 3.10.1: Druckverlustfreier Röhrchenfilter
- 4: Auspuffanlage für Benzin- und Dieselmotoren
- 4.1: Anschluss der Auspuffanlage 4 an einen Benzinmotor
- 4.2: Rußfilter und Anschluss der Auspuffanlage 4 an eine Dieselmotoren
- 4.3: Hosenrohr
- 4.4: Katalysator
- 4.5: Vorschalldämpfer
- 4.6: Endtopf
- 4.7: Rohrleitungen
- 4.8: Abgasauslass
- 5: Beatmungsgerät oder Anästhesiegerät
- 5.1: Luftdosierung
- 5.2: Inspirator
- 5.2.1: Beatmungsschlauch
- 5.2.1.1: Gänsegurgel
- 5.2.1.2a: Bypass 1
- 5.2.1.2b: Bypass 2
- 5.2.1.2c: Bypass 3
- 5.3: Expirator
- 5.4a: Beatmungsfilter
- 5.4b: Beatmungsfilter
- 5.4a.1: Dosieranschluss
- 5.4a.2: Dosieranschluss
- 5.5: Atemmaske
- 5.5.1: Anschlussstück für 5.2 und 5.3
- 6: Atemschutzmaske
- 6.1: Mund- und Nasenabdeckung
- 6.2: Flexible Halterung
- 6.3: Flexibler Rand
- 6.4: Expirator mit Rückschlagventil 6.4.1
- 6.4.1: Rückschlagventil
- 6.5: Clip-on-Halterung aus Hartgummi
- 6.5.1: Verstärkungsring aus Hartgummi
- 6.6: PowerPack
- 7: Stalllüftungskamin
- 7.1: Diffusor
- 7.1.1: Ringförmiger Eintrittsspalt
- 7.2: Lüftungsrohr
- 7.2a: Oberer Teil des Lüftungsrohrs 7.2
- 7.2b: Unterer Teil des Lüftungsrohrs 7.2
- 7.2.1: Nicht isolierte Rohrwand
- 7.2.2: Einsteckverbindung 7.2a-7.2b
- 7.3: Rohrschelle
- 7.4: Ventilator
- 7.4.1: Befestigungsstrebe
- 7.5: Belüftungsklappen
- 7.5.1: Klappenflügel
- 7.5.2: Luftöffnung
- 7.6: Lufteintrittsöffnung
- 7.7: Seitliche Anströmdüse
- 7.8: Wasserauffangwanne
- 7.8.1: lösbare Halterungskette
- 7.9: Dach
- 8: Isolierter Stalllüftungskamin
- 8.1: Isoliertes Lüftungsrohr
- 8.1.1: Isolierung
- 8.1.2: Rohrwand
- 8.2: Luftzuleitung aus dem Dachraum
- 8.2.1: Dachraumluft
- 9: Umluftreiniger im Tierstall
- 9.1: Standfuß
- 9.1a: Langer Standfuß
- 9.1b: Kurzer Standfuß
- 9.2: Wasserablaufrinne
- 9.3: Wasserablaufrohr
- 9.4: Abtropfnetz
- 9.4.1: Halbkreisförmige Befestigungsklemmringe für die Abtropfnetze 9.4
- 9.5: Rohrwand
- 9.6: Lochplatte
- 9.7: Wannenförmige Auflage
- 10: Gestellrahmen (Rack)
- 10.1: Außenwand
- 10.2: Steg, Stegplatte
- 10.3: Kreisrunde Öffnung
- 10.4: Vorspringende Halterung
- 11: Kastenförmige Aufnahmevorrichtung für den Gestellrahmen 10
- 11.1: Vertikale Wand der Aufnahmevorrichtung 11
- 11.2: Verschließbare, vertikale Servicetür
- 11.2.1: Türblatt
- 11.2.2: Türangel
- 11.3: Umlaufender Boden
- 11.4: Umlaufende Decke
- 11.5: Lochplatte
- 12: Stalldachhaube
- 12.1: Transparente Lichthaube
- 12.1.1: Abluftspalt
- 12.2: Aluminiumstreben
- 12.3: Aluminium-Z-Pfette
- 12.4: Aluminium-Windabweiser
- 12.5: Aluminium-Sturmwinkel
- 12.6: Bedachungsmaterial
- 13: Fluiddichte 2-seitige Anordnung von jeweils einem Erreger-Empfänger 2.4.1 von stehenden und/oder modulierten Longitudinalwellen und/oder oder ihren Oberschwingungen 2.4.2
- 13.1: Platine
- 13.2: Fluiddichte Kapsel aus Kunststoff mit Strömungsprofil
- 13.3: Silikonklebstoff
- 13.4: Hängedraht
- 13.4.1: Ösenverbindung
- 13.5: Venturi-Trägerblech
- 13.5.1: Venturi-Fluiddurchlass
- 13.5.2: Venturi-Trichterwand
- 13.6: PowerPack
- 14: Autarke, vertikale Wassergewinnungsanlage für aride Gebiete
- 14.1: Vertikales Rohr aus zwei vertikalen Rohrhälften
- 14.1.1: Vertikale Rohrhälfte
- 14.2: Stoßkante
- 14.3: Umlaufende Kaminwand aus zwei Rohrhälften
- 14.3.1: Verbindungsstreben zwischen der umlaufenden Kaminwand 14.3 und dem vertikalen Holzrohr 14.1
- 14.3.2: Vertikale Stoßkante der zwei vertikalen Rohrhälften 14.3.3
- 14.3.3: Vertikale Hälfte der Kaminwand 14.3
- 14.4: Fotovoltaik
- 14.4.1: Vertikale Stoßkante der Fotovoltaik 14.4
- 14.5: Kamin
- 14.5.1: Umlaufender Eingangstrichter
- 14.6: Abnehmbares Schutzdach
- 14.7: Umlaufender Vorfilter
- 14.8: Horizontal umlaufender Vorsprung
- 14.9: Tropfenschutz
- 14.10: Umlaufender Haltering für das Wasserauffanggefäß 14.14
- 14.11: Horizontaler Ventilator
- 14.12: Abtropffäden
- 14.13: Wasser
- 14.14: Wasserauffanggefäß
- 14.15: Auflagering des Wasserauffanggefäßes 14.14 auf dem umlaufenden Haltering 14.10
- 14.16: Ablassrohr
- 14.17: Ablasshahn
- 14.17.1: Wasserleitung
- 14.18: PowerPack
- 14.19: Feder-Nut-Press-on-Verschlüsse
- 14.20: Auslass für die trockene Luft 2.2.2
- 14.21: Lochplatte
- 14.22: Sensor und Aktuator
- 14.23: Schwimmer
- 14.24: Isolierung
- 15: Autarke, horizontale, schräg gelagerte Wassergewinnungsanlage für aride Gebiete
- 15.1: Behältnis mit kastenförmigem Querschnitt für die Filteranlagen 1
- 15.1.1: Ebene Wand der Oberseite, der Unterseite und einer vertikalen Seite von 15.1
- 15.2: Air Multiplier (Dyson)
- 15.3: Übergang vom kastenförmigen Querschnitt von 15.1 zu dem runden Querschnitt des Dyson 15.2
- 15.3.1: Lochplatte
- 15.3.2: Getrocknete Abluft
- 15.4: Trichterförmige erweiterte Ansaugöffnung, Sammeltrichter
- 15.5: Steinschlagschutzgitter
- 15.6: Vorfilter
- 15.7: viereckige Lochplatte zur Halterung der Filteranlagen 1
- 15.7.1: Vertiefungen zur Halterung der Kanten der viereckigen Lochplatten 15.7 an den Wänden 15.1.1 der Oberseite, der Unterseite und einer vertikalen Seite
- 15.8: Standfuß
- 15.9: Abtropffäden für das kondensierte Wasser 15.12
- 15.9.1: Klebebefestigung für die Abtropffäden 15.9
- 15.10: Abflussrohr für das kondensierte Wasser 15.12
- 15.11: Isolierter Kanister mit Doppelwand
- 15.11.1: Schwimmerführung
- 15.11.2: Evakuierte Doppelwand
- 15.11.3: Druckausgleich mit Rückschlagventil
- 15.12: Gesammeltes Kondenswasser
- 15.13: Horizontal verschiebbare, vertikale Seitenwand
- 15.13.1: Handgriff
- 15.13.2: Unteres Gleitprofil
- 15.13.3: Untere Gleitkante
- 15.13.4: Oberes Gleitprofil
- 15.13.5: Obere Gleitkante
- 15.14: Auflageplatte
- 16: Fluggerät
- 16.1: Fluggerät ohne eigenen Antrieb
- 16.2: Fluggerät mit eigenem Antrieb
- 16.2.1: Propeller
- 16.2.2: Im Winkel verstellbarer Antrieb
- 16.2.3: starres Gestänge, Verbindungskörper
- 16.2.4: Zentrale Steuerung und Webcam
- 16.3: Sammeltrichter
- 16.4: Ansaugung und Gebläse, Air Multiplier, Dyson
- 16.5: Aufhängung für die Filteranlage 1
- 16.5.1: Verbindungsstrebe
- 16.6: Halterung am Fluggerät 16.1
- 16.7: Aktuator, Drehmotor
- 16.8: Drehstange
- 16.9: Seitenruder
- 16.10: Stabilisator
- 16.11: Höhenruder
- 16.12: Stellmotor
- 16.12.1: Drehachse
- 17: Ferngesteuertes Roboterfahrzeug mit Filteranlage 1
- 17.1: Individuell steuerbares Ballonrad
- 17.2: Individuell steuerbarer Elektromotor
- 17.3: Plattform mit Einzelradaufhängungen
- 17.4: Elektromotoren, Energieversorgung, Computer und Aktuatoren
- 17.4.1: Vorwärtsscheinwerfer, Webcam und Laser
- 17.4.2: Seitenscheinwerfer, Laser und ausfahrtbare Webcam
- 17.4.3: Seitenscheinwerfer
- 17.4.4: Rückwärtsscheinwerfer, Laser und ausfahrbare Webcam
- 17.4.5: Vorderer Look-down-Scheinwerfer und vordere ausfahrbare Webcam
- 17.4.6: Hinterer Look-down-Scheinwerfer und hinterer ausfahrbare Webcam
- 17.5: Biegsamer, verlängerbarer Greifer
- 17.6: Aktuatoren
- 17.7: Ausfahrbare Teleskopstangen
- 17.8: Gelenke
- 17.9: Fexible Datenleitungen
- 17.9.1: Anschlussleiste
- 17.10: Analysatoreinheit
- 17.11: In X-Y-Z-Richtung bewegliche, sechsseitige Scheinwerfer-, Nachtsicht-Webcam- und Laseranordnung
- 17.12: Sender und Empfänger
- 17.12.1: In X-Y-Z-Richtung bewegliche Parabolantenne
- 17.12.2: Decoder und Speicher
- 18: Elektrostat, Plattenelektrofilter mit Drahtelektrode 18.1
- 18.1: Drahtelektrode
- 18.2: Sprühelektroden
- 18.3: Abscheidung der elektrisch geladenen Staubteilchen
- 18.4: Staubschicht
- 18.4.1: Abgelöste Staubschicht
- 18.5: Abscheideelektrode
- 18.6: Klopfwerk
- 18.7: Elektrisch isolierende Wand
- 18.8: Elektrisch isolierende Lochplatte
- 19: Frischluftbaum
- 19.1: Scheibenförmige, laubgrün gefärbte Abdeckung
- 19.2: Geneigte, umlaufende, laubgrün gefärbte Abtropfkante
- 19.3: Vertikaler, durch Fliegengitter geschützter Schlitz als Ansaugöffnung
- 19.4: Ansaugbereich für Luft 2.2 mit Schwebstoffen 2.3
- 19.5: Auslassbereich für die gereinigte Luft 2.2.2
- 19.5.1: Leicht zum Boden 19.8 geneigte umlaufende Scheibe
- 19.6: Passgenaue Einsteckbefestigung
- 19.7: Hohles Trägerrohr als "Stamm"
- 19.7.1: Bereich der Verankerung im Boden 19.8
- 19.8: Boden
- 20: Pflanztopf als Luftreiniger
- 20.1: Pflanze
- 20.1.1: Wurzelknollen
- 20.1.2: Wurzelwerk
- 20.2: Topf
- 20.2.1: Wurzeldurchlässiger Boden
- 20.3: Pflanzenerde
- 20.4: Auflagezapfen
- 20.4.1: An der Innenseite des Übertopfs 20.5 befestigter Auflagezapfen mit halbkreisförmigem Querschnitt
- 20.4.2: An der Außenseite des Topfes 20.2 befestigter, korrespondierender Auflagezapfen mit kreisförmigem Querschnitt
- 20.5: Übertopf
- 20.5.1: Halterung für den Ultraschallsender 2.4.1
- 20.5.2: Öffnung
- 20.6: Umlaufender Luftkanal
- 20.7: Biokohlefilter, VOC-Filter

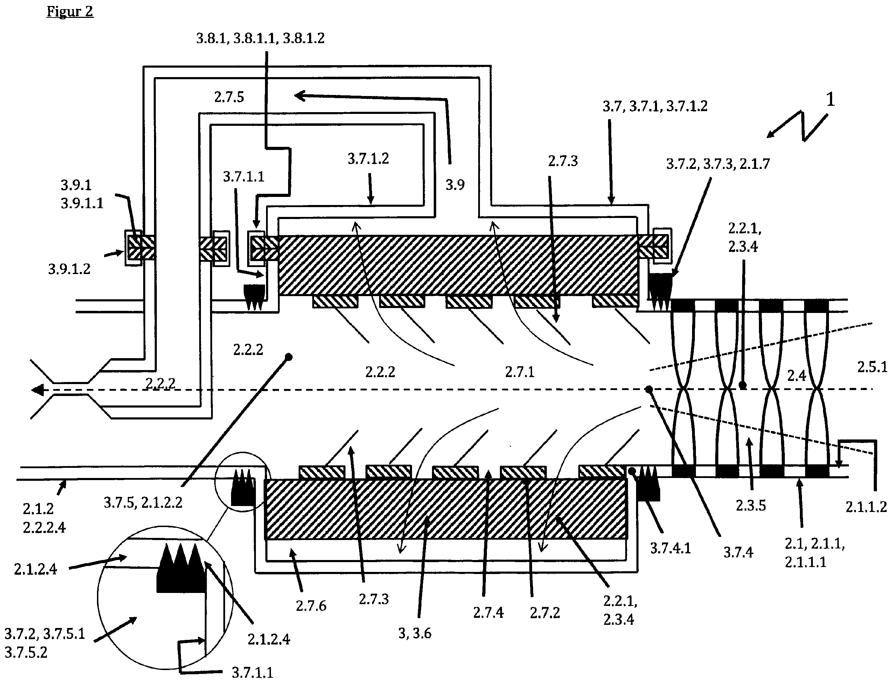

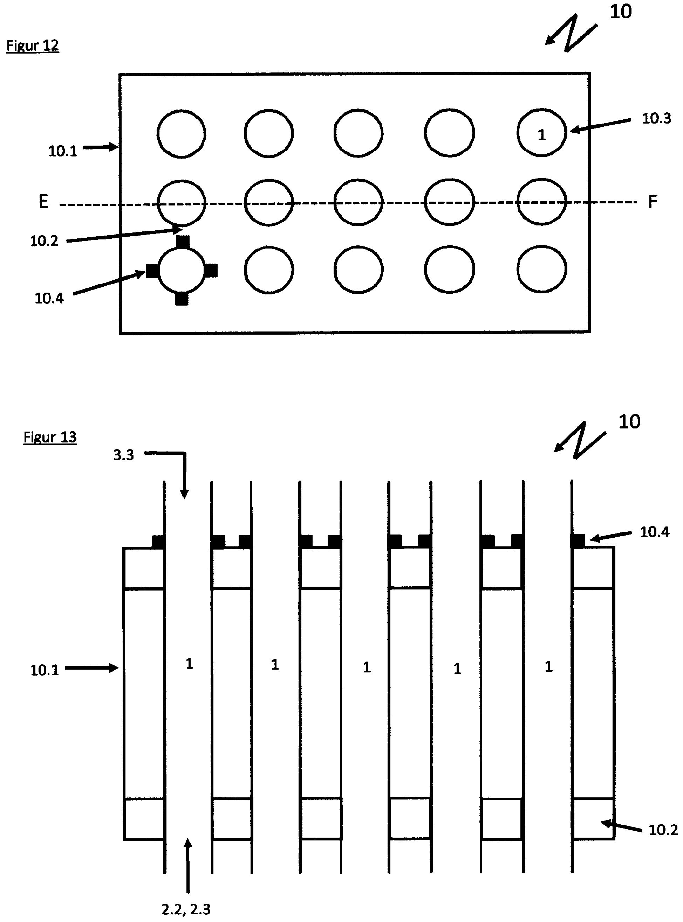

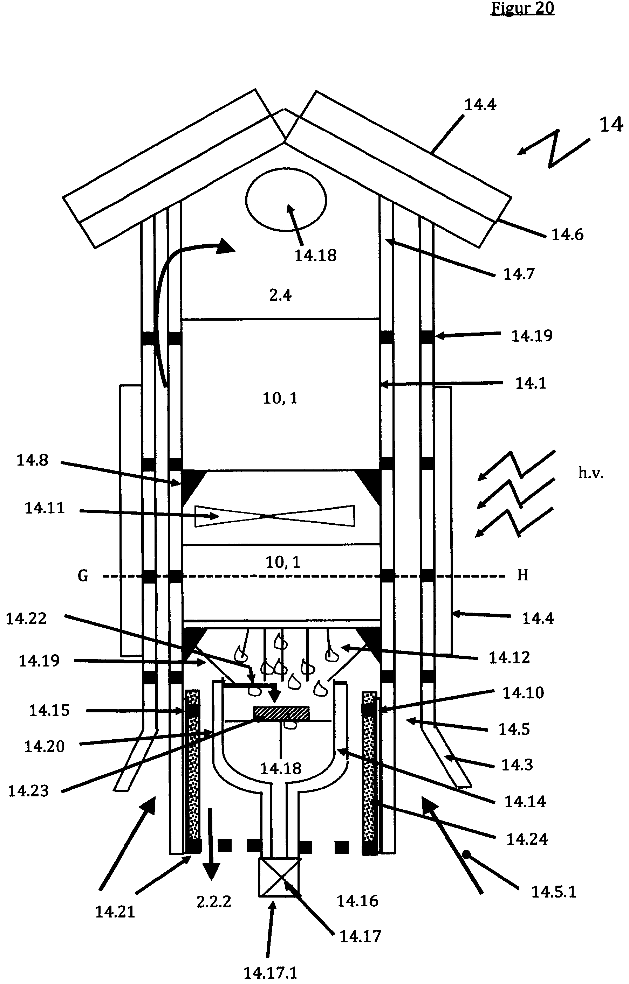

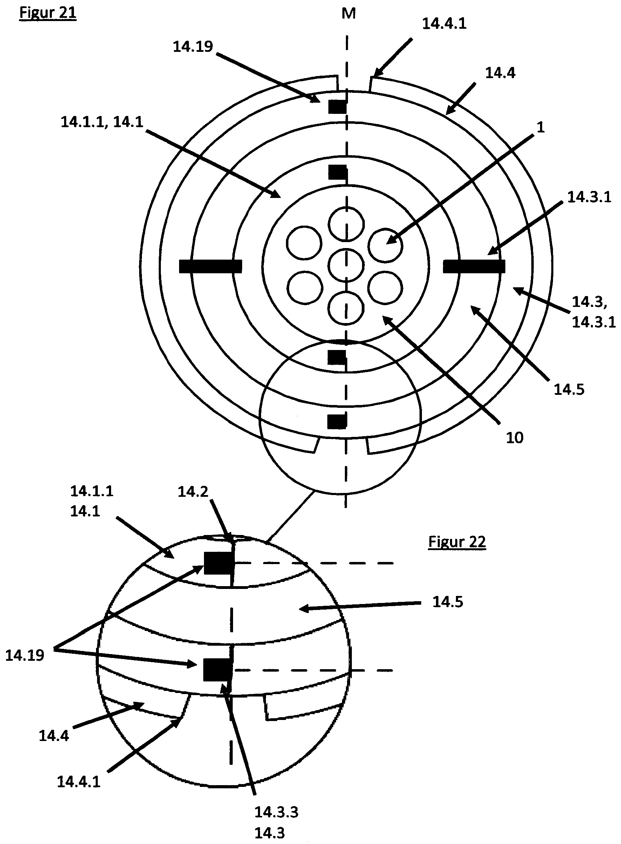

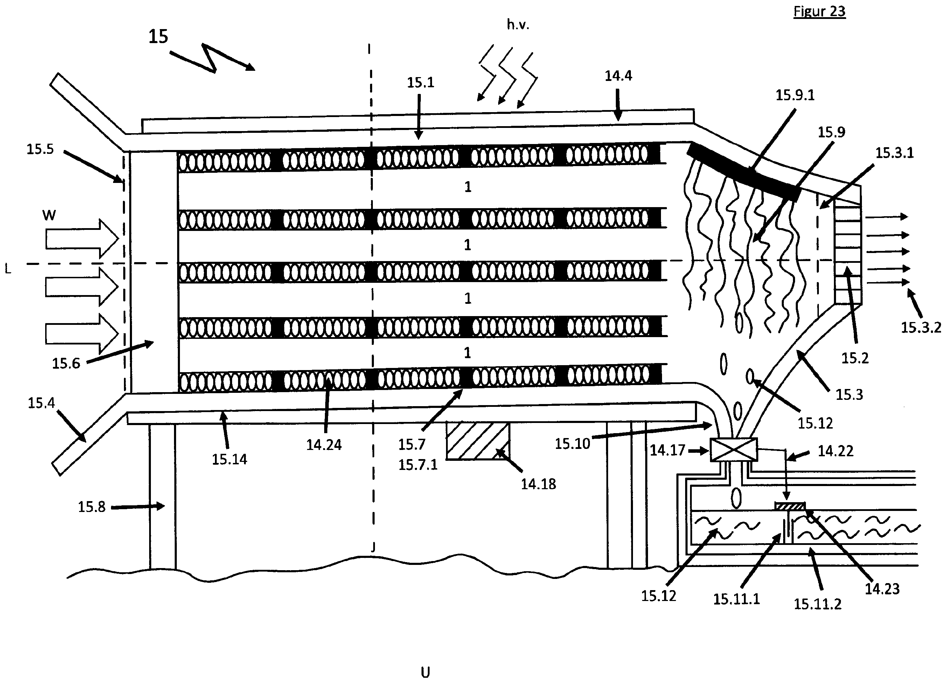

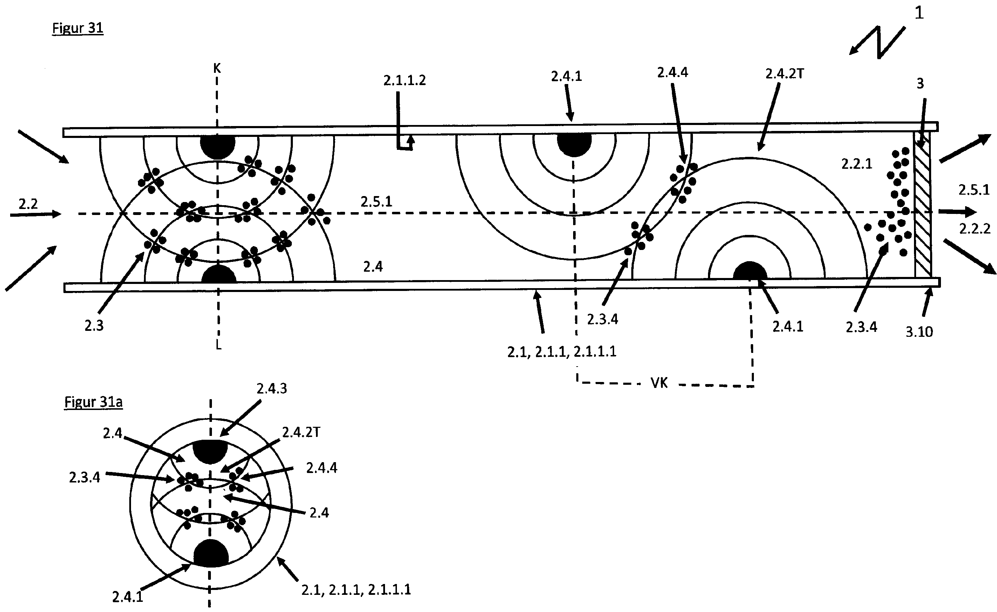

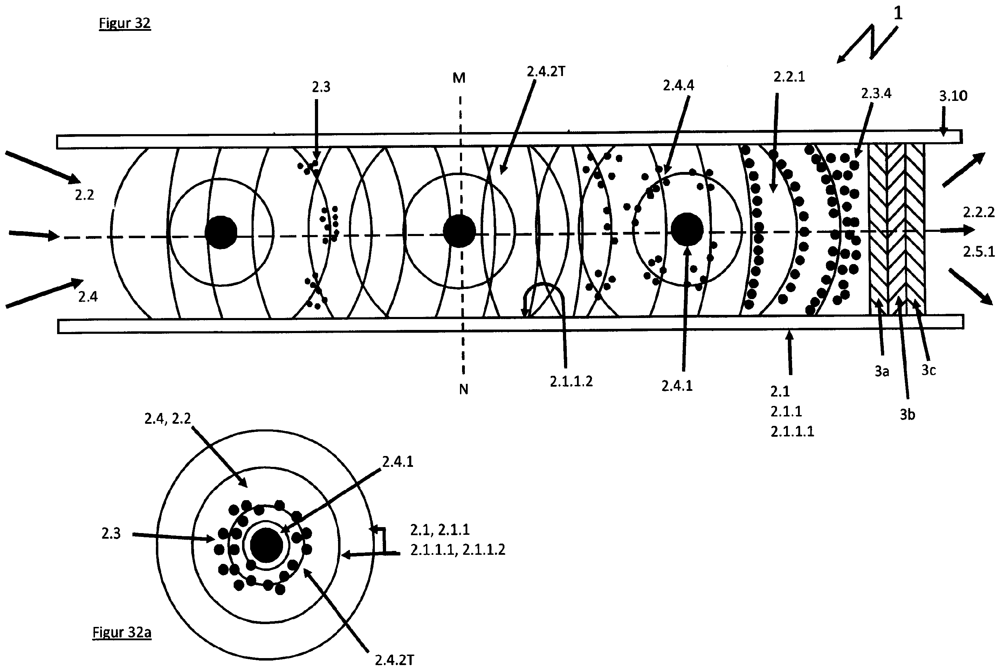

- A-B: Schnitt durch die Filteranlage 1 gemäß der Figur 1 längs der Schnittlinie AB
- C-D: Schnitt durch die Filteranlage 1 gemäß der Figur 2 längs der Schnittlinie CD
- E-F: Schnitt durch den Gestellrahmen 10 gemäß der Figur 12 längs der Schnittlinie EF
- G-H: Schnitt durch Wassergewinnungsanlage 14 gemäß der Figur 20 längs der Schnittlinie GH
- G: Strömendes Abgas eines Biomasseheizwerks
- I-J: Schnitt durch die Wassergewinnungsanlage 15 gemäß der Figur 23 längs der Schnittlinie I-J
- K-L: Schnitt durch die Filteranlage 1 gemäß der Figur 31 längs der Schnittlinie KL
- M-N: Schnitt durch die Filteranlage 1 gemäß der Figur 32 längs der Schnittlinie KL
- U: Untergrund oder Unterbau
- V: Vergrößerter Ausschnitt des Verbindungsbereichs der Filteranlage 14 gemäß den Figuren 20 und 21
- VK: Versetzte Konfiguration der Lautsprecher 2.4.1
- W: Hauptrichtung des Windes
- ← →: Strömungsrichtung der Fluide

### Ausführliche Beschreibung der Figuren

### Vorbemerkung

In den folgenden Figuren 1 bis 28 werden der Klarheit halber nur die erfindungswesentlichen Bauteile dargestellt. Die für die Durchführung des erfindungsgemäßen Verfahrens notwendige Peripherie enthielt übliche und bekannte elektronische, elektrische, mechanische, pneumatische und hydraulische Vorrichtungen wie zum Beispiel Computer, Computerchips, Stromquellen, Stromleitungen, Elektromotoren, Lampen, Kameras, Webcams, Laser, Sender und Empfänger, Powerpacks, Batterien, Akkumulatoren, Mess- und Regelgeräte, Aktuatoren, Sensoren, Pulverdosiergeräte, Manometer Spektrometer, Gaschromatographen, Massenspektrometer, Mikroskope, Partikelzähler, Förderpumpen, Vakuumpumpen, mechanische Greifer und Sender zur Fernüberwachung.

### Figur 1

### Erprobung des Konzepts

Hier und im Folgenden bedeuten in der Benennung der spezifischen Teilchenzahlen N/Vt N die Teilchenzahl, V das Volumen in m³ und t die Zeit in Stunden [h].

Die Prozentangaben betreffend die spezifischen Teilchenzahlen N/Vt beziehen sich auf die jeweiligen spezifischen Starterzahlen N/Vt, entsprechend 100 %.

Die Filteranlage 1 umfasste eine Vorrichtung 2 zur mehr als 99-prozentigen Verringerung der spezifischen Teilchenzahl NNt von Feinstaubteilchen 2.3.1 mit Teilchengrößen von 1 nm bis 50 nm und zur mehr als 99-prozentigen Verringerung der spezifischen Teilchenzahl N/Vt von Feinstaubteilchen 2.3.2 mit MPPS-(most penetrating particle size)-Teilchengrößen von ≥ 200 nm bis ≤ 400 nm in der Luft 2.2, sodass eine Luft 2.2.1 resultierte, die die Feinstaubteilchen 2.3.1 und 2.3.2 mit spezifischen Teilchenzahlen N/Vt von jeweils <0,1 % und Staubteilchen 2.3.4 und 2.3.5 einer Teilchengröße von 800 nm bis 300 µm mit einer spezifischen Teilchenzahl NNt >99,8 % enthielt.

Die Vorrichtung 2 umfasste ein Strömungsrohr 2.1 aus schlagfestem ABS (Acrylnitril-Butadien-Styrol-Copolymerisat) einer Länge von 20 cm und einem Strömungskanal 2.4 einer lichten Weite 2.1.4 von 4 cm mit einer geschlossenen Wand 2.1.1 einer Stärke von 5 mm. Das ABS war Siliziumdioxid-Nanopartikel kratzfest ausgerüstet. In die geschlossene Wand 2.1.1 waren acht Paare einander gegenüberliegender Piezo-Ultraschallsender 2.4.1 vom TypMCUSD14A40S0RS von multicomp (Zentralfrequenz: 40 kHz; Leistungspegel 90 dB) mit Polydimethylsiloxan-Kleber fluiddicht eingeklebt, sodass die gedachte Verbindungslinie zwischen jeweils einem Paar der gedachten Durchschnittslinie der lichten Weite 2.1.4 entsprach. Die Piezo-Ultraschallsender 2.4.1 wiesen einen kreisförmigen Umriss mit einem Durchmesser von 1,4 mm auf. Sie waren in einer Linie in einem Abstand von jeweils 15 mm angeordnet. Das in Förderrichtung 2.5 des strömenden Fluids 2.2 gesehen erste Paar der Piezo-Ultraschallsender 2.4.1 wies einen Abstand von 5 mm zum Anfang des Strömungsrohrs 2.1 auf. Das in Förderrichtung 2.5. strömenden Fluids 2.2 gesehen letzte paar der Piezo-Ultraschallsender 2.4.1 wies einen Abstand von 5 mm zum Ende des Strömungsrohrs 2.1 auf. In gleicher Weise waren acht weiterer Paare einander gegenüberliegender Piezo-Ultraschallsender 2.4.1 in die geschlossene Wand 2.1.1 eingelassen, sodass sich ihre gedachten Verbindungslinien mit den gedachten korrespondierenden Verbindungslinien der anderen acht Paare 2.4.1 unter einem Winkel von 90° kreuzten. Die Knoten 2.4.4 der stehenden Ultraschallwellen 2.4.2, die von den beiden kreuzförmigen einander zugeordneten acht Paaren von Piezo-Ultraschallsendern 2.4.1 ausgesendet wurden, lagen dadurch auf der Mittellinie des Strömungsrohrs 2.1. Alle Piezo-Ultraschallsender 2.4.1 waren so in die geschlossene Wand 2.1.1 eingelassen, dass sie mit deren Innenseite 2.1.1.2 so planar wie möglich abschlossen, sodass sich keine unerwünschten Verwirbelungen im Bereich des im Wesentlichen teilchenfreien Totvolumens 2.4.6 bildeten.

Die stehenden Ultraschallwellen wurde mithilfe einer elektronischen Vorrichtung durch Rückkopplungsschleifen erzeugt, überwacht und eingestellt.

Beginnend bei 25 mm ab dem Anfang des Strömungsrohrs 2.1 waren in Linie vier Probeentnahmevorrichtungen in einem jeweiligen Abstand von 50 mm für Extinktions-Partikelzähler angeordnet (nicht wiedergegeben). Verwendet wurden Geräte von RR Reinraum ELEKTRONIK GmbH, Wiernsheim. Des Weiteren war in Abstand von 75 mm vom Ende des Strömungsrohrs ein sogenanntes Luer-Lock-System für den Anschluss eines gravimetrischen Hochpräzisions-Mikrodosierers 2.8 von MCPI, Frankreich, angeordnet. Mithilfe dieses Dosierers konnten kontrolliert Teilchen 2.3.5 einer Teilchengröße von >400 nm bis 500 µm in das die Schwebstoffe 2.3 enthaltende strömende Fluid 2.2 eingespeist werden. Als Nanopartikel und/oder Mikropartikel wurden Partikel mit einer Oberfläche verwendet, die besonders leicht Gase und Flüssigkeiten sowie andere Nanopartikel und Mikropartikel absorbierten und/oder adsorbierten und/oder anlagerten und so die Agglomeration der Partikel förderten, was zur Folge hatte, dass ein leicht filtrierbares strömendes Fluid 2.2. mit einer sehr geringen spezifischen Teilchenzahl N/Vt an MPPS-Teilchen 2.3.2 und Feinstaubteilchen 2.3.1 resultierte. In dieser Weise konnte die Teilchengrößenverteilung des Kollektivs der Feinstaubteilchen 2.3.1, 2.3.2, 2.3.3 und 2.3.4 insgesamt zu höheren Teilchengrößen verschoben werden.

Es wurden Nano- und Mikropartikel aus Biokohle, Aktivkohle, einwandige und mehrwandige Nanotubes, Nanocones, Fullerene, Zeolithe, Schichtsilikate, insbesondere Bentonite und Aerogele getestet. Von diesen Materialien erwiesen sich Nano- und Mikropartikeln aus Biokohle hinsichtlich der Aufnahme von Noxen und der Adhäsion und Agglomeration der Feinstaubteilchen am effektivsten.

Die Teilchengrößen der Feinstaubteilchen 2.3 in der zu reinigenden strömenden Luft 2.2 wurden mithilfe elektronenmikroskopischer Aufnahmen und dynamischer Lichtstreuung QELS (quasi elastic light scattering) bestimmt. Die Teilchengrößen des Kollektivs lagen bei 3 nm bis 800 nm. Die Teilchengrößen wiesen eine asymmetrische monomodale Verteilung mit einem Maximum mit einer spezifischen Teilchenzahl N/Vt von 2 × 10⁷/m³h bei einer Teilchengröße von 350 nm auf. Diese Teilchengröße lag aber genau in dem MPPS-Bereich von ≥200 nm bis ≤ 400 nm, auf. Das Kollektiv wies außerdem eine spezifisch Teilchenzahl N/Vt von 2 × 10⁶/m³h bei einer Teilchengröße von 50 nm auf und eine spezifische Teilchenzahl N/Vt von 1,5 × 10⁵/m³h bei einer Teilchengröße von 3 nm auf. Hierdurch stellte sich ein besonders schwieriges Filtrationsproblem.

Die Feinstaubteilchen 2.3 entstammten dem Abrieb von Automobilreifen auf Asphalt. Ihre Zusammensetzung war dadurch bedingt sehr homogen und umfasste Elastomerteilchen, Rußteilchen, Metallteilchen, Füllstoffteilchen, Farbstoffteilchen, Pigmentteilchen, Rauchteilchen und Asphaltteilchen. Außerdem enthielt die Luft 2.2 durch Gaschromatografie/Massenspektrometrie-Kopplung bestimmte molekulardisperse Noxen, wie sie für Autoabgase typisch sind, wie NOx, Schwefeldioxid, Sauerstoffradikale, Ozon und Ammoniak.

Die solchermaßen kontaminierte Luft 2.2 von einer verkehrsreichen Straße wurde während der Rushhour durch ein schallgedämmtes, durch einen Grobfilter geschütztes Hochleistungsgebläse angesaugt und über ein Vorfilter 2.1.6 in das Strömungsrohr 2.1 hineingeblasen. Der Grobfilter verhinderte das Eindringen von größeren Teilen wie Blätter, Papierschnitzel, Zigarettenfilter, Plastikteile und/oder Sandkörner. Der Vorfilter 2.6.1 fing größere Teilchen im Millimeterbereich ab. In dem Strömungsrohr 2.1 wies die Luft 2.2 im Strömungskanal 2.4 in der Strömungsrichtung 2.5.1 eine Strömungsgeschwindigkeit von etwa 70 m/s auf.

Die durch die von den Piezo-Ultraschallsendern 2.4.1 erzeugten stehenden Ultraschallwellen 2.4.2 sammelten sich die Mehrzahl Feinstaubteilchen 2.3 in die Wellenknoten 2.4.4 an. Durch den Schalldruck agglomerierten und aggregierten sie, wodurch sich ihre Teilchengröße erhöhte. Ein großer Teil der Feinstaubteilchen 2.3.1 einer Teilchengröße von 1 nm bis ≤ 50 nm wanderten in den Wellenbäuchen 2.4.5 in Richtung der Innenseite 2.1.1.2 der geschlossenen Wand 2.1 und wuchsen an der Oberfläche der Piezo-Ultraschallsendern 2.4.1 an. Bei Erreichen von Teilchengrößen ≥ 50 nm (Feinstaubteilchen 2.3.2, 2.3.3, 2.3.4) wurden sie von dem Luftstrom 2.2 wieder abgelöst und sammelten sich wieder in den Wellenknoten 2.4.4 an. Durch diese dynamischen Vorgänge verengte sich der konusförmige Bereich des Luftstroms 2.2, in dem die Feinstaubteilchen 2.3.2, 2.3.3 und 2.3.4 in der Durchflussrichtung 2.5.1 transportiert wurden, sodass sich an der Innenseite 2.1.1.2 ein von Feinstaubteilchen 2.3.2, 2.3.3 und 2.3.4 verarmtes oder freies Totvolumen 2.3.5 bildete.

Mithilfe eines gravimetrischen Hochpräzisions-Mikrodosierers 2.8 von MCPI, Frankreich, wurden kontinuierlich Biokohleteilchen 2.3.5 einer Teilchengröße von 800 nm bis 100 µm mit einer spezifischen Teilchenzahl von 2,5 × 10⁴/m³h in die Mitte des Strömungskanals 2.4 zudosiert. Sie wirkten gewissermaßen als Ankerteilchen und verstärkten die Absorption und Adsorption von Noxen und die Aggregation und die Agglomeration der Staubteilchen 2.3.1, 2.3.2, 2.3.3 und 2.3.4. Dadurch wurde ein Teilchenkollektiv mit Teilchengrößen 2.3.4 von 800 nm bis 300 µm. Das Teilchenkollektiv 2.3.4 wies eine bimodale Verteilung mit zwei Maxima bei 1,2 µm und 150 µm auf konnte bereits mit einem Medium-Filter 3 mit einer Effizienz von 99,99 % aus dem Luftstrom 2.2.1 entfernt werden.

Zu dem Zweck der Filtration war das Ende des Strömungsrohrs 2.1 mit einem Außengewinde 2.1.7 mit zwei Windungen versehen, das zur Herstellung der fluidmäßigen Verbindung 2.7 zwischen dem Strömungsrohr 2.1 und der Öffnung 3.1 des rohrförmigen Filtergehäuses 3.2 für den Filter 3 diente. Das rohrförmiger Filtergehäuse 3.2 wies in seiner Öffnung 3.1 ein korrespondierendes Innengewinde 3.1.1 auf, das das Außengewinde 2.1.7 umgriff. Die Wandung des Filtergehäuses 3.2 bestand ebenfalls aus schlagfestem, kratzfestem ABS einer Stärke von 5 mm. Hierdurch resultierte eine lichte Weite 3.1.2 von 50 mm. In Strömungsrichtung 2.5 gesehen war das rohrförmige Filtergehäuse 3.2 100 mm lang, so dass Filterscheiben 3 einer Dicke von 90 mm und eines Durchmessers von 50 mm mit unterschiedlicher Abscheidungswirksamkeit eingelegt werden konnten. Zu diesem Zweck wurde das rohrförmige Filtergehäuse 3.2 aus der Filteranlage 1 ausgebaut.

Um die Austrittsöffnung 3.3 für das filtrierte Fluid 2.2.2 war ein Innengewinde 3.3.1 mit zwei Windungen angeordnet. In dieses Innengewinde 3.3.1 wurde das passende Außengewinde 3.4.1 der Venturidüse 3.4 angeschraubt. In dem Raum vor der Verengung der Venturidüse wurden mithilfe von Gasspürpumpen und Drägerröhrchen untersucht, ob noch Noxen in der gefilterten Luft 2.2.2 vorhanden waren. Des Weiteren wurde mithilfe eines Partikelzählers von RR Reinraum ELEKTRONIK GmbH, Wiernsheim, bestimmt, ob noch Partikel vorhanden waren. Diese Messungen konnten auch an der Austrittsdüse 3.5 der Venturidüse 3.4 durchgeführt werden.

Die Sogwirkung der Venturidüse 3.4 unterstützte das Hochleistungsgebläse mit der die kontaminierte Luft 2.2 in die Filteranlage angesaugt wurde.

Es wurden die folgenden Filtermaterialien getestet:
- Hochleistungs-Partikelfilter (EPA = Efficient Particulate Air filter), kleinste filtrierbare Teilchengröße: 100 nm,
- Schwebstofffilter (HEPA = High Efficiency Particulate Air filter), kleinste filtrierbare Teilchengröße: 100 nm,
- Hochleistungs-Schwebstofffilter (ULPA = Ultra Low Penetration Air filter), kleinste filtrierbare Teilchengröße: 50 nm,
- Medium-Filter, kleinste filtrierbare Teilchengröße: 300 nm,
- Vorfilter, kleinste filtrierbare Teilchengröße: 1000 nm, und
- Automobilinnenraumfilter, kleinste filtrierbare Teilchengröße: 500 nm.

Die Untersuchungsergebnisse zeigten, dass in allen Fällen die Konzentration von Partikeln in der filtrierten Luft 2.2.2 unterhalb der Nachweisgrenze lag. D.h., die filtrierte Luft 2.2.2 war in diesem Sinne partikelfrei.

Die Filteranlage 1 konnte computergesteuert mit Strom versorgt werden.

Überraschenderweise konnten auch keine Noxen wie NOx, Schwefeldioxid, Ozon und Ammoniak mehr nachgewiesen werden, was noch einmal durch gaschromatografische und massenspektrometrische Messungen bestätigt wurde.

Die solchermaßen gereinigte Luft 2.2.2 konnte sogar für Reinräume verwendet werden.

### Weitere Ausführungsformen der Filteranlage 1 gemäß der Figur 1

Die Filteranlage 1 gemäß der Figur 1 wurde in verschiedener Weise modifiziert, indem von Luft 2.2, 2.2.1 durchströmbare Körper 2.6 in dem Strömungskanal 2.4 fixiert wurden, sodass die stehenden Ultraschallwellen 2.4.2 diese Körper 2.6 durchdrangen. In einer anderen Ausführungsform wurden die durchströmbaren Körper 2.6 zwischen den stehenden Ultraschallwellen 2.4.2 fixiert. In einer dritten Ausführungsform wurden die beiden vorangegangenen Ausführungsformen miteinander kombiniert. Durch diese Modifikationen wurden durch die Ultraschallschwingungen zusätzliche Trennungseffekte bewirkt, sodass die Effektivität der Aggregation, Agglomeration, Kondensation, Auftrennung und Abscheidung, des Zusammenpressens, des Aufpralls, der Einschläge sowie der Anwachsung und Wiederablösung zum Beispiel für bestimmte Teilchengrößen der modifizierten Filteranlagen 1 signifikant und spezifisch erhöht werden konnte.

Die folgenden Materialien wurden als durchströmbare Körper 2.6 verwendet:
- Kunststoffmembrane,
- Kunststoffgewebe,
- textile Gewebe, Gaze,
- Glasfaservliese,
- Nadelfilz,
- Papierfilter,
- Keramikfilter,
- Glasfilter,
- Keramikfilter,
- Sintermetallfilter und
- offenporige Schäume.

Diese Materialien wurden auch in der Form von Partikeln 2.6, insbesondere kugelförmigen Partikel 2.6, mit einer Teilchengröße im Bereich von 500 µm bis 2 mm verwendet, mit denen der Strömungskanal 2.4 ausgefüllt wurde.

### Die Verwendung als Durchflussreaktor

Der Luftkanal 2.4 der Filteranlage 1 gemäß der Figur 1 wurde mit einem Bett aus Katalysatorteilchen aus Wolframtrioxid auf Siliziumdioxid gefüllt. Die Katalysatorteilchen wiesen eine mittlere Teilchengröße von 800 nm auf und wurden durch die von den Ultraschallquellen 2.4.1 ausgesandten stehenden Ultraschallwellen 2.4.2 in heftige Bewegungen versetzt. Es wurde Propen als Fluid 2.2.2 in das schwingende Katalysatorbett eingeblasen, worin es zu But-2-en und Ethen (Fluid 2.2.1). Das Olefingemisch 2.2.1 wurde durch den Filter 3 in die Austrittsöffnung 3.3 und zu dem Auslass 3.4 geleitet, von wo es in eine Kühlanlage zur Kondensation eintrat.

Der durch die heftigen Bewegungen der Katalysatorteilchen entstehende Abrieb mit Teilchengrößen von 500 nm bis 900 nm wurde in dem Filter 3 abgefangen und konnte wiederaufgearbeitet werden. Dadurch enthielt das Olefingemisch 2.2.1 keine Schwebstoffen 2.3.

### Figuren 2 und 3

### Filteranlage 1 mit geringem Druckabfall

Für die Ausführungsform der Filteranlage 1 gemäß der Figur 2 war es wesentlich, dass das Strömungsrohr 2.1 aus ABS gemäß der Figur 1 in Durchflussrichtung 2.5.1 gesehen an seinem Ende mit einen Außengewinde 2.1.7 in das passende Innengewinde 3.7.2 um die Eintrittsöffnung 3.7.3 zum Eintritt des Luftstroms 2.2.1 in das druckverlustfreie Venturi-Rohrstück 2.7.1 eingeschraubt war. Die Eintrittsöffnung 3.7.4 befand sich mittig in dem vertikalen Teil 3.7.1.1 der manschettenförmigen geschlossenen Wand 3.7 um den Filter 3.3. Die manschettenförmigen Wand 3.7 einer Wandstärke von 2 mm bildete somit ein zylinderförmiges Gehäuse 3.7.1einer Länge von 160 mm und eines Durchmessers von 160 mm. Die manschettenförmige Wand 3.7, das druckverlustfreie Venturi-Rohrstück 2.7.1 einer Wandstärke von 2 mm, das Fortsetzungsstück 2.1.2 einer Wandstärke von 2 mm und die Rückführung 2.7.5 des Luftstroms 2.2.2 ebenfalls mit Wandstärken von 2 mm waren dagegen aus Edelstahl gefertigt.

Um die Eintrittsöffnung 3.7.4 war eine vorspringende, ringförmige Verstärkung 3.7.3 einer horizontalen Länge von 15 mm und einer Dicke von 5 mm als Träger des Innengewindes 3.7.2 angeordnet. In das Innengewinde 3.7.2 wurde das Außengewinde 2.1.7 am - in Durchflussrichtung 2.5.1 gesehen - Ende des Strömungsrohrs 2.1 eingeschraubt, sodass eine fluiddichte Stoßkante 3.7.4.1 "druckverlustfreies Venturi-Rohrstück 2.7.1 // Endkante der Wand 2.1.1 des Strömungsrohrs 2.1" gebildet wurde. Dadurch besaß das druckverlustfreie Venturi-Rohrstück 2.7.1 ebenfalls eine lichte Weite von 40 mm.

Am - in Durchflussrichtung 2.5.1 gesehen - Ende des druckverlustfreien Venturi-Rohrstück 2.7.1 war um dessen Austrittsöffnung 3.7.5 ebenfalls eine vorspringende, ringförmige Verstärkung 3.7.5.1 einer horizontalen Länge von 15 mm und einer Dicke von 5 mm angeordnet. Sie diente der Aufnahme des Innengewindes 3.7.5.2, in das das Außengewinde 2.1.2.1 um die Eintrittsöffnung 2.1.2.2 des Fortsetzungsstücks 2.1.2 eingeschraubt wurde. Dadurch wurde eine weitere fluiddichte Stoßkante 2.1.2.3 "Kante der Wand 2.1.2.4 des Fortsetzungsstücks 2.1.2 // druckverlustfreies Venturi-Rohrstück 2.7.1" gebildet. Das Fortsetzungsstück 2.1.2 wies daher ebenfalls eine lichte Weite von 40 mm auf. Es war 120 mm lang und blies die filtrierte Luft 2.2.2 in einen Reinraum.

Der abnehmbare Apparateteil 3.8 zur Entnahme des manschettenförmigen Filters 3.6 umfasste die fluidmäßige Verbindung oder den Kamin 3.9 zu der Rückführung 2.7.5. Der Kamin 3.9 besaß eine lichte Weite von 30 mm und war vertikal und mittig auf dem horizontalen Teil 3.7.1.2 angeordnet. Seine Längsachse bildete mit der Längsachse des druckverlustfreien Venturi-Rohrstücks einen Winkel von 90°. Die Länge des Kamins 3.9 betrug 40 mm und ging in einen Rohrbogen 2.7.5.1 einer lichten Weite von 30 mm als Teil der Rückführung 2.7.5 der filtrierten Luft 2.2.2 über. Der Rohrbogen 2.7.5.1 der Rückführung 2.7.5 bog in einem Abstand von 40 mm zur vertikalen Teil 3.7.1.1 der Wand 3.7 senkrecht nach unten ab (vertikaler Teil 2.7.5.2), durchbrach fluiddicht die Wand 2.1.2.4 des Fortsetzungsstücks 2.1.2 und bildete einen weiteren Bogen 2.7.5.3 in die Horizontale, sodass die Mittelachse des horizontalen Teils 2.7.5.4 der Rückführung 2.7.5 mit der Längsachse des Fortsetzungsstücks 2.1.2 deckungsgleich war. Der horizontale Teil 2.7.5.4 wies eine Länge von 30 mm auf und ging in die Venturidüse 2.7.5.1 als Austrittsöffnung über.

Der abnehmbare Apparateteil 3.8 war 20 cm tief und hatte einen rechteckigen Grundriss. Er war mit der umlaufenden Flanschverbindung 3.8.1 mit der elastomeren Dichtung 3.8.1.1 aus Polybutadien mit dem restlichen Teil des zylinderförmigen Gehäuses 3.7.1 verbunden. Die umlaufende Flanschverbindung 3.8.1 wurde mit die Flanschverbindung 3.8.1 umgreifenden Klemmen 3.8.1.2 fluiddicht fixiert. Wurde der Apparateteil 3.8 abgenommen, konnte der verbrauchte manschettenförmigen Filter 3.6 durch einen frischen ersetzt werden.

Das Material des manschettenförmigen Filters 3.6 legte sich praktisch nahtlos um das druckverlustfreie Venturi-Rohrstück 2.7.1. Dies wurde dadurch bewerkstelligt, dass an die Stoßkanten des Filtermaterials 3.6 als Zapfen-Nut-Verbindung 3.6.1 ausgebildet waren. Die vertikalen Seiten des manschettenförmigen Filters 3.6 lagen fest an den vertikalen Teilen 3.7.1.1 an, sodass ein Teil des Luftstroms 2.2.1 seinen Weg durch den Filter 3.6 nehmen musste. Der Filter 3.6 wies eine Dicke von 50 mm auf. Dadurch wurde ein umlaufender Sammelspalt 2.7.6 einer lichten Weite von etwa 10 mm zwischen der Oberfläche des Filtermaterials 3.6 und dem horizontalen Teil 3.7.1.2 der Wand 3.7 gebildet. Der Sammelspalt 2.7.6 diente der Sammlung und Zuleitung der filtrierten Luft 2.2.2 zu den Kamin 3.9.

Das druckverlustfreie Venturi-Rohrstück 2.7.1 wies eine fluiddurchlässige Wand 2.7.2 auf. Der in Durchflussrichtung 2.5.1 gesehen erste die fluiddurchlässige Wand 2.7.2 umlaufende Ring von Austrittsöffnung 2.7.4 eines Durchmessers von 3 mm war 20 mm hinter der Stoßkante 3.7.4.1 angeordnet. Die Austrittsöffnungen 2.7.4 wiesen einen Abstand von etwa 1 mm auf, so dass im umlaufenden Ring einunddreißig Austrittsöffnungen 2.7.4 hintereinander angeordnet waren. Die nächsten neun umlaufenden Ringe von Austrittsöffnungen 2.7.4 waren - in Durchflussrichtung 2.5.1 gesehen - in einem Abstand von 10 mm voneinander angeordnet.

Vor dem in Durchflussrichtung 2.5.1 gesehen ersten umlaufenden Ring von Austrittsöffnungen 2.7.4 war ein erstes in einem Winkel von 60° gegen die Durchflussrichtung 2.5.1 geneigtes, ringförmiges, umlaufendes Anstellblech 2.7.3 einer Breite von 20 mm angeordnet. Die Basis des Anstellblechs 2.7.3 befand sich 5 mm vor dem ersten Ring von Austrittsöffnungen 2.7.4. Die weiteren neun Anstellbleche 2.7.3 waren an ihrer Basis jeweils 5 mm vor dem jeweils nächsten Ring von Austrittsöffnungen 2.7.4 befestigt. Durch diese Konfiguration resultierte ein Strömungskanal 2.4 eines Durchmessers von 10 mm.

Durch die Anstellbleche 2.7.3 wurden die in der mit einer Geschwindigkeit von etwa 60 m/s strömenden Luft 2.2.1 befindlichen Teilchen 2.3.4 einer Teilchengröße von 800 nm bis 300 µm mit einer spezifischen Teilchenzahl N/Vt >99,8 % in die Austrittsöffnungen 2.7.4 gelenkt und von dem manschettenförmigen Filter 3.6 abgefangen. Der von den Teilchen 2.3.4 befreite Luftstrom 2.2.2 wurde durch das Fortsetzungsstück 2.1.2 direkt in einen Reinraum geleitet.

Es wurden die folgenden Filtermaterialien getestet:
- Medium-Filter, kleinste filtrierbare Teilchengröße: 300 nm, und
- Automobilinnenraumfilter, kleinste filtrierbare Teilchengröße: 500 nm

Die filtrierte Luft 2.2.2, die durch Filter 3.6 geströmt war, trat in den umlaufenden Sammelspalt 2.7.6 ein und wurde zu dem Kamin 3.9 geleitet, der Teil der Rückführung 2.7.5 war. Die gesammelte und rückgeführte filtrierte Luft 2.2.2 wurde wie vorstehend beschrieben in das Fortsetzungsstück eingeleitet.

Die so gereinigte Luft 2.2.2 wies eine spezifische Teilchenzahl <0,04/m³h auf.

Der Aufbau der Ausführungsform der Filteranlage 1 gemäß der Figur 2 wird noch einmal anhand der Draufsicht auf einen Querschnitt durch die Filteranlage 1 längs der Schnittlinie A-B verdeutlicht.

Die Filteranlage 1 konnte computergesteuert mit Strom versorgt werden.

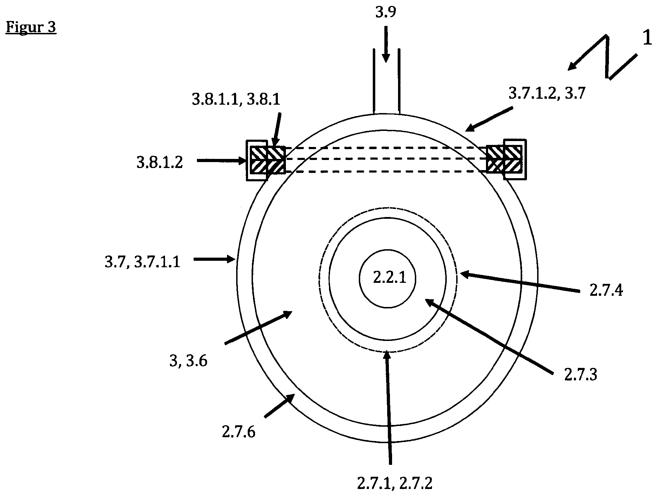

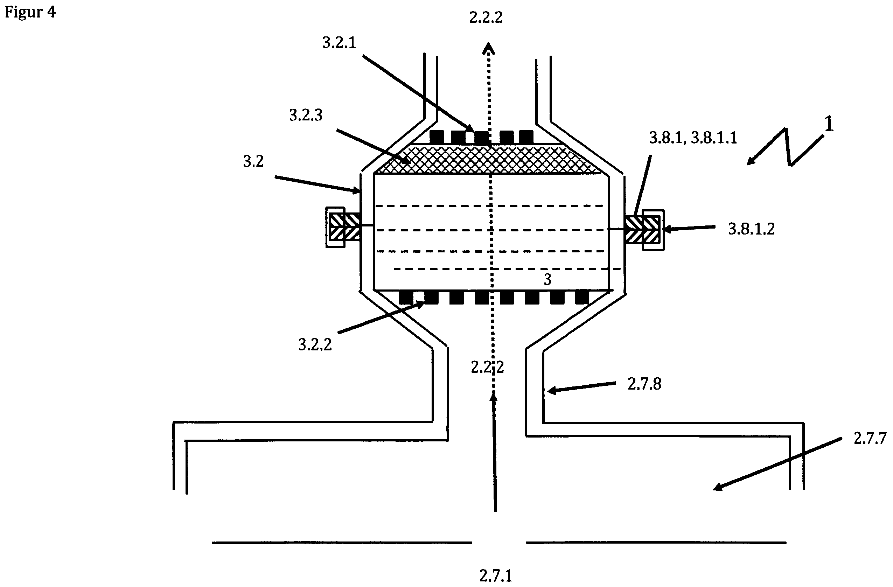

### Figur 4 mit Figuren 2 und 3 (teilweise)

### Filteranlage 1 mit geringem Druckabfall

Der Aufbau der Filteranlage 1 gemäß der Figur 4 entsprach im Wesentlichen dem Aufbau der Filteranlage 1 gemäß den Figuren 2 und 3, nur dass ein Teil des Luftstroms 2.2.1 mit den Teilchen 2.3.4 aus den kreisförmigen Austrittsöffnungen 2.7.4 in einen umlaufenden Sammelspalt 2.7.7 eintrat, der den Luftstrom 2.2.1 über ein Sammelrohr 2.7.8 zu dem scheibenförmigen Filter 3 einer Dicke von 100 mm und eines Durchmessers von 150 mm in dem Filtergehäuse 3.2 leitete. Der scheibenförmigen Filter 3 war auf einer Lochplatte 3.2.1 gelagert.

Die filtrierte Luft 2.2.2 wurde über eine Austrittsöffnung 3.3, 3.4 in eine Klimaanlage geblasen.

In einer weiteren Ausführungsform war auf dem Filter 3 noch ein Grobfilter 3.2.3 angeordnet, der gegebenenfalls entstehende Reste des Filters 3 abfing. Der Grobfilter 3.2.3 war durch die Lochplatte 3.2.2 gesichert

Der zweite Luftstrom 2.2.2 wurde aus dem druckverlustfreien Venturi-Rohrstück 2.7.1 durch das Fortsetzungsstück 2.1.2 ebenfalls in die Klimaanlage geführt.

Die Filteranlage konnte computergesteuert mit Strom versorgt werden.

### Figuren 5 und 6

### Sterilisierbare Filteranlage 1 für medizinische Geräte

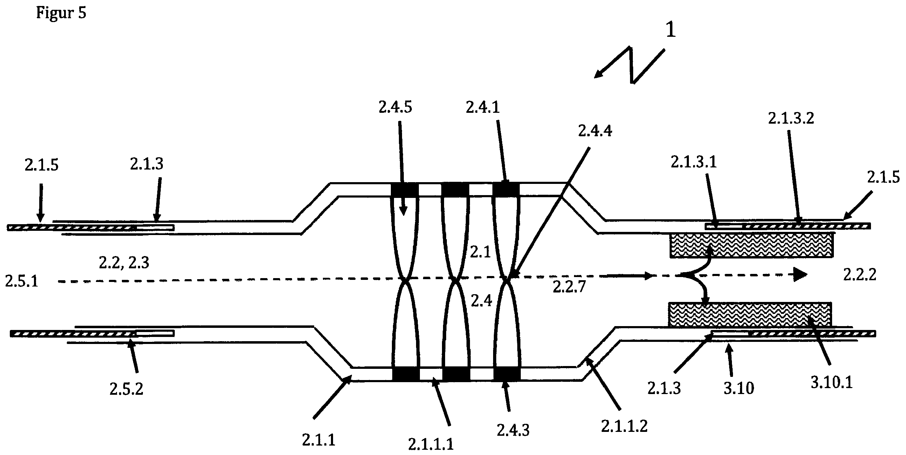

Die Filteranlage 1 gemäß der Figur 5 war 250 mm lang. Ihre geschlossene Wand 2.1.1 war 6 mm dick und bestand aus sterilisierbarem Polyethersulfon (Ultrason^{®} E von BASF). Der Luftstrom 2.2 mit den gegebenenfalls vorhandenen Schwebstoffen 2.3 wurde durch das 40 mm lange Eintrittsrohr 2.5.2 mit einer lichten Weite von 15 mm in den Strömungskanal 2.4 gefördert. Das Eintrittsrohr 2.5.2 wies einen mittig umlaufenden Ringspalt 2.1.3 einer lichten Weite 2.1.3.1 von 3 mm als Clip-on-Anschluss 2.1.5 für einen Kunststoffschlauch 2.1.3.2 auf. Am Ende des Eintrittsrohrs 2.5.2 erweiterte sich die lichte Weite 2.1.4 des Strömungskanals 2.4 auf einer Strecke von 15 mm konusförmig auf 40 mm, um sich nach einer Strecke von 70 mm wieder auf einer Strecke von 20 mm konusförmig auf die lichte Weite von 15 mm zu verengen und in das 110 mm lange Austrittsrohr 3.10.1 mit dem druckverlustfreien Röhrchenfilter 3.10 überzugehen. Der druckverlustfreie Röhrchenfilter 3.10.1 bestand aus einem lockeren Gewebe aus hochreinen Cellulosefäden, das an der Innenwand des Austrittsrohres 3.10.1 anlag und die Teilchen 2.3.4 einer Teilchengröße von 600 nm bis 100 µm abfing, sodass ein filtrierter Luftstrom 2.2.2 mit einer spezifischen Teilchenzahl N/Vt unterhalb der Nachweisgrenze austrat.

Das Austrittsrohr 3.10 wies ebenfalls einen umlaufenden Ringspalt 2.1.3 einer lichten Weite 2.1.3.1 von 3 mm als Clip-on-Anschluss 2.1.5 für einen Kunststoffschlauch oder ein Metallrohr auf.

Der Strömungskanal 2.4 wies einen quadratischen Querschnitt auf. In seinen beiden horizontalen geschlossenen Wänden 2.1.1 und in seinen beiden vertikalen geschlossenen Wänden 2.1.1 waren jeweils zwei Paare einander zugeordneter Piezo-Ultraschallsender 2.4.1 vom TypMCUSD14A40S0RS von multicomp mit Polydimethylsiloxan-Kleber fluiddicht eingeklebt, sodass sie exakt planar mit der Innenseite 2.1.1.2 der geschlossenen Wand 2.1.1 des Strömungsrohrs 2.1 abschlossen.

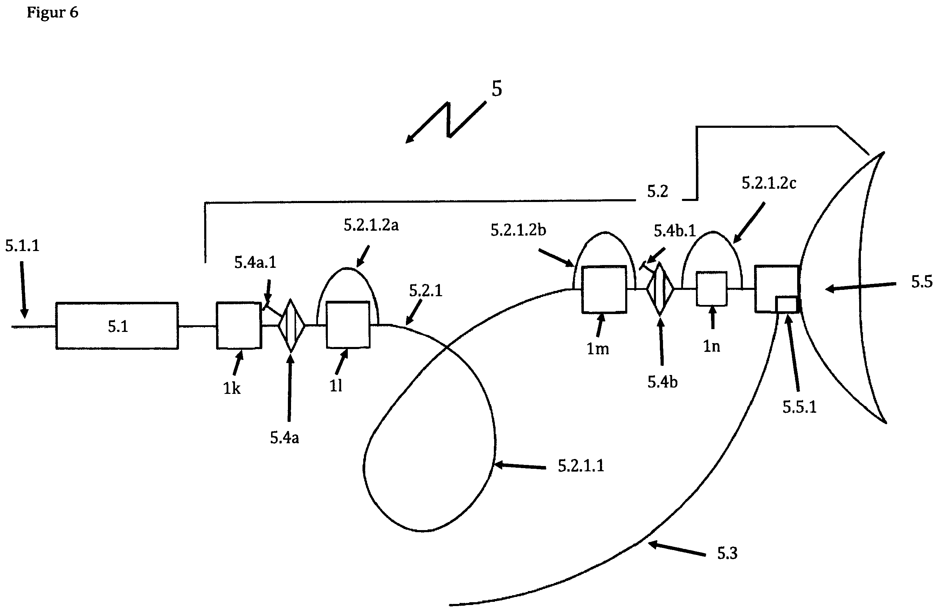

Die Filteranlagen 1 gemäß der Figur 5 waren hervorragend für medizinische Geräte, insbesondere für Beatmungsgeräte oder als Anästhesiegeräte 5 geeignet. Die Figur 6 zeigt das Schema eines solchen Beatmungsgeräts 5.

Die Filteranlagen 1 gemäß der Figur 5 konnten in die Verbaupositionen 1k bis 1n eines Inspirators 5.2 eingefügt werden. So konnte eine Filteranlage 1k in Durchflussrichtung 2.5.1 gesehen hinter die Luftdosierung 5.1 und vor den Beatmungsfilter 5.4a eingefügt werden. Eine weitere Filteranlage 1l konnte hinter den Beatmungsfilter 5.4a und vor den Beatmungsschlauch 5.2.1 mit der Gänsegurgel 5.2.1.1 eingefügt werden. Die Filteranlage 1l konnte im Bedarfsfall durch einen Bypass1 5.2.1.2a umgangen werden. Dies war insbesondere dann der Fall, wenn über den Dosieranschluss 5.4.a.1 Anästhesiemittel und Arzneimittel dem Beatmungsfilter 5.4a.1 zugeführt und vernebelt wurden. Noch eine weitere Filteranlage 1m konnte hinter der Gänsegurgel 2.5.1.1 und vor dem Beatmungsfilter 5.4b eingebaut werden. Auch die Filteranlage 1m konnte durch einen Bypass 2 5.2.1.2b bei der Zufuhr von Anästhesiemittel und Arzneimittel über den Dosieranschluss 5.4b.1 in den Beatmungsfilter 5.4b umgangen werden. Eine dritte Filteranlage 1n konnte hinter dem Beatmungsfilter 5.4b und vor dem Anschlussstück 5.5.1 für die Atemmaske 5.5 und den Expirator 5.3 eingebaut werden. Auch die Filteranlage 1n konnte durch den Bypass3 5.2.1.2c umgangen werden.

Die Filteranlagen 1k-1n konnten mithilfe eingebauter Chips und Powerpacks gesteuert und mit Strom versorgt werden.

Mit dem Beatmungsgerät oder Anästhesiegeräte 5 konnten besonders kritische Fälle von Patienten mit hochreiner Luft beatmet werden, wobei das Risiko einer Kontamination mit Mikroorganismen und Allergenen wirksam ausgeschaltet werden konnte.

Eine weiterer Vorteil Filteranlage 1 gemäß der Figur 5 war, dass sie mit üblichen und bekannten Inline-Befeuchtungseinheiten (heat and moisture exhange units, HME) und/oder aktiven Luftbefeuchtern kombiniert werden konnten, sodass Patienten mit befeuchteter Luft bei Körpertemperatur beatmet werden konnten.

### Figur 7

### Die Ausrüstung von Auspuffanlagen 4 mit Filteranlagen 1

Zur Lösung von Abgasproblemen konnten hochtemperaturstabile Filteranlagen 1 aus Edelstahl beispielsweise mit dem in der Figur 1 oder den Figuren 2 und 3 gezeigten Aufbau verwendet werden. Als Filtermaterialien für die Filter 3 wurden Gewebe aus Keramikfäden oder Metallfeden verwendet. Diese Filteranlagen konnten in die Verbaupositionen 1a bis 1j in die Auspuffanlagen 4 eingebaut werden. Im Einzelnen wurde die Filteranlage 1a hinter den Anschluss 4.1 der Auspuffanlage 4 an einen Benzinmotor oder hinter den Rußfilter und den Anschluss 4.2 der Auspuffanlage 4 an einen Dieselmotor eingebaut werden. Des Weiteren konnten die Filteranlagen 1b und 1c in die beiden Rohre des Hosenrohrs 4.3 eingebaut werden. Die Filteranlage 1d konnte in die Rohrleitung 4.7 zwischen dem Hosenrohr 4.3 und dem Katalysator 4.4 eingefügt werden. Außerdem konnten die Filteranlage 1e und 1f in die Rohrleitung 4. 7 zwischen dem Katalysator 4.4 und dem Vorschalldämpfer 4.5 eingebaut werden. Auch der Vorschalldämpfer 4.5 konnte die Filteranlage 1g umfassen. Ferner konnten die Filteranlage 1h und 1i in die Rohrleitung zwischen dem Vorschalldämpfer 4.5 und dem Endtopf eingebaut werden. Nicht zuletzt konnte die Filteranlage 1j vor dem Abgasauslass 4.8 eingefügt werden.

Die Filteranlagen 1a bis 1j konnten individuell und computergesteuert von der Elektrik und Elektronik des Fahrzeugs mit Strom versorgt werden.

Durch solche Auspuffanlagen 4 konnten die Motorabgase 2.2 soweit gereinigt werden, dass sie praktisch frei von Schwebstoffen 2.3 und NOx und Ammoniak waren

### Figur 8

### Atemschutzmasken 6 mit Filteranlagen 1

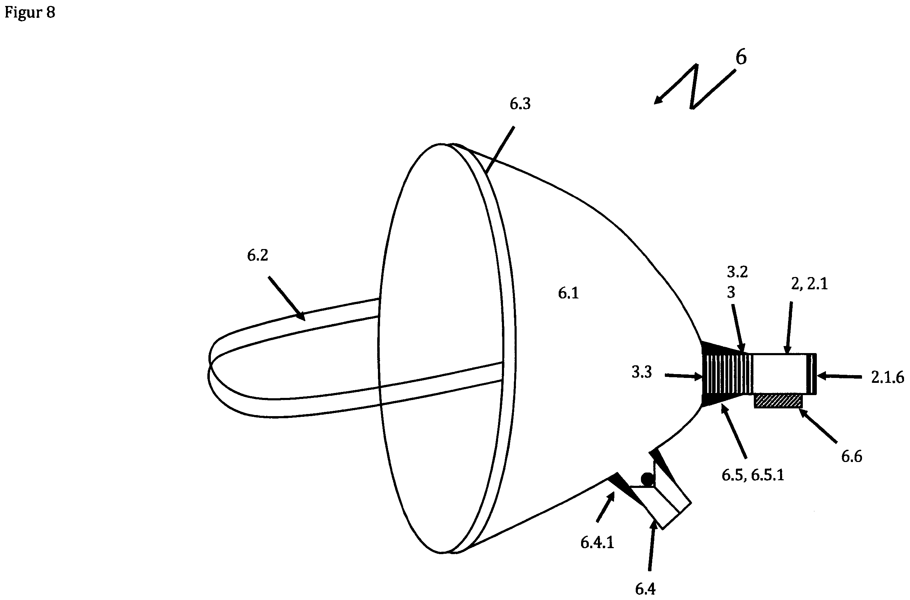

Die Atemschutzmaske 6 gemäß der Figur 8 umfasste eine luftundurchlässige Mund- und Nasenabdeckung 6.1 aus Materialien wie Thermoplaste, Elastomere oder imprägnierte Gewebe. Die Atemschutzmaske 6 konnte mit einer flexiblen Halterung 6.2 am Kopf befestigt werden. Zur besseren Anpassung an individuelle Gesichter enthielt die Mund- und Nasenabdeckung 6.1 einen flexiblen Rand 6.3 aus weichen Elastomeren. In Mund- und Nasenhöhe war eine Filteranlage 1 mit einer Clip-on-Halterung 6.5 aus Hartgummi, die an einem Verstärkungsring 6.5.1 angebracht war, befestigt. Die Filteranlage 1 wies - wie im Prinzip in der Figur 1 aufgezeigt - einen Vorfilter 2.1.6 eine Vorrichtung 2 mit einem Strömungsrohr 2.1 zur Verringerung spezifischer Teilchenzahlen N/Vt von schwer filtrierbaren Schwebstoffen 2.3, eine fluidmäßige Verbindung 2.7 des Strömungsrohrs 2.1 mit dem austauschbaren Filter 3 in einem Filtergehäuse 3.2 mit einer Austrittsöffnung 3.3 für die filtrierte Luft 2.2.2 auf. An der Filteranlage war des Weiteren ein leichtes, wieder aufladbares PowerPack 6.6 als Energiequelle für die Ultraschallsender und - empfänger 2.4.1 angebracht. Die Ausatmung erfolgte über einen Expirator 6.4 mit einem Rückschlagventil 6.4.1.

Die Atemschutzmaske gewährte insbesondere wirksamen Schutz vor Infektionen mit Mikroorganismen wie Bakterien und Pilzen sowie vor Infektionen mit Viren.

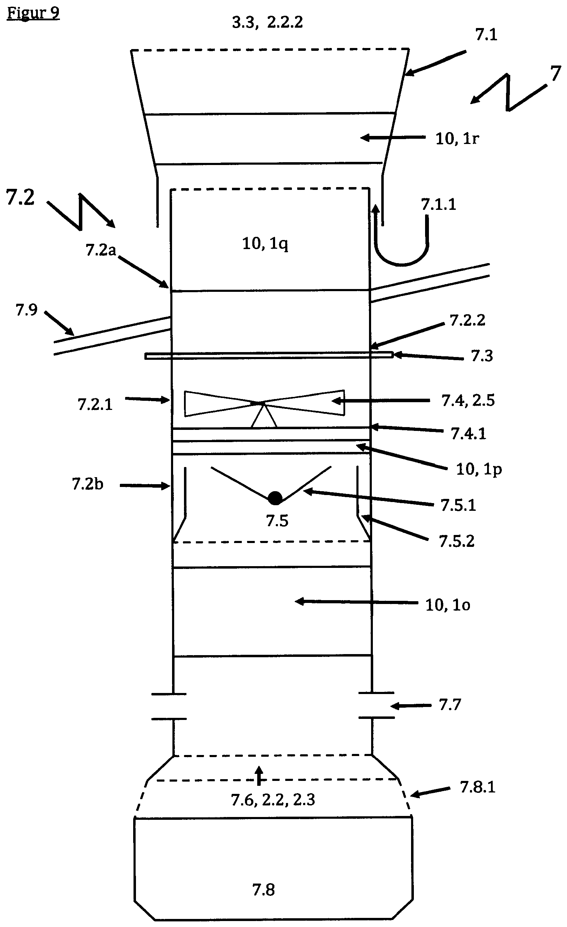

### Figur 9 in Verbindung mit den Figuren 12 und 13

### Stalllüftungskamin 7 mit Filteranlagen 1

Der Stalllüftungskamin 7 gemäß der Figur 9 wies von oben nach unten gesehen - also entgegen der Durchflussrichtung 2.5.1 einen Diffusor 7.1 mit einer Austrittsöffnung 3.3 für die von Schwebstoffen 2.3 und von Ammoniak freie filtrierte Luft 2.2.2 auf. Der Diffusor 7.1 wies des Weiteren einen ringförmigen Eintrittsspalt 7.1.1 für atmosphärische Luft auf, um die Sogwirkung des Diffusors 7.1 zu verstärken. Unter dem Diffusor 7.1 war ein Lüftungsrohr 7.2 mit einem oberen Teil 7.2a und einem unteren Teil 7.2b mit nicht isolierten Rohrwänden 7.2.1 angeordnet. Der untere Teil 7.2b befand sich unterhalb des Daches 7.9 und war mit dem oberen Teil 7.2a an der Einsteckverbindung 7.2.2, die mit einer Rohrschelle 7.3 befestigt war, verbunden. Unterhalb der Einsteckverbindung 7.2.2 war ein motorgetriebener, horizontaler Ventilator 7.4 mit einer Befestigungsstrebe 7.4.1 befestigt. Unterhalb des Ventilators 7.4 waren Belüftungsklappen 7.5 mit Klappenflügel 7.5.1 und Luftöffnungen 7.5.2 angeordnet. Die mit Schwebstoffen 2.3 Ammoniak kontaminierte Stallluft 2.2 trat an der Lufteintrittsdüse 7.6 in den Stalllüftungskamin 7 ein. Der Luftstrom 2.2, 2.3 wurde durch seitlichen Anströmdüsen 7.7 verstärkt. Unterhalb der seitlichen Anströmdüse 7.6 war eine Wasserauffangwanne 7.8 an lösbaren Halterungsketten 7.8.1 zum Auffangen von Kondenswasser angeordnet.

Erfindungsgemäß waren in dem Stalllüftungskamin an den Einbaustellen 1o bis 1r der Gestellrahmen oder Racks 10 ähnlich den Figuren 12 und 13 aber in Zylinderform mit kreisförmigem Querschnitt und vertikaler Außenwand 10.1 angeordnet. Die Gestellrahmen 10 wiesen des Weiteren einen oberen und einen unteren horizontalen Steg 10 mit kreisrunden Öffnungen 10.3 zur Aufnahme und Halterung von Filteranlagen 1 gemäß der Figur 1 auf. Die Filteranlagen 1 waren dadurch in dem Stalllüftungskamin 7 vertikal in Durchflussrichtung 2.5.1 angeordnet, d.h., dass sich die Austrittsöffnungen 3.3 in Durchflussrichtung 2.5.1 gesehen oben in Richtung des Diffusors 7.1 befanden. Hier und bei den im Folgenden beschriebenen Vorrichtungen 10 und 11 waren an den jeweiligen Einbaupositionen in den Wänden verschließbare Klappen angeordnet, durch die die Gestellrahmen 10 in die Vorrichtungen 10 und 11 eingeschoben werden konnten (nicht eingezeichnet).

Die einzelnen Filteranlagen 1 in den Gestellrahmen 10 konnten individuell elektrisch und elektronisch angesteuert werden. Beispielsweise konnte bei geringer Belastung mit ammoniakhaltiger Luft 2.2, 2.3, d.h. wenn der Viehstall nur teilweise belegt war, nur die Filteranlagen 1 in einem oder zwei Gestellrahmen 10 - beispielsweise der Gestellrahmen 10 an der Verbauposition 1o und/oder der Gestellrahmen 10 an der Verbauposition 1q - gesteuert mit Strom versorgt werden.

Die von dem Stalllüftungskamin 7 abgegebene Luft war frei von Ammoniak und Schwebstoffen 2.3 in dem in der vorliegenden Erfindung gebrauchten Sinne, dass die jeweiligen Konzentrationen unterhalb der Nachweisgrenze üblicher und bekannter Messmethoden lagen.

Ein weiterer Vorteil war, dass mithilfe von Stalllüftungskaminen 7 die Luftfeuchtigkeit in Tierställen auf einem für die Tiere angenehmen Niveau gehalten werden konnte.

### Figur 10

### Thermisch isolierter Stalllüftungskamin 8

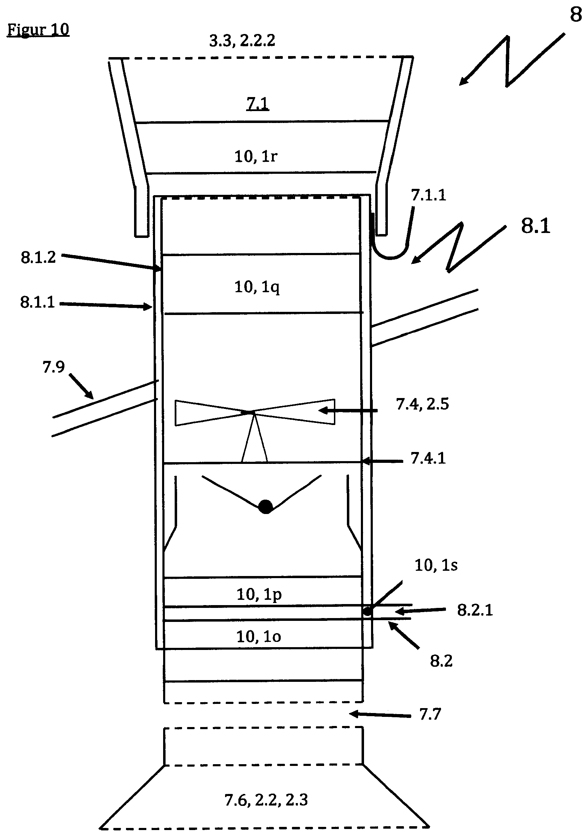

In seinem Aufbau glich der thermisch isolierte Stalllüftungskamin 8 gemäß der Figur 10 dem nicht isolierten Stalllüftungskamin 7 gemäß der Figur 9 mit dem Unterschied, dass die Rohrwand 8.1.2 des isolierten Lüftungsrohrs 8.1 mit einer Isolierung 8.1.1 aus nicht brennbarem Schaumzement gemäß der deutschen Patentanmeldung DE 10 2016 012 746.5 versehen war und dass der Stalllüftungskamin 8 an der Einbauposition 1s eine Luftzuleitung 8.2 zur Zufuhr von Dachraumluft 8.2.1 umfasste. Dadurch konnte die Bildung von Kondenswasser in dem thermisch isolierten Stalllüftungskamin 8 wirksam verhindert werden.

Ein weiterer Vorteil war, dass mithilfe von Stalllüftungskaminen 8 die Luftfeuchtigkeit in Tierställen auf einem für die Tiere angenehmen Niveau gehalten werden konnte.

### Figur 11

### Umluftreiniger 9 im Tierstall

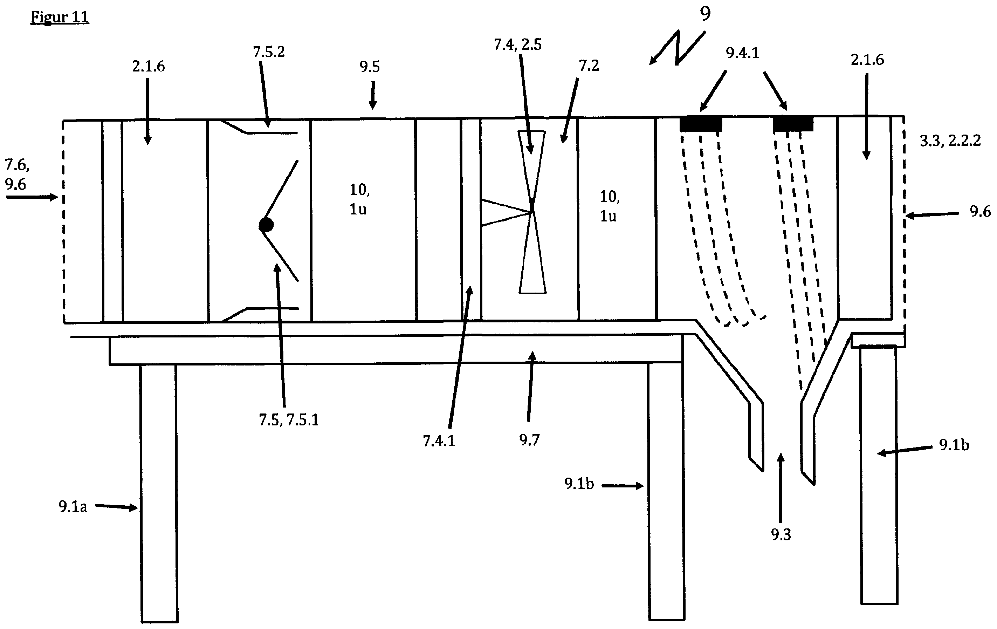

Der 5 m lange Umluftreiniger 9 einer lichten Weite von 1 m gemäß der Figur 11 war im Wesentlichen horizontal mit einer leichten Neigung auf zwei langen Standfüßen 9.1a und vier kurzen Standfüßen 9.1b und einer damit verbundenen horizontalen, wannenförmigen Auflage 9.7 gelagert. Die Standfüße 9.1a und 9.1b sowie die Auflage 9.7 waren schwingungsgedämpft (nicht eingezeichnet), sodass die Tiere nicht durch ungewohnte Geräusche gestört wurden. Die tragenden Bauteile des Umluftreinigers 9, insbesondere die 5 mm dicke Wand 9.5, bestanden wegen der korrosiven Atmosphäre im Tierstall aus Edelstahl. Die Wand 9.5 wies eine schalldämmende Beschichtung aus Akustikschaumstoff auf (nicht eingezeichnet). Der Umluftreiniger 9 umfasste - in Durchflussrichtung 2.5.1 gesehen - eine Lufteintrittsöffnung 7.6, die durch eine Lochplatte 9.6 und einen Vorfilter 2.1.6 vor dem Eindringen grobteiliger Materialien wie Futtermittelteile, Strohteile oder Spelzen gesichert war. An den Einbaupositionen 1t bis 1v waren die bei der Figur 9 beschriebenen Gestellrahmen 10 mit den horizontal gelagerten Filteranlagen 1 gemäß der Figur 1 eingebaut. Der Luftstrom 2.2 mit den Schwebeteilchen 2.3 wurde mithilfe eines elektrisch angetriebenen, vertikal gelagerten und an einer vertikalen Befestigungsstrebe 7.4. 1 befestigten Ventilator 7.4 als Förderervorrichtung für die Luftströme 2.2, 2.2.1 und 2.2.2 durch den Umluftreiniger 9 bewegt. Die Regelung des Luftstroms erfolgte über die Belüftungsklappen 7.5 mit den Klappenflügeln 7.5.1 und den Luftöffnungen 7.5.2. Auch hier konnten die Filteranlagen 1 individuell mit Strom versorgt werden. Hinter der letzten Einbauposition 1v waren mehrere querstehende, vertikale Abtropfnetze 9.4 mit rundem Umfang aus Polyethylenfäden mithilfe ders halbkreisförmigen Befestigungsklemmringe 9.4.1 befestigt. Sie verstärkten das Abtropfen des von dem Luftstrom 2.2.2 mitgeführten Kondenswassers. Das Kondenswasser lief in dem Lüftungsrohr 7.2 durch eine Wasserablaufrinne 9.2 in ein Wasserablaufrohr 9.3 und konnte zur weiteren Verwendung oder zur Entsorgung gesammelt werden. Der Auslass 3.3 des Lüftungsrohrs 7.2 war vor dem unerwünschten Eindringen von groben Teilchen durch einen Auslassfilter 2.1.6 und eine weitere Lochplatte 9.6 geschützt.

Aufgrund des Umluftreinigers 9 konnten die Konzentrationen von Schwebstoffen und Noxen, insbesondere von Ammoniak, in der Stallluft dauerhaft niedrig gehalten werden. Dadurch wurden die Tiere vor Infektionen geschützt und blieben dadurch gesund und wuchsen schneller.

Außerdem konnte die Luftfeuchtigkeit auf einem für die Tiere angenehmen Niveau gehalten werden.

### Figuren 12 und 13

### Gestellrahmen 10

Zylinderförmige Gestellrahmen 10 wurden bereits vorstehend bei der Figur 9 beschrieben. Die Figuren 12 und 13 zeigen nun kastenförmige oder quaderförmige Gestellrahmen 10. Wie die Draufsicht von oben in der Figur 12 zeigt, umfasste der Gestellrahmen 10 eine vertikale Außenwand 10.1 und einen horizontalen Steg bzw. eine Stegplatte 10.2 mit runden Öffnungen 10.3 zur Aufnahme und Halterung von Filteranlagen 1 gemäß der Figur 1. Der Längsschnitt längs der Schnittlinie C-D in der Figur 13 verdeutlicht noch einmal den Aufbau des Gestellrahmens 10 mit einer oberen und einer unteren Stegplatte 10.2 und den an der Außenseite der Filteranlagen 1 angebrachten, vorspringenden Halterungen 10.4.

Vorzugsweise besteht der Gestellrahmen 10 aus einem schlagfest ausgerüsteten Kunststoff wie ABS.

### Figuren 14 und 15

### Kastenförmige Aufnahmevorrichtung 11 für den Gestellrahmen 10

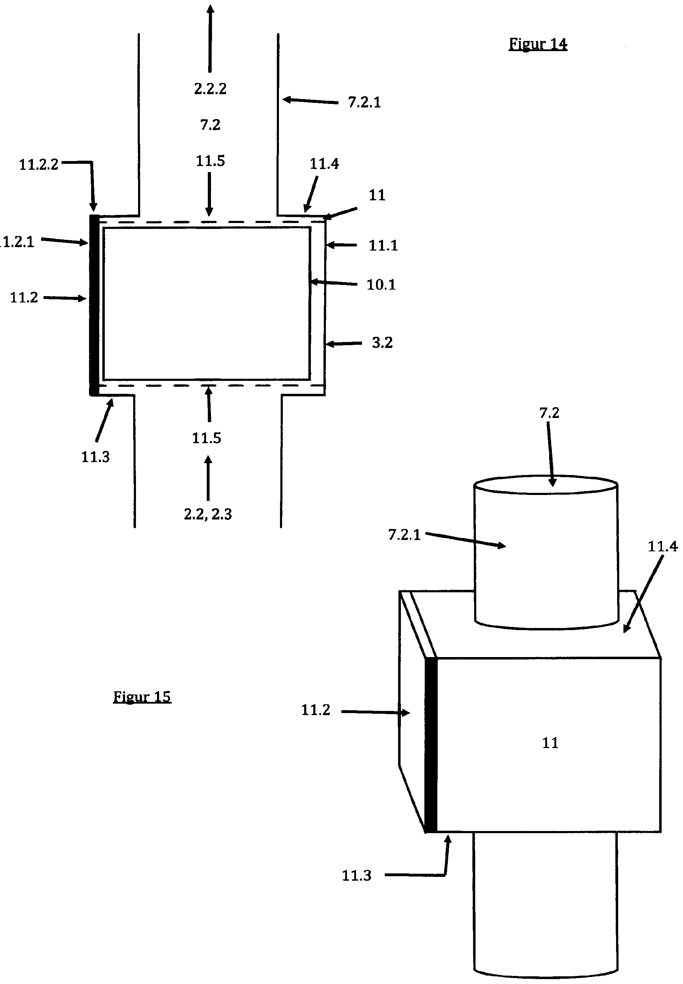

Um den kastenförmigen Gestellrahmen 10 gemäß den Figuren 13 und 14 in ein Lüftungsrohr 7.2 oder ein anderes Rohr mit runder, ovaler, elliptischer oder anders geformte Rohrwand 7.2.1 einbauen zu können, wurde in das Lüftungsrohr 7.2 die kastenförmige Aufnahmevorrichtung gemäß der Figuren 14 (Längsschnitt) und 15 (perspektivische Darstellung) eingebaut. Die kastenförmige Aufnahmevorrichtung 11 wies drei vertikale Wände 11.1 auf. Auf einer vertikalen Seite war eine verschließbare, vertikale Servicetür 11.2 mit einem Türblatt 11.2.1 und Türangeln 11.2.1 angeordnet. Die Oberseite wurde von einer umlaufenden Decke 11.4 und die Unterseite von einem umlaufenden Boden 11.3 gebildet. In den Gestellrahmen 10 waren die Filteranlagen 1 1 gemäß der Figur 1 in der Durchflussrichtung 2.5.1 angeordnet, sodass ihren Austrittsöffnungen 3.3 die Luft 2.2.2 entströmte.

Die kastenförmige Aufnahmevorrichtung 11 ermöglichte im Bedarfsfall den einfachen Austausch des Gestellrahmens 10.

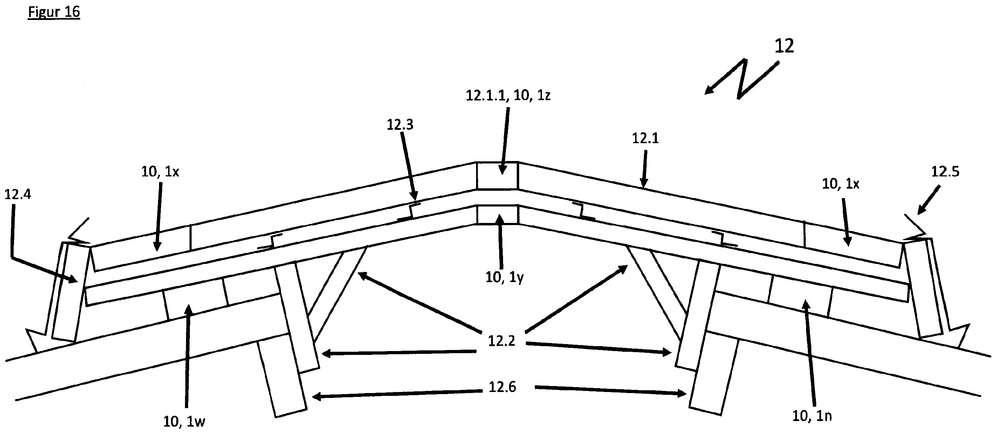

### Figur 16 in Verbindung mit den Figuren 13 und 14

### Stalldachhaube 12

Die Stalldachhaube 12 für Tierställe auf Bauernhöfen oder in zoologischen Gärten umfasste eine transparente Lichthaube 12.1 mit einem mittig angeordneten Abluftspalt 12.1.1, darunter angeordnete Aluminiumstreben 12.2 mit seitlichen Aluminium-Z-Pfetten 12.3 und Aluminium-Windabweiser 12.4 mit Aluminium-Sturmwinkel 12.5. Die Pfeile 12.6 symbolisieren die Luftströme mit ihrer Durchflussrichtung 2.5.1. Diese Anordnung war mit dem Bedachungsmaterial 12.7 verbunden. An den Verbaupositionen 1w bis 1z waren passend dimensionierte Gestellrahmen 10 mit Filteranlagen 1 gemäß der Figur 1 eingebaut, durch die die Luftströme 12.6 gelenkt wurden. Dadurch gelangte über die Stalldachhaube 12 nur noch von Schwebstoffen und Noxen wie Ammoniak freie Luft 2.2.2.

Dies war insbesondere ein wesentlicher Vorteil für Tierställe in zoologischen Gärten, die sich beispielsweise in Städten befanden.

### Figuren 17,18 und 19

### Fluiddichte Anordnungen 13 und ihre Verwendung

Um besonders räumlich variable Anordnungen 13 von Filteranlagen 1 mit stehenden und/oder moduliert Ultraschallwellen und/oder ihren Oberschwingungen 2.4. 2 zu ermöglichen, wurde die fluiddichte 2-seitige Anordnung 13 von jeweils einem Erreger-Empfänger 2.4.1 von Ultraschall (vgl. Figur 1) entwickelt. Die Anordnung 13 umfasst eine fluiddichte Kapsel 13.2 mit Strömungsprofil aus Kunststoff wie zum Beispiel Polypropylen einer Länge von 40 mm und eines Durchmessers von 20 mm. In der Kapsel 3.2 war eine Platine 13.1 angeordnet auf der die Ultraschallquellen 2.4.1 versetzt angeordnet waren. Die Ultraschallquellen 2.4.1 waren mit Silikonklebstoff 13.3 fluiddicht in die Wand 3.7 eingeklebt. Die elektrische Energie wurde von einem eingekapselten, Miniaturisierung, induktiv aufladbaren PowerPack 13.6 geliefert. Des Weiteren umfasste die Anordnung 13 an ihrem unteren und oberen Ende jeweils eine Ösenverbindung 13.4.1 für einen oberen und einen unteren Hängedraht 13.4.

Mehrere Anordnungen 13 wurden in einem Strömungskanal 2.4 nebeneinander an einem Venturi-Trägerblech 13.5.1 aufgehängt, sodass die in Durchflussrichtung 2.5.1 gesehen unteren Ultraschallquellen 2.4.1 miteinander und die oberen Ultraschallquellen 2.4.1 miteinander beim Betrieb der Anordnungen 13 stehende Ultraschallwellen 2.4.2 aussandten. Unter dieser direkt an dem Venturi-Trägerblech 13.5 aufgehängten Anordnungen 13 konnten beliebig viele weitere Reihen von Anordnungen 13 aufgehängt werden, sodass gewissermaßen eine Quipu-Konfiguration resultierte. Die unterste Reihe von Anordnungen 13 konnte mit ihren unteren Hängedrähten 13.4 an einem fluiddichten Gitter befestigt werden, sodass die Anordnungen 13 ihre räumliche Stellung im Strömungskanal 2.4 bei Betrieb nicht veränderten.

Das Venturi-Trägerblech 13.5.1 wies Venturi-Trichterwände 13.5.2 mit zentralen Venturi-Fluiddurchlässen 13.5.11 auf. Oberhalb des Venturi-Trägerblechs 13.5.1 war der Filter 3 angeordnet.

In dieser Weise konnten Filteranlagen 1 mit Strömungskanälen 2.4 einer Breite von 2 m und mehr und einer Höhe von 3 m und mehr gebaut werden.

### Figuren 20, 21 und 22

### Autarke, vertikale Wassergewinnungsanlage 14 für aride Gebiete

Die autarke, vertikale Wassergewinnungsanlage 14 umfasste ein vertikales Holzrohr 14.1 einer Länge von 2 m und einer Wanddicke von 15 mm aus zwei vertikalen Rohrhälften 14.1.1, die mit umlaufenden Zapfen-Nut-Press-on-Verschlüsse 14.19 aneinander befestigt waren. Jede der beiden vertikalen Rohrhälften 14.1.1 des Holzrohrs 14.1 konnte mit einer Isolierung aus beispielsweise Zementschaum versehen werden (nicht eingezeichnet). Das vertikale Rohr 14.1 war von einer umlaufenden vertikalen Kaminwand 14.3 aus Holz in einem Abstand von 100 mm umgeben. Die Kaminwand 14.3 bestand aus zwei vertikalen Rohrhälften 14.3.3, die an zwei vertikalen Stoßkanten 14.3.2 aneinanderstießen und ebenfalls durch Feder-Nut-Press-on-Verschlüsse 14.19 zusammengehalten wurden. Die umlaufende Kaminwand 14.3 war mit dem Holzrohr 14.1 durch die Verbindungsstreben 14.3.1 verbunden. Die Verbindungstreben 14.3.1 wiesen einen runden Umriss auf und waren ablösbar, indem sie in die entsprechenden Vertiefungen in der Wand des vertikalen Holzrohrs 14.1 und der umlaufenden Kaminwand 14.3 gesteckt wurden. Auf der Außenseite der Kaminwand 14.3 konnte noch eine Fotovoltaik 14.4, die zwei vertikale Stoßkanten 14.4.1 aufwies, angebracht werden. Durch diese Konfiguration konnte die Wassergewinnungsanlage 14 zur Wartung leicht auseinandergebaut werden. Durch die Anordnung von umlaufender Kaminwand 14.3 und Holzrohr 14.1 wurde ein umlaufender Kamin 14.5 gebildet, indem Luft nach oben strömte. Das untere Ende der Kaminwand 14.3 war zu einem umlaufenden Eingangstrichter 14.5.1 erweitert, was die Strömung der Luft 2.2 förderte. Der Kamin 14.5 verlief bis zu dem abnehmbaren Schutzdach 14.6, das über die Kaminwand 14.3 hinausragte und so das Eindringen von Staub unterdrückte. Das vertikale Holzrohr 14.1 reichte bis 300 mm unter das abnehmbare Schutzdach 14.6. Die so gebildete Öffnung wurde durch einen umlaufenden Vorfilter 14.7 enthielt.

Das abnehmbare Schutzdach 14.6 trug auf seiner äußeren Oberfläche eine Fotovoltaik 14.4, die ein PowerPack 14.18 auflud.

Der Luftstrom 2.2, symbolisiert durch die Pfeile 2, wurde durch den mit einem vom PowerPack 14.18 gespeisten Elektromotor betriebenen, horizontal angeordneten Ventilator 14.11 in den Strömungskanal 2.4 gesaugt und nach unten bewegt. In dem Strömungskanal 2.4 waren zwei Gestellrahmen 10 (hier mit kreisförmigem Umfang; vgl. Figuren 13 und 14) mit Filteranlagen 1 gemäß Figur 1 angeordnet, wobei deren Austrittsöffnungen 3.3 für die Luft 2.2.2 nach unten wiesen. Die Gestellrahmen 10 lagen auf einem horizontal umlaufenden umlaufenden Vorsprung 14.8 auf. Aufgrund dieser Konfiguration konnten die Gestellrahmen 10 mit den Filteranlagen 1 bei der Wartung der Wassergewinnungsanlage 14 problemlos ausgebaut werden. Die Konfiguration wird noch einmal anhand des Querschnitts längs der Schnittlinie E-F in der Figur 21 und anhand des vergrößerten Ausschnitts V des Verbindungsbereichs der Filteranlage 14 gemäß der Figur 22 verdeutlicht.

Durch die Filteranlagen 1 wurde das Wasser in der Luft 2.2 zu Wassertropfen 14.13 kondensiert, die längs der Abtropffäden 14.12 aus Polypropylen in das Wasserauffanggefäß 14.14 tropften und darin gesammelt wurden. Das Wasserauffanggefäß 14.14 war mithilfe seines Auflagerings 14.15, der kreisrunde Löcher aufwies, auf dem umlaufenden Haltering 14.10 gelagert. Das Wasserauffanggefäß 14.14 wies an ihrem tiefsten Punkt ein Ablassrohr 14.16 mit einem durch einen Aktuator (nicht eingezeichnet) gesteuerten Ablasshahn 14.17 auf. Der Ablasshahn 14.17 konnte mit geeigneten elektronischen und mechanischen Aktuatoren automatisch geöffnet werden, um bei einem maximalen Stand des Wassers 14.13 in dem Wasserauffanggefäß 14.14 das Wasser 14.13 in die Wasserleitung 14.17.1 abzulassen, wonach der Ablasshahn 14.17 wieder automatisch geschlossen werden konnte. Zur Steuerung des Aktuators des Ablasshahns 14.17 lag ein Schwimmer 14.23 auf der Wasseroberfläche auf. Wenn das Wasser 14.13 hoch genug gestiegen war, berührte der Schwimmer 14.23 den Sensor und Aktuator 14.22, der den Ablasshahn 14.17 öffnete.

Das Wasserauffanggefäß lagerte auf der Lochplatte 14.21, deren Öffnungen mit den Öffnungen des Auflagerings 14.15 fluidmäßig verbunden waren, sodass die trockene Luft 2.2.2 aus der Lochplatte 14.21 ausströmen konnte. Die Anordnung mit dem Wasserauffanggefäß 14.14 Ware mit einer Isolierung 14.24 aus Glaswolle umgeben.

Die autarke, vertikale Wassergewinnungsanlage 14 konnte mithilfe geeigneter Haltevorrichtungen an einem Gestänge im Abstand zum Boden aufgehängt werden. Die Haltevorrichtungen und das Gestänge waren so ausgelegt, dass sie auch Sandstürmen standhielten (nicht eingezeichnet).

Die autarke, vertikale Wassergewinnungsanlage 14 lieferte auch in Wüstengebieten wie die Atacamawüste und Namibwüste, in denen sich wegen der angrenzenden kalten Meeresströmungen nachts Nebel bilden, kontinuierlich sauberes Trinkwasser.

### Figuren 23 und 24

### Autarke, horizontale, schräggelagerte Wassergewinnungsanlage 15 für aride Gebiete

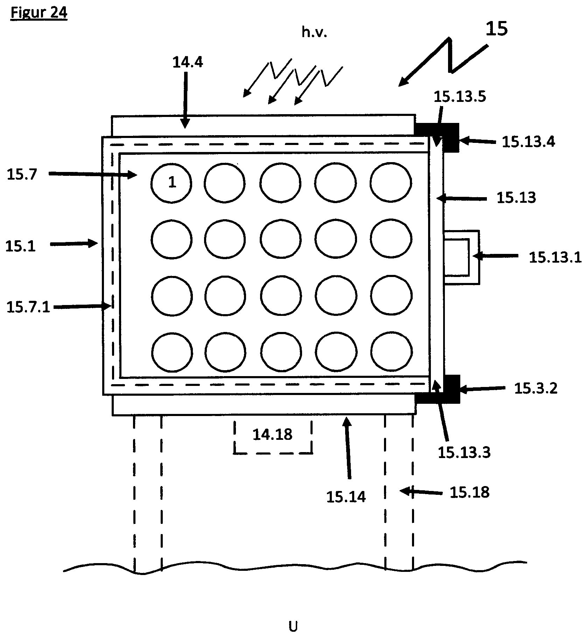

Die zeitweise nur durch den Wind betriebene (Pfeil W, Hauptrichtung des Windes) Wassergewinnungsanlage 15 wies eine Länge von 2 m und umfasste ein Behältnis 15.1 mit kastenförmigem Querschnitt der Abmessungen 1 m x 1 m x 1 m für die Filteranlagen 1 gemäß der Figur 1. Sie wies eine trichterförmig erweiterte Sammelöffnung 15.4 auf. Die im Wesentlichen horizontal gelagerten Filteranlagen 1 und ihre Strömungskanäle 2.4 wurden durch ein Steinschlagschutzgitter 15.5 und einen Vorfilter 15.6 geschützt. Die gesamte Wassergewinnungsanlage 15 war auf dem Untergrund U mithilfe erhöhter Standfüße 15.8 auf einer Auflageplatte 15.14 leicht geneigt gelagert. Die Filteranlagen 1 wurden durch fünf viereckige Lochplatten 15.7 aus Holz rutschfest gelagert. Zur Halterung der Kanten der Lochplatten 14.17 waren an den Wänden 15.1.1 der Oberseite, der Unterseite und einer vertikalen Seite (vgl. Figur 24) die Vertiefungen 15.7.1 vorgesehen. Die durch den Wind erzeugte Strömung in den Strömungskanälen 2.4 wurde noch durch einen vertikal angeordneten Air Multiplier (Dyson) 15.2 der von einem vom PowerPack 14.18 gespeisten Elektromotor betrieben wurde, verstärkt bzw. bei Windstille erzeugt. Das PowerPack 14.18 wurde durch die Fotovoltaik 14.4 auf der oberen horizontalen Seite des Behältnisses 15.1 gespeist. Vor dem vertikalen Dyson 15.2 waren Abtropffäden 15.9 aus Teflon an einer Klebebefestigung 15.9.1 befestigt. Die Abtropffäden für 15.9 leiteten das aus den Filteranlagen 1 austretende kondensierte Wasser 15.12 über ein Abflussrohr 15.10 und einen mittels eines Aktuators und Sensors 14.22 gesteuerten Ablasshahn 14.17 in einen isolierten Kanister 15.11 mit Doppelwand (evakuierte Doppelwand 15.11.2). Der Aktuator 14.22 wurde durch die Berührung des Sensors 14.22 mit dem Schwimmer 14.23 ausgelöst, der mithilfe einer Schwimmerführung 15.11.1 in der geeigneten Position gehalten wurde. Der doppelwandige Kanister 15.11 wies noch einen Druckausgleich mit Rückschlagventil auf (nicht eingezeichnet).

Die Konfiguration wird noch einmal anhand der Figur 24 verdeutlicht, die einen Querschnitt längs der Schnittlinie I-J durch das Behältnis 15.1 zeigt. Die Lochplatte 15.7 hält vier Reihen aus jeweils fünf Filteranlagen 1 und saß mit zwei horizontalen Seitenkanten und einer vertikalen Seitenkante in den korrespondierenden Vertiefungen 15.7.1. An einer vertikalen Seite wies das Behältnis eine horizontal verschiebbare, vertikale Seitenwand 15.13 mit einem Handgriff 15.13.1 auf. Die untere Gleitkante 15.13.3 lief in dem unteren Gleitprofil 15.13.2 und die obere Gleitkante 15.13.5 verlief in dem oberen Gleitprofil 15.13.4. Dadurch konnte die Horizontal verschiebbare, vertikale Seitenwand 15.13 zu Zwecken der Wartung geöffnet werden, und die Lochplatten 15.7 mit den Filteranlagen 1 konnten beispielsweise ausgetauscht werden.

Die autarke, horizontale Wassergewinnungsanlage 15 lieferte auch in Wüstengebieten wie die Atacamawüste und Namibwüste, in denen sich wegen der angrenzenden kalten Meeresströmungen nachts Nebel bilden, kontinuierlich sauberes Trinkwasser.

### Figur 25

### Flugfähige ausgerüstete Filteranlage 1

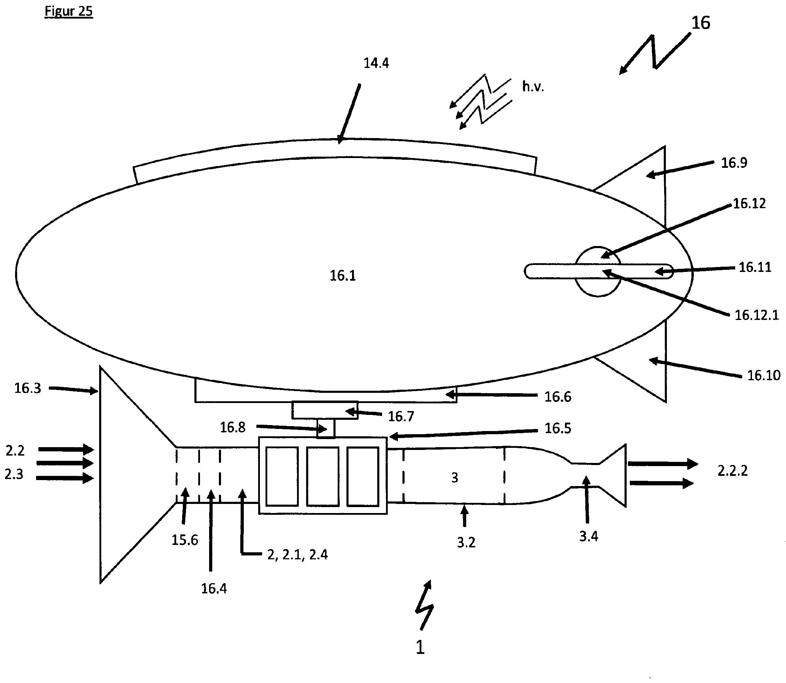

Das Fluggerät 16 gemäß der Figur 25 ohne einen eigenen Antrieb umfasste als Flugkörper 16.1 einen durch Fernsteuerung lenkbaren, mit Helium gefüllten, 15 m langen, antriebslosen Blimp 16.1. Unterhalb des Blimps 16.1. waren fünf Filteranlagen 1 jeweils mit einem kreisrunden Durchmesser von 40 cm, einer Länge von 1,5 m und - in Durchflussrichtung 2.5.1 gesehen - einem Sammeltrichter 16.3 mit einer kreisrunden Öffnung eines Durchmessers von 1 m, einem Air Multilpier (Dyson) 16.4 als Ansaugung und Gebläse, einem Vorfilter 15.6, einer Vorrichtung 2, einem Filter 3 und einer Venturidüse 3.4 an Aufhängungen 16.5 aufgehängt. Die Aufhängungen 16.5 waren mit einer Drehstange 16.8 mit einem Aktuator und Drehmotor 16.7, der an einer Halterung 16.16 am Blimp 16.1 befestigt, drehbar verbunden.

Der Blimp 16.1 wies ein Seitenruder 16.9, und zwei um die Drehachse 16.12.1 drehbare Höhenruder 16.11 mit elektrischen Stellmotoren 16.12 auf. Außerdem wies der Blimp 16.1 an seiner Unterseite einen Stabilisator 16.10 auf.

Die Filteranlagen 1 konnten somit auch als Antriebe verwendet werden.

Als Quelle der elektrischen Energie für die Filteranlagen 1 konnten Batterien, durch Fotovoltaik aufladbare Akkus und PowerPacks und thermoelektrische Elemente (TEE) mit einer radioaktiven Energiequelle verwendet werden (nicht eingezeichnet). Darüber hinaus konnten die flugfähige ausgerüsteten Filteranlagen 1 mit schwenkbaren Kameras und Webcam ausgerüstet werden (nicht eingezeichnet)

Die flugfähige ausgerüsteten Filteranlagen 1 dienten der Reinigung der Atmosphäre 2.2 von Schwebstoffen 2.3 und Noxen, die insbesondere bei Gebäudebränden, Waldbränden, Torfbränden, Explosionen, Vulkanausbrüchen, Reaktorunfällen und Sandstürmen erzeugt wurden. Außerdem konnten mit ihnen atmosphärische Proben bis zur und in der Stratosphäre gesammelt werden. Nicht zuletzt konnten sie zur radioaktiven Dekontaminierung verwendet werden.

Ihre Filter 3 konnten nach der Landung ausgetauscht werden, wonach die Filter 3 vorschriftsgemäß entsorgt wurden. Oder sie konnten mechanisch ausgeklopft und/oder gewaschen und getrocknet werden und dann wiederverwendet werden, wobei das Material, das beim Ausklopfen und/oder Waschen anfiel, ebenfalls vorschriftsgemäß entsorgt wurde.

### Figur 26

### Flugtauglich ausgerüstete Filteranlagen 1

Als Fluggerät mit einem eigenen Antrieb 16.2 wurde eine ferngelenkte Drohne 16.2 mit vier Propellern 16.2.1, die von jeweils einem im Winkel verstellbaren Elektromotor als Antrieb 16.2.2 angetrieben wurden. Für die Elektromotoren 16.2.2 konnten die bei Figur 25 genannten Energiequellen verwendet werden. Die Elektromotoren 16.2.2 waren durch ein starres Gestänge 16.2.3 als Verbindungskörper miteinander verbunden. An dem starren Gestänge 16.2.3 war eine Filteranlage 1 wie bei der Figur 25 beschrieben mit einer starren Aufhängung 16.5, die mit Verbindungsstreben 16.5.1 mit dem starren Gestänge 16.2.3 verbunden waren, befestigt. Die Filteranlage 1 wies in diesem Falle keinen Air Multiplier (Dyson) 16.4 auf, weil der Luftstrom 2.2 durch den Strömungskanal 2.4 aufgrund der Fluggeschwindigkeit der Drohne 16.2 resultierte. Im Zentrum des starren Gestänges 16.2.3 war die zentrale Steuerung und eine Webcam 16.2.4 angeordnet.

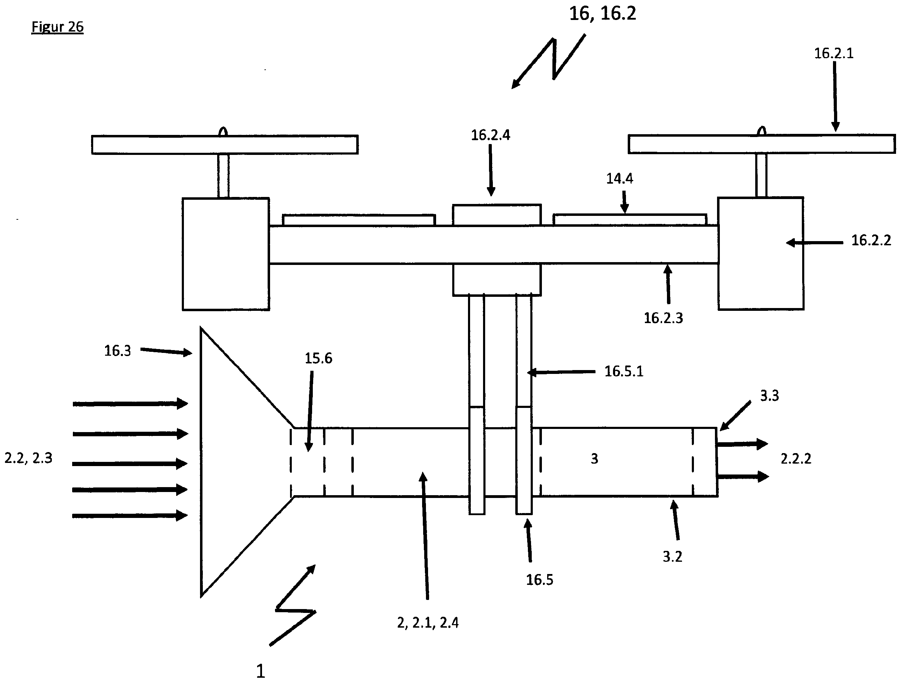

Der große Vorteil der flugtauglich ausgerüsteten Filteranlagen 1 gemäß Figur 26 lag darin, dass je nach Anwendungszweck und Tragfähigkeit der Drohnen 16.2 unterschiedlich große Filteranlagen 1 verwendet werden konnten. Beispielsweise konnten so Filteranlagen 1 mit Drohnen 16.2 in Gebäude, die stark einsturzgefährdet waren, eingeflogen werden.

### Figur 27

### Fahrbar ausgerüstete Filteranlage 1

Das ferngesteuerte Roboterfahrzeug 17 mit der Filteranlage 1 gemäß Figur 1 in Verbindung mit beispielsweise Figur 25 diente vor allem der Probeentnahme und Dekontamination in Gefahrenbereichen und kontaminierten Bereichen wie einsturzgefährdete Gebäude, verbrannte Gebäude und Gelände, explosionsgefährdete Bereiche, durch Noxen verseuchte Bereiche oder radioaktiv kontaminierte Gebäude und Gelände insbesondere in der Dunkelheit.

Das Roboterfahrzeug 17 wies vier individuell steuerbare und mit individuell steuerbaren Elektromotoren 17.2 angetriebene Ballonräder 17.1 an Einzelradaufhängungen auf. Die Einzelradaufhängungen waren mit der Plattform 17.3 beweglich und mithilfe von hydraulischen Stoßdämpfern erschütterungsfrei verbunden. Auf der Plattform 17.3 war ein Steuergerät 17.4 mit Computer, Energiequelle und Aktuatoren 17.6 für die in X-Y-Z-Richtung beweglichen, ausfahrbaren Teleskopstangen 17.7 mit den Gelenken 17.8 der Filteranlage 1 und der in X-Y-Z-Richtung bewegliche, sechsseitige Scheinwerfer-, Nachtsicht-Webcam- und Laseranordnung 17.11.

Die Filteranlage 1 wies - in Durchflussrichtung 2.5.1 gesehen - einen Sammeltrichter 16.3, eine Lochplatte 9.6, einen Vorfilter 15.6, einen Dyson 16.4 und eine Vorrichtung 2 mit einer Vorrichtung 2.8, mit deren Hilfe Teilchen 2.3.4 einer Teilchengröße >400 nm bis 500 µm in den Strömungskanal 2.4 dosierbar waren, mit einem entsprechenden Vorratsgefäß 2.8.1 auf. Die Filteranlage 1 wies des Weiteren - in Durchflussrichtung 2.5.1 hintereinander angeordnet - in dem Filtergehäuse 3.2 die Filter 3a bis 3e mit unterschiedlichen Trennwirkungen vom Mikrometerbereich bis Nanometerbereich auf. Daran schloss sich eine Analyseeinheit 17.10 an, die je nach Ausführung mit Spektrometern, Gaschromatographen Geigerzählern, Partikelmessgeräten und Massenspektrometern ausgerüstet war. Die gewonnenen Daten wurden über die flexiblen Datenleitungen 17.9 zu der Anschlussleiste 17.9.1 auf der Einheit 17.4 übertragen und darin von den Computern ausgewertet.

Die Einheit 17.4 wies in den Ecken zwei Anordnungen 17.4.1 mit jeweils einem Vorwärtsscheinwerfer, einer aus fahrbaren Webcam und einem Laser auf. Außerdem wies sie zwei einander gegenüberliegenden Anordnungen 17.4.2 mit jeweils einem Seitenscheinwerfer, einem Laser und einer ausfahrbaren Webcam sowie zwei einander gegenüberliegenden Seitenscheinwerfern 17.4.3 auf. Entgegen der Fahrtrichtung waren in den Ecken ebenfalls zwei Anordnungen 17.4.4 mit Rückwärtsscheinwerfer, Laser und ausfahrbarer Webcam angebracht.

Nicht zuletzt verfügte die Einheit 17.4 über einen vorderen Look-down-Scheinwerfer und eine vordere ausfahrbare Webcam 17.4.5 sowie einen entsprechenden hinteren Look-down-Scheinwerfer und eine hintere ausfahrbare Webcam 17.4.6.

Auf der Einheit 17.4 waren des Weiteren ein biegsamer verlängerbarer Greifer 17.5 und ein Sender und Empfänger 17.12 mit einer in X-Y-Z-Richtung beweglichen Parabolantenne 17.12.1 und einem Decoder und Speicher 17.12.2 angeordnet.

### Figur 28

### Elektrostat oder Plattenelektrofilter 18 mit einer erschütterungsfrei gelagerten Filteranlage 1 gemäß Figur 1

Auf einem Elektrostaten 18 üblicher und bekannter Bauart mit einer Drahtelektrode 18.1, Sprühelektroden 18.2 und einer Abscheideelektrode 18.5 mit einer elektrisch isolierenden Wand 18.7, einem elektrisch isolierenden Vorfilter 2.1.6 und einer elektrisch isolierenden Lochplatte 18.8 war eine Filteranlage 1 gemäß der Figur 1 elektrisch isoliert und mithilfe hydraulischer Stoßdämpfer erschütterungsfrei gelagert angeordnet. In den Elektrostaten 18 wurden die durch das strömende Abgas G (schwarzer Pfeil) eines Biomasseheizwerks eingetragenen Staubteilchen elektrisch aufgeladen und auf der Abscheideelektrode 18.5 als Staubschicht 18.4 abgeschieden (vgl. 18.3). Nachdem sich genug Staub in der Staubschicht 18.4 angesammelt hatte, wurde er mit einem Klopfwerk 18.6 abgeklopft und fiel nach unten in einen Auffangbehälter (nicht eingezeichnet).

Es zeigte sich aber, dass Stäube im Nanometerbereich, insbesondere lungengängige Nanopartikel aus dem Elektrostaten 18 austraten. Sie konnten indes in der Filteranlage 1 mit 99,9 %iger Effektivität abgefangen werden, sodass von Schwebstoffen und Noxen freie Luft 2.2.2 die Anlage verließ.

### Figuren 29 und 29a

### Filteranlage 1 mit geringem Druckabfall

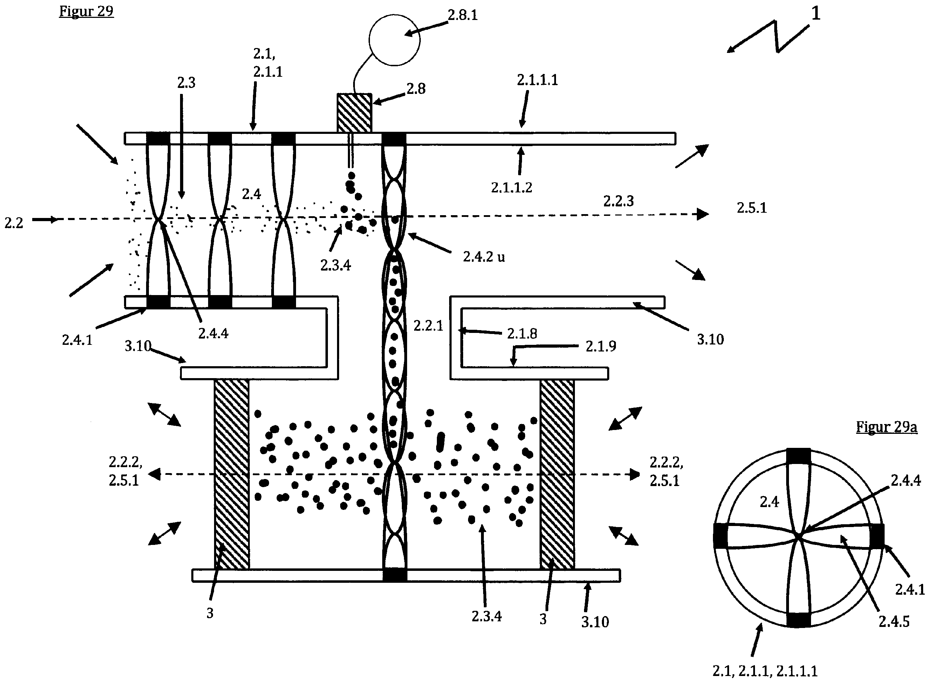

Mit Schwebstoffen 2.3 belastete Luft 2.2 wurde, wie bei der Figur 1 beschrieben, in ein 50 cm langes Strömungsrohr 2.1 einer lichten Weite von 5 cm eingesaugt. Das Strömungsrohr 2.1 wies zehn in der geschlossenen Wand 2.1.1 kreuzförmig angeordnete Paare von piezoelektrischen Ultraschallquellen 2.4.1 auf. Die Anordnung wird in der Figur 29a veranschaulicht. So bildeten sich zwischen zwei einander gegenüberliegenden Ultraschallquellen 2.4.1 jeweils eine stehende Ultraschallwelle 2.4.2, deren gemeinsamer Wellenknoten 2.4.4 auf der Mittellinie des Strömungsrohrs 2.1 lag. In dieser Weise wurde ein Strömungskanal 2.4 gebildet, in dem die Schwebstoffe 2.3 in Durchflussrichtung 2.5.1 transportiert wurden. Dabei wurden sie von den Ultraschallquellen 2.4. 2 zusammengepresst, wodurch ihre Teilchengröße anwuchs und sich ein Fluid 2.2.1 bildete. Hinter dem in Durchflussrichtung 2.5.1 gesehen letzten Doppelpaar gekreuzt angeordneter, stehender Ultraschallwellen 2.4.2 wurden Teilchen 2.3.4 mittels einer Dosiervorrichtung 2.8 aus einem Vorratsgefäß 2.8.1 in den Strömungskanal 2.4 dosiert. Dadurch wurde die Teilchengröße der Schwebstoffe 2.3 auf 800 nm bis 20 µm angehoben. Im weiteren Verlauf war in Durchflussrichtung 2.5.1 gesehen hinter dem letzten Doppelpaar eine weitere Ultraschallquelle 2.4.1 mittig über der Eintrittsöffnung einer 10 cm langen, rohrförmigen, vertikalen Abzweigung 2.1.8 einer lichten Weite von 4 cm angeordnet. Die vertikale Abzweigung 2.1.8 war mit einem zu dem Strömungsrohr 2.1 parallel angeordneten, durchströmbaren Filterrohr 2.1.9 auf dessen halber Länge fluidmäßig verbunden. Das Filterrohr 2.1.9 wies zwei einander gegenüberliegende HEPA-Filter 3 mit zwei Austrittsrohren 3.10 sowie eine weitere Ultraschallquelle 2.4.2, die mit der senkrecht darüber liegenden Ultraschallquelle 2.4.1 korrespondierte, auf. Zwischen diesen beiden Ultraschallquellen 2.4.1 bildete sich eine Überlagerung 2.4.2Ü stehender Ultraschallwellen 2.4.2 mit mehreren Wellenknoten 2.4.4 und ihren stehenden Oberschwingungen 2.4.2. 99,9 % der in dem Fluid 2.2.1 vorhandenen Teilchen 2.3.4 wurden dadurch in einem Winkel von 90° aus dem Strömungsrohr 2.1 in das Filterrohr 2.1.9 gelenkt, wo sich der Fluidstrom 2.2.1 teilte und durch die Filter 3 strömte. Diese filterten die Teilchen 2.3.4 so effizient, dass die spezifische Teilchenzahl N/Vt in den aus den Austrittsrohren 3.10 in Durchflussrichtung 2.5.1 austretenden Luftströmen 2.2.2 unterhalb der Nachweisgrenze lag.

In dem Strömungsrohr 2.1 wurde die durch die Überlagerung 2.4.2Ü hindurchtretende Luft 2.2.3 über das Austrittsrohr 3.10 abgeleitet. Die Luft 2.2.3 wies nur noch 0,1 % der ursprünglich vorhandenen Teilchen 2.3.4 auf.

Die Filteranlage 1 gemäß den Figuren 29 und 29a wies einen vorteilhaften niedrigen Druckabfall auf, sodass große Mengen an Luft 2.2 gereinigt werden konnten.

### Figuren 30 und 30a

### Filteranlage 1 mit Stoßwellengenerator 2.4.1S

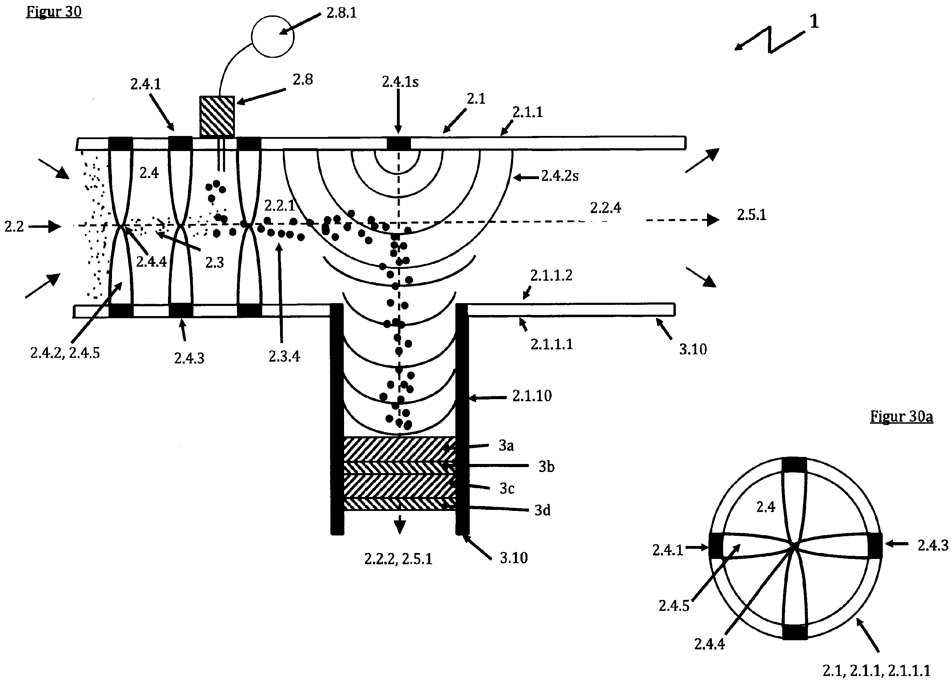

Der Aufbau des Strömungsrohrs 2.1 der Filteranlage 1 gemäß den Figuren 30 und 30a entsprach dem Aufbau des Strömungsrohrs 2.1 der Filteranlage gemäß den Figuren 29 und 29a. Der große Unterschied lag darin, dass die Dosierungsvorrichtung 2.8 für die Dosierung der Teilchen 2.3.4 in den Strömungskanal in Durchflussrichtung 2.1 gesehen vor dem letzten Doppelpaar gekreuzt angeordneter, stehender Ultraschallwellen 2.4.2 angeordnet war. Dadurch konnten die Teilchen 2.3.4 in dem Fluid 2.2.1 noch einmal fokussiert werden, bevor sie den Stoßwellen 2.4.2S, die von einem elektrohydraulischen Stoßwellengenerator 2.4.1S generiert wurden, ausgesetzt wurden. Der hydraulische Stoßwellengenerator 2.4.2S war mittig über der Eintrittsöffnung eines gegen die Wirkung von Stoßwellen 2.4.2S verstärkten Filterrohrs 2.1.10 in der geschlossenen Wand 2.1.1 befestigt. Durch die Stoßwellen 2.4.2S wurden 99,99 % der Teilchen 2.3.4 in einem Winkel von 90° gegenüber der ursprünglichen Durchflussrichtung 2.5.1 in das Filterrohr 2.1.10 auf eine Filteranordnung 3a; 3b; 3c; 3d von horizontal angeordneten Filtern unterschiedlicher Trennwirkung gelenkt. Die Trennwirkung der Filteranordnung reichte von einer minimalen Teilchengröße von 50 µm (3a), einer minimalen Teilchengröße von 1 µm (3b), einer minimalen Teilchengröße von 800 nm (3c) bis zu einer minimalen Teilchengröße von 400 nm (3d). Um die Filter 3 vor der Einwirkung der Stoßwellen 2.4.1S zu schützen, waren die Filter 3 mithilfe von Metallgittern (nicht eingezeichnet) befestigt.

Die filtrierte Luft 2.2.2 trat aus dem Austrittsort 3.10 auf und enthielt die Teilchen 2.3.4 in einer spezifischen Teilchenzahl N/Vt unterhalb der Nachweisgrenze. Das durch die Stoßwellen 2.4.2S gereinigte und über das zweite Austrittsrohr 3.10 austretende Fluid 2.2.4 wies nur noch 0,01 % der ursprünglich vorhandenen Teilchen 2.3.4 auf.

### Figuren 31 und 31a

### Filteranlage 1 mit transversalen Ultraschallwellen 2.4.2T

In einem 60 cm langen Strömungsrohr 2.1 waren an der Innenseite 2.1.1.2 der geschlossenen Wand 2.1.1 in Durchflussrichtung 2.5.1 gesehen sechs Paare einander gegenüberliegender Schallquellen 2.4.1 für transversale Ultraschallwellen 2.4.2T einerseits und Reflektoren 2.4.3 andererseits hintereinander befestigt. Die Figur 31a veranschaulicht diese Anordnung anhand des Querschnitts längs der Schnittlinie KL. Außerdem waren vier Paare VK von versetzt zueinander angeordneten Schallquellen 2.4.1 für transversale Ultraschallwellen 2.4.2T hintereinander angeordnet. Die Luft 2.2 mit den Schwebstoffen 2.3 wurde in Durchflussrichtung 2.5.1 durch das Strömungsrohr 2.1 geblasen. Die Schwebstoffe 2.3 sammelten sich in den Druckknoten 2.4.4, wo sie aggregierten und agglomerierten. Dadurch resultierte in dem Fluid 2.2.1 Teilchen 2.3.4 einer Teilchengröße von 800 nm bis 2 µm, die mithilfe eines Medium-Filters 3 mit einer Effizienz von 99,99 % abgetrennt werden konnten, sodass in dem Fluid 2.2.2, dass durch das Austrittsrohr 3.10 austrat, die Teilchenkonzentration höchstens 0,01 % betrug.

Der Vorteil dieser Filteranlage war, dass sie für die Reinigung von besonders verschmutzter Luft 2.2; 2.3 geeignet war.

### Figuren 32 und 32a

### Filteranlage 1 mit transversalen Ultraschallwellen 2.4.2T

In einem 60 cm langen Strömungsrohr 2.1 einer lichten Weite von 5 cm waren auf der Mittellinie 12 Ultraschallquellen 2.4.1 für transversale Ultraschallwellen 2.4.2T im Abstand von 4 cm in Durchflussrichtung 2.5.1 gesehen hintereinander angeordnet. Die Figur 32a veranschaulicht diese Anordnung anhand des Querschnitts längs der Schnittlinie MN. Auch hier sammelten sich die Schwebstoffe 2.3 in den Drucknoten an und wurden im weiteren Verlauf agglomeriert und aggregiert, sodass ein Fluid 2.2.1 mit Teilchen 2.3.4 resultierte, die von der Filteranordnung 3a (kleinste filtrierbare Teilchengröße 1,5 µm), 3b (kleinste filtrierbar Teilchengröße 800 nm) und 3c kleinste filtrierbar Teilchengröße 400 nm) mit einer Effizienz von 99,999 % aufgefangen wurden.

Auch diese Filteranlage 1 eignete sich hervorragend für die Reinigung von besonders verschmutzter Luft 2.2; 2.3.

### Figur 33

### Autarker Frischluftbaum 19

Der Frischluftbaum 19 bestand aus Gründen des Gewichts im Wesentlichen aus eloxierten Aluminium und wies eine Höhe von 5,5 m ab Oberfläche des Bodens 19.8 auf. Die größte leicht zum Boden 19.8 geneigte, das hohle Trägerrohr 19.7 ("Stamm") umlaufende, laubgrün gefärbte Scheibe 19.5.1 mit umlaufender laubgrün gefärbter Abtropfkante 19.2 wies einen Durchmesser von 2 m auf. Die weiteren laubgrün gefärbten Scheiben 19.5.1 mit umlaufender laubgrüner Abtropfkante 19.2 wiesen beliebige kleinere Durchmesser auf.

Der Stamm 19.7 einer lichten Weite von 30 cm wies einen dunkelbraunen Anstrich mit Rindenstruktur auf und war auf einer Länge von 2 m in dem Bereich 19.7.1 in dem Boden 19.8 verankert. In einer Stammhöhe von 2,5 m war der Auslassbereich 19.5 für die gereinigte Luft 2.2. mit einer passgenauen Einsteckbefestigung 19.6 fixiert. Der Auslassbereich 19.5 wies sechs übereinander angeordnete Scheiben 19.5.1 auf, zwischen denen die gereinigte Luft 2.2.2 aus vertikalen Schlitzen austrat.

Auf dem Auslassbereich 19.5 war die Filteranlage 1 mit Ultraschallquellen 2.4.1 und stehenden Ultraschallwellen 2.4.2 sowie Filter 3b (kleinste filtrierbare Teilchengröße 400 nm) und 3a (kleinste filtrierbar Teilchengröße 1 µm) austauschbar fixiert (die Vorrichtung zum Austauschen der Filter ist nicht eingezeichnet. Der Optik halber waren im Bereich der Filteranlage 1 ebenfalls drei Scheiben 19.5.1 übereinander angeordnet.

Oberhalb der Filteranlage 1 befand sich der Ansaugbereich 19.4 für Luft 2.2 mit Schwebstoffen 2.3. Die Luft 2.2; 2.3 wurde mithilfe eines mit einem Elektromotor betriebenen Ventilators 7.4 durch vertikale, durch Fliegengitter geschützte Schlitze als Ansaugöffnungen angesaugt.

Oberhalb des Ansaugbereichs 19.4 befand sich eine scheibenförmige, laubgrün gefärbte Abdeckung 19.1 auf der eine Fotovoltaikanlage 14.4 angebracht war, die ein PowerPack 14.18 mit Strom versorgte.

Um den natürlichen Eindruck des Frischluftbaums 19 zu verstärken, konnten in die Scheiben noch dunkelbraune Aststrukturen aufgemalt oder eingeprägt werden.

Der autarke Frischluftbaum 19 war hervorragend dazu geeignet, auf belebten Plätzen und längs stark befahrener Verkehrsstraßen aufgestellt zu werden und die Umgebung mit gereinigte Luft 2.2.2 effizient zu versorgen.

### Figur 34

### Pflanztopf 20 als Luftreiniger

Der Pflanztopf 20 umfasste einen Topf 20.2 aus Kunststoff, in dem eine Pflanze 20.1 mit Wurzelknollen 20.1.1 und Wurzelwerk 20.1.2 in der Pflanzenerde 20.3 wuchs. Der Topf 20.2 wies einen wurzeldurchlässigen Boden 20.2.1 auf, durch den das Wurzelwerk 20.1.2 in einen Hohlraum als Strömungskanal 2.4 austrat. Der Topf 20.2 war mithilfe von Auflagezapfen 20.4 in einem Übertopf 20.5 aus Kunststoff gelagert. Dabei waren an der Innenseite des Übertopfs 20.5 Auflagezapfen 20.4.1 mit halbkreisförmigem Querschnitt befestigt, in die korrespondierende, an der Außenseite des Topfes 20.2 angebrachte Auflagezapfen 20.4.2 mit kreisförmigem Querschnitt eingriffen. Durch diese Anordnung wurde zwischen dem Topf 20.2 und der Innenseite des Übertopfs 20.5 ein umlaufender Luftkanal 20.6 gebildet, durch den verschmutzte Luft 2.2; 2.3 in den Luftkanal 2.4 eingesaugt wurde. Darin befanden sich mehrere durch Halterungen 20.5.1 befestigte, einander gegenüberliegende Ultraschallsender 2.4.1, zwischen denen sich horizontale, stehende Ultraschallwellen 2.4.2 mit mindestens zwei Wellenknoten 2.4.4 bildeten.

Das resultierende Fluid 2.2.1 wurde durch einen Biokohlefilter oder VOC-Filter 20.7 gesaugt und von flüchtigen organischen Verbindungen befreit. Unterhalb des Biokohlefilter 20.7 war ein horizontalgelagertes Eintrittsrohr 2.5.2 zu einem batteriebetriebenen Ventilator als Förderervorrichtung 2.5, der das Fluid 2.2.1 ansaugte und zu einem Filter 3 mit einer kleinsten filtrierbaren Teilchengröße von 400 nm leitete. Hinter dem Filter trat die gereinigte Luft 2.2.2 aus dem Austrittsrohr 3.10 in die Umgebung aus.

Die Pflanztöpfe 20 konnten in ihren Größen, ihren Farben und ihren Pflanzen 20.1 breit variiert werden und somit hervorragend den räumlichen und dekorativen Bedingungen angepasst werden. Außerdem konnten Pflanzen 20.1 verwendet werden, die in der Lage waren, Schadstoffe aus der Luft aufzunehmen und größere Mengen an Sauerstoff in die Umgebung abzugeben. Insgesamt resultierte eine "grüne" Raumluftreinigung.

### Figur 35

### Pflanztopf 20 als Luftreiniger

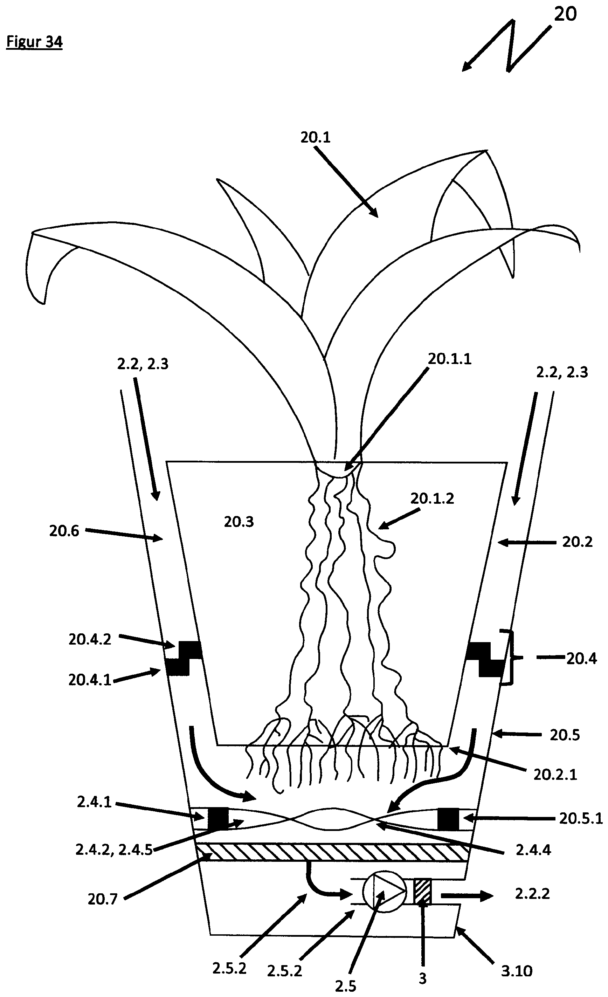

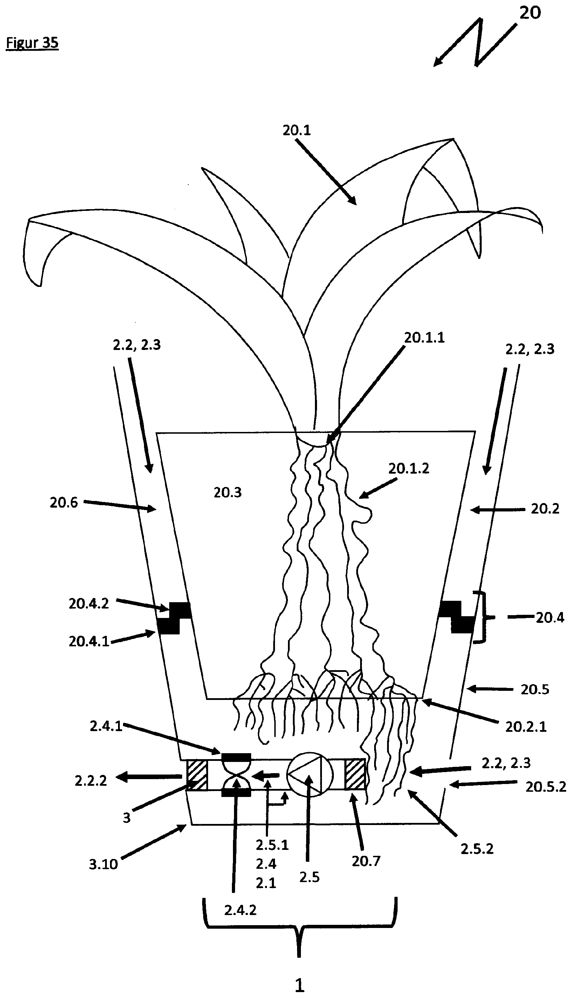

Der Pflanztopf 20 gemäß der Figur 35 unterschied sich von dem Pflanztopf gemäß der Figur 34 dadurch, dass unterhalb des wurzeldurchlässigen Bodens 20.2.1 in dem von dem Übertopf 20.5 und dem Topf 20.2 gebildeten Hohlraum eine horizontale Filteranlage 1 angebracht war, die Luft 2.2; 2.3 zum einen durch den Luftkanal 20.6 und zum anderen durch eine Öffnung 20.5.2 in dem Übertopf 20.5 in die horizontale Filteranlage 1 durch einen Biokohlefilter 2.7 mithilfe eines Ventilators als Förderervorrichtung 2.5 ansaugte. Die Teilchengröße in dem vorgereinigten Luftstrom 2.2; 2.3 wurde mithilfe stehender Ultraschallwellen 2.4.2 auf 600 nm bis 1,5 µm erhöht, wonach die Teilchen 2.3.4 durch den Filter 3 mit einer kleinsten filtrierbaren Teilchengröße von 400 nm mit einer Effektivität >99,9% abgetrennt wurden. Die filtrierte Luft 2.2.2 wurde über das Austrittsrohr 3.10 in die Umgebung abgelassen.

Die Pflanztöpfe 20 gemäß der Figur 35 wiesen die gleichen Vorteile wie die Pflanztöpfe 20 gemäß der Figur 34 auf.

## Patentansprüche

1. Filteranlagen (1) für Schwebstoffe (2.3) einer Teilchengröße von 400 pm bis ≤500 µm in strömenden Fluiden (2.2), die Filteranlagen (1) jeweils umfassend mindestens eine Vorrichtung (2) in von den Fluiden (2.2) durchströmbaren und in den Fluiden (2.2) fixierten Körpern (2.6), ausgewählt aus der Gruppe, bestehend aus fluiddurchlässigen, schwingenden Membranen, Schaumstoffen, Netzen, Fäden und Geweben, die Vorrichtung des Weiteren umfassend mindestens einen Strömungsbereich (2.1) zum Durchströmen von den Fluiden (2.2, 2.2.1), wobei
- der mindestens eine Strömungsbereichs (2.1) mindestens zwei Paare einander zugeordneter und einander gegenüberliegender Piezo-Ultraschallsender (2.4.1) zur Erzeugung des mindestens einen stationären akustischen Ultraschallfelds (2.4.2) aufweist, wobei die Piezo-Ultraschallsender konfiguriert sind, mindestens ein stationäres akustisches Ultraschallfeld (2.4.2) eines Leistungspegels von 40 bis 250 dB aus stehenden, modulierten und unmodulierten Ultraschall-Longitudinalwellen (2.4.2) und ihren Oberschwingungen und/oder Ultraschall-Transversalwellen (2.4.2T) und ihren Oberschwingungen (2.4.2) einer Frequenz von 1 kHz bis 800 MHz zu erzeugen,
- wobei des Weiteren mindestens eine elektronische Vorrichtung zur Erzeugung, Überwachung und Stabilisierung des mindestens einen stehenden akustischen Ultraschallfelds (2.4.2) mittels mindestens einer Rückkoppelungsschleife vorhanden ist, und die Vorrichtung so konfiguriert ist, dass sie die Piezo-Ultraschallsender (2.4.1) mit einem Energieeintrag von 0,25 W bis 1 kW versorgt,
- wobei des Weiteren mindestens eine Fördervorrichtung (2.5) für einen Volumenstrom für die Fluide (2.2, 2.2.1) in und durch den mindestens einen Strömungsbereich (2.1) hindurch vorhanden ist,
- wobei des Weiteren mindestens eine fluidmäßige Verbindung (2.7) des mindestens einen Strömungsbereichs (2.1) mit mindestens einem Filter (3) einer kleinsten filtrierbaren Teilchengröße von 50 nm bis 1.000 nm, der von den Fluiden (2.2.1) durchströmbar ist.

2. Filteranlagen (1) nach Anspruch 1, wobei die mindestens eine Vorrichtung (2) konfiguriert ist, sodass strömende Fluide (2.2.1) mit Schwebstoffen (2.3.1) einer spezifischen Teilchenzahl (N/Vt) von unterhalb der Nachweisgrenze bis <0,1% erhältlich sind.

3. Filteranlagen (1) nach Anspruch 1 oder Anspruch 2, wobei die mindestens eine Vorrichtung (2) konfiguriert ist, sodass strömende Fluide (2.2.1) mit Schwebstoffen (2.3.2) einer spezifischen Teilchenzahl (N/Vt) von unterhalb der Nachweisgrenze bis <0,1% sowie mit Schwebstoffen (2.3.3) mit Teilchengrößen von ≥50 nm bis ≤200 nm und einer spezifischen Teilchenzahl (N/Vt) >99 % und/oder mit Schwebstoffen (2.3.4) mit Teilchengrößen ≥400 nm bis 500 µm einer spezifischen Teilchenzahl (N/Vt) >99 % erhältlich sind.

4. Filteranlagen (1) nach einem der Ansprüche 1 bis 3, wobei die Vorrichtung des Weiteren umfassend mindestens ein Strömungsrohr (2.1) mit einer geschlossenen Wand (2.1.1), die mindestens einen Strömungskanal (2.4) mit dem Strömungsbereich umschließt oder umschließen, zum Durchströmen von den Fluiden (2.2, 2.2.1), wobei
das mindestens eine Strömungsrohr (2.1) mindestens zwei Paare aus einander zugeordneten und einander gegenüberliegenden Piezo-Ultraschallsender (2.4.1), die auf der Außenseite (2.1.1.1) und/oder der Innenseite (2.1.1.2) und/oder in der jeweiligen geschlossenen Wand (2.1.1) selbst derart angeordnet sind, dass sich die gedachten Verbindungslinien zwischen den jeweiligen Paaren unter einem Winkel von 90° kreuzen, zur Erzeugung des mindestens einen stationären akustischen Ultraschallfelds (2.4.2) aufweist.

5. Filteranlagen (1) nach einem der Ansprüche 1 bis 4, **dadurch gekennzeichnet, dass** die Fluide (2.2, 2.2.1, 2.2.2) gasförmig, flüssig, gelartig oder Mischphasen sind.

6. Filteranlagen (1) nach einem der Ansprüche 1 bis 5, **dadurch gekennzeichnet, dass**
- das mindestens eine Strömungsrohr (2.1) mindestens eine Vorrichtung (2.8) zur Eindosierung von Teilchen (2.3.5) einer Teilchengröße >400 nm bis 500 µm in den mindestens einen Strömungskanal (2.4) aufweistund/oder dass dem mindestens einen Strömungsbereich (2.1) mindestens eine Vorrichtung (2.8) zugeordnet ist, und/oder
- das mindestens eine Strömungsrohr (2.1) und/oder der mindestens eine Strömungsbereich (2.1) vor und/oder nach dem mindestens zu einem Filter (3) mindestens eine Abzweigung (2.1.8) zur Ausleitung der Schwebstoffe (2.3.3), (2.3.4) und/oder (2.3.5) aus dem mindestens einen Strömungskanal (2.4) mittels der Überlagerung (2.4.2Ü) stehender Ultraschall-Longitudinalwellen mit ihren Oberschwingungen und/oder mittels Ultraschall-Stoßwellen (2.4.2S).

7. Filteranlagen (1) nach einem der Ansprüche 1 bis 6, **dadurch gekennzeichnet, dass** der mindestens eine Filter (3) einer kleinsten filtrierbaren Teilchengröße von 50 nm bis 1000 nm aus der Gruppe, bestehend aus Hochleistungs-Partikelfiltern EPA, Schwebstofffiltern HEPA, Hochleistungs-Schwebstofffiltern ULPA, Medium-Filtern, druckverlustfreien Röhrchenfiltern, Vorfiltern, Automobilinnenraumfiltern, Kuchenfiltern, Querstromfiltern, flexible Filtern, starre Filtern, Industriefiltern, Vliesen, Rückspülfiltern Wasserfiltern, Anschwemmfiltern, Raumfiltern, Schichtbettfiltern, Membranen, Magnetfiltern, Graphenfiltern, Venturi-Wäschern, Elektrostaten, optischen Abscheidern, Gasseparatoren, Gaswäschern, SCR-Katalysatoren und OCR-Katalysatoren, ausgewählt sind, wobei die Materialien aus der Gruppe, bestehend aus geäzten Metallen, gesinterten Metallen, Metallschäumen, Metallfäden, Metallwolle, Metallgewebe, monolithischen, durchlässigen Kunststoffen, Kunststoffgeweben, Kunststofffäden, Kunststoffwolle, Kunststoffgeweben, Kunststoffschäumen, Papieren, Pappen, Cellulosefäden, Cellulosegeweben, Cellulosewollen, Ligninfäden, Ligninwollen, Ligningeweben, Naturfasern, Naturwolle, Naturfasergeweben, Naturfasergewirken, Naturstoffschäumen, Schwämmen, Glasfasern, Glaswolle, Glasfritten, monolithischen, durchlässigen Keramiken, Keramikfritten, Keramikfasern, Keramikgeweben, Keramikwollen, Keramikschäumen, Borfasern und Steinfasern sowie Kompositmaterialien aus mindestens zwei der vorstehend genannten Materialien, ausgewählt sind.

8. Filteranlagen (1) nach einem der Ansprüche 1 bis 7, **dadurch gekennzeichnet, dass** sie erschütterungsfrei gelagert, flugtauglich, fahrbar und/oder schwimmfähig ausgerüstet sind und über Ansaugungen und Gebläse (16.4) verfügen oder keine Ansaugungen und Gebläse (16.4) haben.

9. Filteranlagen (1) nach einem der Ansprüche 1 bis 8, **dadurch gekennzeichnet, dass** die mindestens eine fluidmäßige Verbindung (2.7) von mindestens einem Venturi-Rohrstück (2.7.1) mit einer fluiddurchlässigen Wand (2.7.2) gebildet ist, das sich an das mindestens eine Strömungsrohr (2.1) anschließt und dessen Wand (2.7.2) mindestens zwei auf der Innenseite entgegen der Durchflussrichtung (2.5.1) geneigte, ringförmige Anstellbleche (2.7.3), die gemäß dem Ringventuriprinzip wirken, aufweist, wobei sich in Durchflussrichtung (2.5.1) gesehen hinter jedem ringförmigen Anstellblech (2.7.3) jeweils mindestens vier Öffnungen (2.7.4) befinden, durch die die Fluide (2.2.1) zu mindestens einem Filter (3) ableitbar sind, oder alternativ dass(a) der mindestens eine Filter (3) einer kleinsten filtrierbaren Teilchengröße von 50 nm bis 1000 nm das mindestens eine Venturi-Rohrstück (2.7.1) in der Form einer Manschette (3.3) umgibt, die wiederum in einem Abstand von mindestens einer manschettenförmigen, geschlossenen Wand (3.4) umschlossen ist, sodass mindestens ein Sammelspalt (2.7.6) für das filtrierte Fluid (2.2.2) gebildet ist, wobei die mindestens eine Wand (3.4) mindestens eine fluidmäßige Verbindung (3.1) mit der Austrittsvorrichtung (3.2) für die Ableitung des filtrierten Fluids (2.2.2) aufweist oder alternativ (b) das mindestens eine Venturi-Rohrstück (2.7.1) von mindestens einem nach außen geschlossenen, manschettenförmigen Sammelspalt (2.7.7) zur Sammlung und Zuleitung des Fluids (2.2.1) über mindestens ein Sammelrohr (2.7.8) zu mindestens einem Filter (3) umschlossen ist.

10. Filteranlagen (1) nach Anspruch 9, **dadurch gekennzeichnet, dass** (a) das aus dem mindestens einen Filter (3.3) austretende Fluid (2.2.2) in dem mindestens einen Sammelspalt (3.4.1) gesammelt und direkt über mindestens eine Austrittsvorrichtung (3.2) ableitbar und/oder über mindestens eine Rückführung (2.7.5) und mindestens eine Austrittsöffnung (2.7.5.1) in das in dem mindestens einen Fortsetzungsstück (2.1.2) des mindestens einen Strömungsrohrs (2.1) strömende Fluid (2.2.2) rückführbar ist oder alternativ (b) das aus dem mindestens einen Filter (3) austretende filtrierte Fluid (2.2.2) direkt über mindestens eine fluidmäßige Verbindung (3.1) mindestens einer Austrittsvorrichtung (3.2) zugeleitet wird und/oder das über mindestens eine Rückführung (2.7.5) und mindestens eine Austrittsöffnung (2.7.5.1) in das in dem mindestens einen Fortsetzungsstück (2.1.2) des mindestens einen Strömungsrohrs (2.1) strömende Fluid (2.2.2) rückführbar ist.

11. Filteranlagen (1) nach einem der Ansprüche 1 bis 10, **dadurch gekennzeichnet, dass** sich die lichte Weite (2.1.4) des mindestens einen Strömungsrohrs (2.1) und/oder des mindestens einen Strömungsbereichs in Durchflussrichtung (2.5.1) stetig und/oder sprunghaft verkleinert, sodass sich das von Schwebstoffen (2.3) freie Totvolumen (2.3.5) der Fluide (2.2, 2.2.1) verringert.

12. Filteranlagen (1) nach einem der Ansprüche 1 bis 11, **dadurch gekennzeichnet, dass** die Schwebstoffe und Teilchen (2.3.3), (2.3.4) und/oder (2.3.5) vor und/oder nach dem mindestens einen Filter (3) einer kleinsten filtrierbaren Teilchengröße von 50 nm bis 1000 nm mithilfe von Stoßwellen (2.4.2S) und/oder von Überlagerungen (2.4.2Ü) stehender Longitudinalwellen mit ihren stehenden Oberschwingungen aus dem mindestens einen Strömungskanal (2.4) in mindestens eine Abzweigung (2.1.8) des mindestens einen Strömungsrohrs (2.1) und/oder des mindestens einen Strömungsbereichs (2.1) ausleitbar sind.

13. Filtrierverfahren, bei dem man in mindestens einer Filteranlage (1) gemäß einem der Ansprüche 1 bis 12
(I) Fluide (2,2), die Schwebstoffe (2.3) einer Teilchengröße von 400 pm bis ≤500 µm enthalten, mithilfe mindestens einer Fördervorrichtung (2.5) in und durch mindestens ein Strömungsrohr (2.1) und/oder mindestens einen Strömungsbereich (2.1) mindestens einer Vorrichtung (2) durch mindestens einen Strömungskanal (2.4) fördert, wobei das mindestens eine Strömungsrohr (2.1) von einer geschlossenen Wand (2.1.1) umschlossen ist,
(II) in den strömenden Fluiden (2.2) und/oder in den von den Fluiden (2.2) durchströmten und in den Fluiden (2.2) fixierten Körpern (2.6) mittels Ultraschallwellen (2.4.2) einer Frequenz von 1 kHz bis 800 MHz mindestens ein stationäres akustisches Ultraschallfeld (2.4.2) eines Leistungspegels von 40 bis 250 dB und eines Energieeintrags in den mindestens einen Strömungskanal (2.4) von 0,25 W bis 1 kW erzeugt, das aus stehenden, modulierten und unmodulierten Ultraschall-Longitudinalwellen (2.4.2) und ihren Oberschwingungen und/oder Ultraschall-Transversalwellen (2.4.2T) und ihren Oberschwingungen besteht, wobei man
- im Falle des mindestens einen Strömungsbereichs (2.1) das mindestens eine Ultraschallfeld (2.4.2) durch mindestens zwei Paare einander zugeordneter und einander gegenüberliegender Piezo-Ultraschallsender (2.4.1) erzeugt,
- im Falle des mindestens einen Strömungsrohrs (2.1) das mindestens eine Ultraschallfeld durch mindestens zwei Paare aus einander zugeordneten und einander gegenüberliegenden Piezo-Ultraschallsender (2.4.1) erzeugt,
- wobei das mindestens eine stehende akustische Ultraschallfeld (2.4.2) mit mindestens einer elektronischen Vorrichtung zur Erzeugung von Rückkopplungsschleifen erzeugt, überwacht, moduliert und stabilisiert wird und
- wobei die Fluide (2.2) und im weiteren Verlauf des Strömungskanals (2.4) die Fluide (2.2.1) durch mindestens eine Fördervorrichtung (2.5) in Förderrichtung (2.5.1) in und durch das mindestens eine Strömungsrohr (2.1) und/oder den mindestens einen Strömungsbereich (2.1) hindurch und durch mindestens eine fluidmäßige Verbindung (2.7) des mindestens einen Strömungsrohrs (2.1) und/oder des mindestens einen Strömungsbereichs (2.1) zu mindestens einem Filter (3) einer kleinsten filtrierbaren Teilchengröße von 50 nm bis 1000 nm, der von den Fluiden (2.2.1) durchströmt wird,
(III) die Fluide (2.2) und im weiteren Verlauf des Strömungskanals die behandelten Fluide (2.2.1) durch mindestens eine Fördervorrichtung (2.5) in Förderrichtung (2.5.1) in und durch das mindestens eine Strömungsrohr (2.1) und/oder den mindestens einen, Strömungsbereich (2.1) hindurch, durch mindestens eine, fluidmäßige Verbindung (2.7) des mindestens einen Strömungsrohrs (2.1) und/oder des mindestens einen Strömungsbereichs (2.1) zu mindestens einem Filter (3) einer kleinsten filtrierbaren Teilchengröße von 50 nm bis 1000 nm, der von den Fluiden (2.2.1) durchströmt wird, gefördert werden,
(IV) durch den mindestens einen Filter (3) aus den strömenden Fluiden (2.2.1) abgetrennt werden, wonach die über mindestens eine fluidmäßige Verbindung (2.7) des mindestens einen Filters (3) mit mindestens einer Austrittsvorrichtung (3.3; 3.4) austretenden, filtrierten Fluide (2.2.2) die Schwebstoffe (2.3.1), (2.3.2), (2.3.3), (2.3.4) und (2.3.5) in spezifischen Teilchenzahlen (N/Vt) unterhalb der jeweiligen Nachweisgrenze und/oder bis zu 0,1 % enthalten, wobei N = Teilchenzahl, V = Volumen [m³], t = Zeit [h], und die Prozentangaben auf die jeweiligen spezifischen Starterzahlen (N/Vt) der jeweiligen Schwebstoffe = 100 % bezogen sind, und/oder
(V) die Schwebstoffe (2.3.1), (2.3.2), (2.3.3), (2.3.4) und (2.3.5) vor und/oder nach dem mindestens einen Filter (3) mithilfe von Ultraschallstoßwellen (2.4.2S) und/oder von Überlagerungen stehender Ultraschall-Longitudinalwellen (2.4.2) mit ihren stehenden Oberschwingungen aus dem mindestens einen Strömungskanal (2.4) in mindestens eine Abzweigung (2.1.8) des mindestens einen Strömungsrohrs (2.1) und/oder des mindestens einen Strömungsbereichs (2.1) ausgeleitet mindestens einem weiteren Filter (3) zugeleitet und filtriert werden.

14. Verwendung der Filteranlagen (1) gemäß einem der Ansprüche 1 bis 12 und/oder des Filtrierverfahren gemäß Anspruch 13 für die Entfernung von organischen, anorganischen und/oder biogenen, gasförmigen, gelartigen, flüssigen und/oder festen Schwebstoffen (2.3) einer Teilchengröße von 400 pm bis ≤500 µm und/oder von sonstigen molekulardispersen Noxen aus flüssigen, gelartigen und/oder gasförmigen Fluiden (2.2) und/oder für ihre chemische Umsetzung in diesen Fluiden (2.2).

15. Gerätschaften und Anlagen, ausgewählt aus der Gruppe, bestehend aus Straßen, Brücken, Gebäuden, Plätzen, Stadien, Klimaanlagen, Kliniken, medizinischen Geräten, elektronischen Geräten, Laboren, Labs-on-a-Chip, Reinraumlaboren, Kraftwerken, Verbrennungsanlagen, chemischen Anlagen, Gastrennanlagen, kerntechnischen Anlagen, Fortbewegungsmitteln zu Land, zu Wasser, zur Luft, unter der Erde und unter Wasser und Innenräumen von Raumstationen, **dadurch gekennzeichnet, dass** sie mindestens eine Filteranlage (1) gemäß einem der Ansprüche 1 bis 12 enthalten.

## Claims

1. Filter systems (1) for suspended matter (2.3) with a particle size of 400 pm to ≤500 µm in flowing fluids (2.2), the filter systems (1) each comprising at least one device (2) in objects (2.6), through which the fluids (2.2) are flowable and which are fixed in the fluids (2.2), selected from the group consisting of fluid-permeable, vibrating membranes, foams, nets, threads and fabrics, the device comprising at least one flow area (2.1) for the fluids (2.2., 2.2.1) to flow through, wherein
- the at least one flow area (2.1) has at least two pairs of mutually associated and opposing piezoelectric ultrasonic transmitters (2.4.1) for generating the at least one standing acoustic ultrasonic field (2.4.2), the piezoelectric ultrasonic transmitters being configured to generate at least one standing acoustic ultrasonic field (2.4.2) having a power level of 40 dB to 250 dB of standing, modulated and non-modulated ultrasonic longitudinal waves (2.4.2) and their harmonics and/or of ultrasonic transverse waves (2.4.2T) and their harmonics (2.4.2) of the frequency of 1 kHz to 800 MHz,
- wherein at least one electronic device for generating, monitoring and stabilizing the at least one standing acoustic ultrasonic field (2.4.2) with at least one feedback loop is furthermore present, and the device is configured to supply the piezoelectric ultrasonic transmitters (2.4.1) with an energy input of 0.25 W to 1 kW,
- wherein at least one conveyor device (2.5) for a volume flow for the fluids (2.2, 2.2.1) into and through the at least one flow area (2.1) is furthermore present,
- wherein at least one fluid connection (2.7) of the at least one flow area (2.1) with at least one filter (3) having a smallest filterable particle size of 50 nm to 1000 nm is permeable for fluids (2.2.1).

2. Filter systems (1) according to claim 1, wherein the at least one device (2) is configured so that flowing fluids (2.2.1) with suspended matter (2.3.1) having a specific particle number (N/Vt) from below the detection limit up to <0.1% are obtainable.

3. Filter systems (1) according to claim 1 or claim 2, wherein the at least one device (2) is configured so that flowing fluids (2.2.1) with suspended matter (2.3.2) having a specific particle number (N/Vt) from below the detection limit up to <0.1% as well as with suspended matter (2.3.3) having particle sizes of ≥50 nm to ≤200 nm and a specific particle number (N/Vt) >99% and/or with suspended matter (2.3.4) having particle sizes of ≥400 nm to 500 µm of a specific particle number (N/Vt) >99% are obtainable.

4. Filter systems (1) according to any one of claims 1 to 3, wherein the device further comprises at least one flow pipe (2.1) with a closed wall (2.1.1) which encloses or enclose at least one flow channel (2.4) with the flow area through which the fluids (2.2, 2.2.1) flow, wherein
the at least one flow pipe (2.1) comprises at least two pairs of mutually associated and opposing piezoelectric ultrasonic transmitters (2.4.1) which are arranged on the outside (2.1.1.1) and/or on the inside (2.1.1.2) and/or in the respective closed wall (2.1.1) in such a way that the imaginary lines between the respective pairs intersect at an angle of 90° for generating the at least one standing acoustic ultrasonic field (2.4.2).

5. Filter systems (1) according to any one of the claims 1 to 4, **characterized in that** the fluids (2.2, 2.2.1, 2.2.2) are gaseous, liquid, gel-like or mixed phases.

6. Filter systems (1) according to any one of the claims 1 to 5, **characterized in that**
- the at least one flow pipe (2.1) has at least one device (2.8) for metering of particles (2.3.5) of a particle size >400 nm to 500 µm into the at least one flow channel (2.4) and/or the at least one device (2.8) is assigned to the at least one flow area (2.1), and/or
- the at least one flow pipe (2.1) and/or the at least one flow area (2.1) before and/or after the at least one filter (3) at least one branch (2.1.8) for discharging the suspended matter(2.3.3), (2.3.4) and/or (2.3.5) from the at least one flow channel (2.4) with the help of the superposition (2.4.2Ü) of standing ultrasonic longitudinal waves and their harmonics and /or with the help of ultrasonic shock waves (2.4.2S).

7. Filter systems (1) according to any one of the claims 1 to 6, **characterized in that** the at least one filter (3) having a smallest filterable particle size of 50 nm to 1000 nm is selected from the group consisting of high-performance EPA particle filters, HEPA filters, ULPA high-performance filters, medium filters, tube filters without pressure loss, pre-filters, automotive interior filters, cake filters, crossflow filters, flexible filters, rigid filters, industrial (Siebec) filters, fleeces, backwash filters, water filters, precoat filters, room filters, bed filters, membranes magnetic filters, graphene filters, Venturi washers, electrostats, optical separators, gas separators, gas scrubbers, SCR catalysts and OCR catalysts, wherein the materials are selected from the group consisting of etched metals, sintered metals, metal foams, metal threads, metal wool, metal fabric, monolithic, permeable plastics, plastic fabrics, plastic threads, plastic wool, plastic fabrics, plastic foams, papers, cardboard, cellulose threads, cellulose fabrics, cellulose wools, lignin threads, lignin wools, lignin fabrics, natural fibers, natural wool, natural fiber fabrics, knitted natural fiber fabrics, natural material foams, sponges, glass fibers, glass wool, glass frits, monolithic permeable ceramic materials, ceramic frits, ceramic fibers, ceramic fabrics, ceramic wool, ceramic foams, boron fibers and stone fibers as well as composite materials of at least two of the aforementioned materials.

8. Filter systems (1) according to any one of the claims 1 to 7, **characterized in that** the filter systems (1) are equipped to be mounted vibration-free, airworthy, mobile and/or floatable and have intake devices and blowers (16.4) or have no intake devices and blowers (16.4).

9. Filter systems (1) according to any one of the claims 1 to 8, **characterized in that** the at least one fluid connection (2.7) is formed by at least one Venturi pipe section (2.7.1) with a fluid permeable wall (2.7.2), which section adjoins the at least one flow pipe (2.1) and the wall (2.7.2) of which has on the inside at least two annular adjusting plates (2.7.3) inclined against the flow direction (2.5.1) and acting according to the Venturi principle, wherein, as seen in the flow direction (2.5.1), are at least four openings (2.7.4) located after each annular adjusting plate (2.7.3) through which openings (2.4.7) the fluids (2.2.1) are dischargeable to at least one filter (3), or in the alternative, that (a), the at least one filter (3) of a smallest filterable particle size of 50 nm to 1000 nm surrounds the at least one Venturi pipe section (2.7.1) in the form of a cuff (3.3), which in turn is enclosed at a distance from at least one sleeve-shaped closed wall (3.4), so that at least one collecting gap (2.7.6) for the filtered fluid (2.2.2) is formed, wherein the at least one wall (3.4) has at least one fluid connection (3.1) with the outlet device (3.2) for the discharge of the filtered fluid (2.2.2) or in the alternative, that (b) the at least one Venturi pipe section (2.7.1) is surrounded by at least one cuff-like collecting gap (2.7.7), which is closed to the outside, for collecting and feeding the fluids (2.2.1) through at least one collecting pipe (2.7.8) to at least one filter (3).

10. Filter systems (1) according to claim 9, **characterized in that** (a), the fluid (2.2.2) emerging from the at least one filter (3.3) is collectible in the at least one collecting gap (3.4.1) and is directly dischargeable through at least one outlet device (3.2) and/or is traceable through at least one recirculation pipe (2.7.5) and through at least one outlet opening (2.7.5.1) into the fluid (2.2.2) flowing through the at least one extension (2.1.2) of the at least one flow pipe (2.1) or in the alternative, wherein (b) the filtered fluid (2.2.2) emerging from the at least one filter (3) can be directly fed through at least one fluid connection (3.1) to at least one outlet device (3.2) and/or is traceable through at least one recirculation pipe (2.7.5) and through at least one outlet opening (2.7.5.1) into the fluid (2.2.2) flowing through the at least one extension (2.1.2) of the at least one flow pipe (2.1).

11. Filter systems (1) according to any one of the claims 1 to 10, **characterized in that** the clear span (2.1.4) of the at least one flow pipe (2.1) and/or of the at least one flow area (2.1) is narrowing steadily or suddenly in the flow direction (2.5.1), so that the dead volume (2.3.5) of the fluids (2.2), which is free from suspended matter (2.3), is decreasing.

12. Filter systems (1) according to any one of the claims 1 to 11, **characterized in that** the suspended matter and particles (2.3.3), (2.3.4) and/or (2.3.5) can be channeled out of the at least one flow channel (2.4) into at least one branch (2.1.8) of the at least one flow pipe (2.1) and/or of the at least one flow area (2.1) before and/or after the at least one filter (3) having a smallest filterable particle size of 50 nm to 1000 nm with the help of shock waves (2.4.2S) and/or with the help of the superposition (2.4.2Ü) of standing longitudinal waves and their standing harmonics.

13. Filtration method using a filter system (1) according to any one of the claims 1 to 12,
wherein
(I) fluids (2.2) containing suspended matter (2.3) having a particle size of from 400 pm to ≤500 µm are conveyed by at least one conveying device (2.5) into and through at least one flow pipe (2.1) and/or at least one flow area (2.1) of at least one device (2) through at least one flow channel (2.4), with the at least one flow pipe (2.1) being surrounded by a closed wall (2.1.1),
(II) at least one standing acoustic ultrasonic field (2.4.2) having a power level of 40 dB to 250 dB and an energy input into the at least one flow channel (2.4) of 0.25 W to 1 kW is generated with the help of ultrasonic waves (2.4.2) of the frequency of 1 kHz to 800 MHz in the flowing fluids (2.2) and/or in the objects (2.6) fixed in the fluids (2.2) flowing through the objects (2.6), which standing acoustic ultrasonic field (2.4.2) consists of standing, modulated and non-modulated ultrasonic longitudinal waves (2.4.2) and their harmonics and/or of ultrasonic transverse waves (2.4.2T) and their harmonics, whereby
- in the case of the at least one flow area (2.1) the at least one ultrasonic field (2.4.2) is generated by at least two pairs of mutually associated and opposing piezoelectric ultrasonic transmitters (2.4.1),
- in the case of the at least one flow pipe (2.1), the at least one ultrasonic field is generated by at least two pairs of mutually associated and opposing piezoelectric ultrasonic transmitters (2.4.1),
- wherein the at least one standing acoustic ultrasonic field (2.4.2) is generated, monitored, modulated and stabilized by at least one electronic device for generating feedback loops and
- wherein the fluids (2.2) and in the further course of the flow channel (2.4) also the fluids (2.2.1) are conveyed by at least one conveying device (2.5) in conveying direction (2.5.1) into and through the at least one flow pipe (2.1) and/or into and through the at least one flow area (2.1) and through at least one fluid connection (2.7) of the at least one flow pipe (2.1) and/or of the at least one flow area (2.1) to at least one filter (3) having a smallest filterable particle size of 50 nm to 1000 nm and being permeated by the fluids (2.2.1),
(III) the fluids (2.2) and in the further course of the flow channel (2.4) also the treated fluids (2.2.1) are conveyed by at least one conveying device (2.5) in conveying direction (2.5.1) into and through the at least one flow pipe (2.1) and/or into and through the at least one flow area (2.1) through the at least one fluid connection (2.7) of the at least one flow pipe (2.1) and/or of the at least one flow area (2.1) to at least one filter (3) having a smallest filterable particle size of 50 nm to 1000 nm and being permeated by the fluids (2.2.1),
(IV) are separated from the flowing fluids (2.2.1) by at least one filter (3), after which the filtrated fluids (2.2.2) emerging of the at least one filter (3) with at least one outlet device (3.3; 3.4) contain the suspended matter (2.3.1), (2.3.2), (2.3.3), (2.3.4) and (2.3.5) having specific particle numbers (N/Vt) below the respective detection limit and/or up to 0.1%, wherein N = particle number, V = volume [m³], t = time [h] and wherein the percentages given above are each based on the respective specific starter numbers (N/Vt) of the respective suspended matter = 100%, and/or
(V) the suspended matter (2.3.1), (2.3.2), (2.3.3), (2.3.4) and (2.3.5) are channeled out of the at least one flow channel (2.4) into at least one branch (2.1.8) of the at least one flow pipe (2.1) and/or of the at least one flow area (2.1) before and/or after the at least one filter (3) with the help of ultrasonic shock waves (2.4.2S) and/or with the help of superposition of standing ultrasonic longitudinal waves (2.4.2) and their standing harmonics and are conveyed to at least one further filter (3) and filtrated.

14. The use of the filter systems (1) according to any one of the claims 1 to 12 and/or the filtration method according to claim 13 for the removal of organic, inorganic and/or biogenic, gaseous, gel-like, liquid and/or solid suspended matter (2.3) with a particle size of 400 pm to ≤500 µm and/or of other molecularly dispersed NOxae from liquid, gel-like and/or gaseous fluids (2.2) and/or for their chemical conversion in these fluids (2.2).

15. Equipment and systems selected from the group consisting of roads, bridges, buildings, squares, stadiums, air conditioning systems, clinics, medical devices, electronic devices, laboratories, labs-on-a-chip, clean room laboratories, power plants, incineration plants, chemical plants, gas separation plants, nuclear plants, means of locomotion by land, water, air, underground and under water and interior spaces of space stations, **characterized in that** they contain at least one filter system (1) according to one of claims 1 to 12.

## Revendications

1. Installations de filtration (1) pour des matières en suspension (2.3) d'une taille de particules de 400 pm à ≤ 500 µm dans des fluides en écoulement (2.2), les installations de filtration (1) comprenant chacune au moins un dispositif (2) dans des corps (2.6) pouvant être traversés par les fluides (2.2) et fixés dans les fluides (2.2), choisis dans le groupe constitué par des membranes vibrantes perméables aux fluides, des mousses, des filets, des fils et des tissus, le dispositif comprenant au moins une zone d'écoulement (2.1) destinée à être traversée par les fluides (2.2, 2.2.1), où
- l'au moins une zone d'écoulement (2.1) présente au moins deux paires d'émetteurs piézoélectriques à ultrasons (2.4.1) associés l'un à l'autre et opposés l'un à l'autre pour générer l'au moins un champ acoustique ultrasonore stationnaire (2.4.2), les émetteurs piézoélectriques à ultrasons étant configurés pour générer au moins un champ acoustique ultrasonore stationnaire (2.4.2) d'un niveau de puissance de 40 dB à 250 dB à partir d'ondes stationnaires ultrasonores longitudinales modulées et non modulées (2.4.2) et de leurs harmoniques et/ou d'ondes ultrasonores transversales (2.4.2T) et de leurs harmoniques (2.4.2) d'une fréquence de 1 kHz à 800 MHz,
- au moins un dispositif électronique étant en outre présent pour générer, surveiller et stabiliser l'au moins un champ acoustique ultrasonore stationnaire (2.4.2) au moyen d'au moins une boucle de rétroaction, et le dispositif étant configuré de telle sorte qu'il alimente les émetteurs piézoélectriques à ultrasons (2.4.1) avec un apport d'énergie de 0,25 W à 1 kW,
- au moins un dispositif de transport (2.5) étant en outre prévu pour un débit volumique pour les fluides (2.2, 2.2.1) dans et à travers l'au moins une zone d'écoulement (2.1),
- au moins une liaison fluidique (2.7) de l'au moins une zone d'écoulement (2.1) avec au moins un filtre (3) d'une taille de particules filtrables de 50 nm à 1 000 nm peut être traversé par les fluides (2.2.1).

2. Installations de filtration (1) selon la revendication 1, dans lesquelles l'au moins un dispositif (2) est configuré de sorte que des fluides en écoulement (2.2.1) avec des matières en suspension (2.3.1) d'un nombre spécifique de particules (N/Vt) inférieur à la limite de détection jusqu'à <0,1 % peuvent être obtenus.

3. Installations de filtration (1) selon la revendication 1 ou la revendication 2, dans lesquelles l'au moins un dispositif (2) est configuré de sorte que des fluides en écoulement (2.2.1) contenant des matières en suspension (2.3.2) d'un nombre spécifique de particules (N/Vt) inférieur à la limite de détection jusqu'à <0,1 % ainsi que des matières en suspension (2.3.3) avec des tailles de particules de ≥50 nm à ≤200 nm et un nombre spécifique de particules (N/Vt) >99 % et/ou avec des matières en suspension (2.3.4) avec des tailles de particules ≥400 nm à 500 µm d'un nombre spécifique de particules (N/Vt) >99 % peuvent être obtenus.

4. Installations de filtration (1) selon l'une des revendications 1 à 3, le dispositif comprenant en outre au moins un tube d'écoulement (2.1) avec une paroi fermée (2.1.1), qui entoure(nt) au moins un canal d'écoulement (2.4) avec la zone d'écoulement, pour le passage des fluides (2.2, 2.2.1), dans lequel
l'au moins un tube d'écoulement (2.1) présente au moins deux paires d'émetteurs piézoélectriques à ultrasons (2.4.1) associés l'un à l'autre et opposés l'un à l'autre, qui sont disposés sur le côté extérieur (2.1.1.1) et/ou sur le côté intérieur (2.1.1.2) et/ou dans la paroi fermée (2.1.1) respective elle-même de telle sorte que les lignes de liaison imaginaires entre les paires respectives se croisent sous un angle de 90°, pour générer l'au moins un champ d'ultrasons acoustique stationnaire (2.4.2).

5. Installations de filtration (1) selon l'une quelconque des revendications 1 à 4, **caractérisées en ce que** les fluides (2.2, 2.2.1, 2.2.2) sont gazeux, liquides, sous forme de gel ou de phases mixtes.

6. Installations de filtration (1) selon l'une des revendications 1 à 5, **caractérisées en ce que**
- l'au moins un tube d'écoulement (2.1) présente au moins un dispositif (2.8) pour le dosage de particules (2.3.5) d'une taille de particules >400 nm à 500 µm dans l'au moins un canal d'écoulement (2.4) et/ou **en ce qu'**au moins un dispositif (2.8) est associé à l'au moins une zone d'écoulement (2.1), et/ou
- l'au moins un tube d'écoulement (2.1) et/ou l'au moins une zone d'écoulement (2.1), avant et/ou après l'au moins un filtre (3), au moins une dérivation (2.1.8) pour l'évacuation des matières en suspension (2.3.3), (2.3.4) et/ou (2.3.5) hors de l'au moins un canal d'écoulement (2.4) au moyen de la superposition (2.4.2Ü) d'ondes longitudinales ultrasonores stationnaires avec leurs harmoniques et/ou au moyen d'ondes de choc ultrasonores (2.4.2S).

7. Installations de filtration (1) selon l'une des revendications 1 à 6, **caractérisées en ce que** l'au moins un filtre (3) présente une taille de particules filtrables la plus petite de 50 nm à 1000 nm, choisie dans le groupe constitué par les filtres à particules à haut rendement EPA, les filtres pour matières en suspension HEPA, les filtres pour matières en suspension à haut rendement ULPA, les filtres à milieu, les filtres tubulaires sans perte de pression, les préfiltres, filtres d'habitacle automobile, filtres à gâteaux, filtres à courant transversal, filtres flexibles, filtres rigides, filtres industriels (Siebec), non-tissés, filtres à lavage à contre-courant, filtres à eau, filtres à alluvionnage, filtres spatiaux, filtres à lit stratifié, membranes, filtres magnétiques, filtres en graphène, laveurs Venturi, électrostats, séparateurs optiques, séparateurs de gaz, laveurs de gaz, catalyseurs SCR et catalyseurs OCR, les matériaux étant choisis dans le groupe constitué par les métaux corrodés, les métaux frittés, les mousses métalliques, les fils métalliques, les laines métalliques, les tissus métalliques, les plastiques perméables monolithiques, les tissus plastiques, les fils plastiques, les laines plastiques, les tissus plastiques, les mousses plastiques, les papiers, les cartons, les fils de cellulose, les tissus de cellulose, les laines de cellulose, les fils de lignine, les laines de lignine, des tissus de lignine, des fibres naturelles, de la laine naturelle, des tissus de fibres naturelles, des tricots de fibres naturelles, des mousses de matières naturelles, des éponges, des fibres de verre, de la laine de verre, des frittes de verre, des céramiques monolithiques perméables, des frittes de céramique, des fibres de céramique, des tissus de céramique, des laines de céramique, des mousses de céramique, des fibres de bore et des fibres de pierre, ainsi que des matériaux composites d'au moins deux des matériaux précités.

8. Installations de filtration (1) selon l'une des revendications 1 à 7, **caractérisées en ce que** les installations de filtration (1) sont équipées pour être montées à l'abri des vibrations, pour pouvoir voler, être déplacées et/ou flotter et disposent d'aspirations et de souffleries (16.4) ou n'ont pas d'aspirations et de souffleries (16.4).

9. Installations de filtration (1) selon l'une des revendications 1 à 8, **caractérisées en ce que** l'au moins une liaison fluidique (2.7) est formée par au moins une tube venturi (2.7.1) avec une paroi (2.7.2) perméable au fluide, qui se raccorde à l'au moins un tube d'écoulement (2.1) et dont la paroi (2.7.2) comporte au moins deux tôles d'approche annulaires (2.7.3) inclinées sur le côté intérieur dans le sens opposé au sens d'écoulement (2.5.1) qui agissent selon le principe du venturi, au moins quatre ouvertures (2.7.4) se trouvant, vu dans le sens d'écoulement (2.5.1), derrière chaque tôle d'approche annulaire (2.7.3), par lesquelles ouvertures (2.4.7) les fluides (2.2.1) peuvent être évacués vers au moins un filtre (3), ou en variante (a) que l'au moins un filtre (3) d'une taille de particules filtrables la plus petite de 50 nm à 1000 nm entoure l'au moins un tube venturi (2.7.1) sous la forme d'une manchette (3.3), qui est à son tour entourée à une certaine distance par au moins une paroi fermée en forme de manchette (3.4), de sorte qu'au moins une fente de collecte (2.7.6) est formée pour le fluide (2.2.2) filtré, l'au moins une paroi (3.4) établissant au moins une liaison fluidique (3.1) avec le dispositif de sortie (3.2) pour l'évacuation du fluide (2.2.2) filtré ou, en variante (b), l'au moins un tube venturi (2.7.1) est entouré d'au moins une fente de collecte (2.7.7) en forme de manchette, fermée vers l'extérieur, pour la collecte et l'amenée du fluide (2.2.1) par l'intermédiaire d'au moins un tube collecteur (2.7.8) vers au moins un filtre (3).

10. Installations de filtration (1) selon la revendication 9, **caractérisées en ce que** (a) le fluide (2.2.2) sortant de l'au moins un filtre (3.3) peut être collecté dans l'au moins une fente de collecte (3.4.1) et peut être directement évacué par au moins un dispositif de sortie (3.2) et/ou peut être suivi par au moins un retour (2.7.5) et au moins un orifice de sortie (2.7.5.1) dans le fluide (2.2.2) s'écoulant dans l'au moins une pièce de prolongement (2.1.2) de l'au moins un tube d'écoulement (2.1) ou alternativement (b) le fluide (2.2.2) filtré sortant de l'au moins un filtre (3) peut être ramené directement par au moins une liaison fluidique (3.1) à au moins un dispositif de sortie (3.2) et/ou qui peut être suivi dans le fluide (2.2.2) s'écoulant dans l'au moins une pièce de prolongement (2.1.2) de l'au moins un tube d'écoulement (2.1) par l'intermédiaire d'au moins un retour (2.7.5) et d'au moins un orifice de sortie (2.7.5.1).

11. Installations de filtration (1) selon l'une des revendications 1 à 10, **caractérisées en ce que** le diamètre intérieur (2.1.4) de l'au moins un tube d'écoulement (2.1) et/ou de l'au moins une zone d'écoulement (2.1) se réduit de manière continue ou brusque dans la direction d'écoulement (2.5.1), de sorte que le volume mort (2.3.5) des fluides (2.2) exempt de matières en suspension (2.3) diminue.

12. Installations de filtration (1) selon l'une des revendications 1 à 11, **caractérisées en ce que** les matières en suspension et les particules (2.3.3), (2.3.4) et/ou (2.3.5) peuvent être évacuées de l'au moins un canal d'écoulement (2.4) dans au moins une dérivation (2.1.8) de l'au moins un tube d'écoulement (2.1) et/ou de l'au moins une zone d'écoulement (2.1) avant et/ou après l'au moins un filtre (3) d'une taille de particules filtrables la plus petite de 50 nm à 1000 nm à l'aide d'ondes de choc (2.4.2S) et/ou de superpositions (2.4.2Ü) d'ondes longitudinales stationnaires avec leurs harmoniques stationnaires.

13. Procédé de filtration dans lequel on met en œuvre une installation de filtration (1) selon l'une quelconque des revendications 1 à 12, dans lequel
(I) des fluides (2,2) qui contiennent des matières en suspension (2.3) d'une taille de particules de 400 pm à ≤500 µm, sont transportés à l'aide d'au moins un dispositif de transport (2.5) dans et à travers au moins un tube d'écoulement (2.1) et/ou au moins une zone d'écoulement (2.1) d'au moins un dispositif (2) à travers au moins un canal d'écoulement (2.4), l'au moins un tube d'écoulement (2.1) étant entouré par une paroi fermée (2.1.1),
(II) au moins un champ acoustique ultrasonore stationnaire (2.4.2) d'un niveau de puissance de 40 dB à 250 dB et d'un apport d'énergie dans l'au moins un canal d'écoulement (2.4) de 0,25 W à 1 kW est généré au moyen d'ondes ultrasonores (2.4.2) d'une fréquence de 1 kHz à 800 MHz dans les fluides en écoulement (2.2) et/ou dans les corps (2.6) fixés dans les fluides (2.2) traversant les corps (2.6), ledit champ acoustique ultrasonore stationnaire (2.4.2) se composant d'ondes longitudinales ultrasonores (2.4.2) stationnaires, modulées et non modulées et de leurs harmoniques et/ou d'ondes transversales ultrasonores (2.4.2T) et de leurs harmoniques, de sorte que
- dans le cas de l'au moins une zone d'écoulement (2.1), l'au moins un champ d'ultrasons (2.4.2) est généré par au moins deux paires d'émetteurs piézoélectriques à ultrasons (2.4.1) associés et opposés l'un à l'autre,
- dans le cas de l'au moins un tube d'écoulement (2.1), l'au moins un champ d'ultrasons est généré par au moins deux paires d'émetteurs piézoélectriques à ultrasons (2.4.1) associés et opposés l'un à l'autre,
- l'au moins un champ acoustique ultrasonore stationnaire (2.4.2) étant généré, contrôlé, modulé et stabilisé avec au moins un dispositif électronique pour la génération de boucles de rétroaction et
- les fluides (2.2) et, dans la suite du canal d'écoulement (2.4), aussi les fluides (2.2.1) étant transportés par au moins un dispositif de transport (2.5) dans la direction de transport (2.5.1) dans et à travers l'au moins un tube d'écoulement (2.1) et/ou l'au moins une zone d'écoulement (2.1) et par au moins une liaison fluidique (2.7) de l'au moins un tube d'écoulement (2.1) et/ou de l'au moins une zone d'écoulement (2.1) vers au moins un filtre (3) d'une taille de particules filtrables la plus petite de 50 nm à 1000 nm, qui est traversé par les fluides (2.2.1),
(III) les fluides (2.2) et, dans la suite du canal d'écoulement (2.4), aussi les fluides traités (2.2.1) sont transportés par au moins un dispositif de transport (2.5) dans la direction de transport (2.5.1) dans et à travers l'au moins un tube d'écoulement (2.1) et/ou dans et à travers l'au moins une zone d'écoulement (2.1), par l'au moins une liaison fluidique (2.7) de l'au moins un tube d'écoulement (2.1) et/ou de l'au moins une zone d'écoulement (2.1) vers au moins un filtre (3) d'une taille de particules filtrables la plus petite de 50 nm à 1000 nm, qui est traversé par les fluides (2.2.1),
(IV) sont séparés des fluides en écoulement (2.2.1) par l'au moins un filtre (3), après quoi les fluides (2.2.2) filtrés sortant de l'au moins un filtre (3) avec au moins un dispositif de sortie (3.3 ; 3.4) contiennent les matières en suspension (2.3.1), (2.3.2), (2.3.3), (2.3.4) et (2.3.5) dans des nombres spécifiques de particules (N/Vt) inférieurs à la limite de détection respective et/ou jusqu'à 0,1 %, où N = nombre de particules, V = volume [m³], t = temps [h], et les indications de pourcentage se rapportent aux nombres spécifiques d'amorçage respectifs (N/Vt) des matières en suspension respectives =100 %, et/ou
(V) les matières en suspension (2.3.1), (2.3.2), (2.3.3), (2.3.4) et (2.3.5) sont évacuées de l'au moins un canal d'écoulement (2.4) dans au moins une dérivation (2.1.8) de l'au moins un tube d'écoulement (2.1) et/ou de l'au moins une zone d'écoulement (2.1), avant et/ou après l'au moins un filtre (3) à l'aide d'ondes de choc ultrasonores (2.4.2S) et/ou de superpositions d'ondes stationnaires longitudinales ultrasonores (2.4.2) avec leurs harmoniques stationnaires, et sont amenées à au moins un autre filtre (3) et sont filtrées.

14. Utilisation des installations de filtration (1) selon l'une des revendications 1 à 12 et/ou du procédé de filtration selon la revendication 13 pour l'élimination de matières en suspension organiques, inorganiques et/ou biogènes, gazeuses, gélatineuses, liquides et/ou solides (2.3) d'une taille de particules de 400 pm à ≤500 µm et/ou d'autres substances nocives à dispersion moléculaire à partir de fluides (2.2) liquides, gélatineux et/ou gazeux et/ou pour leur transformation chimique dans ces fluides (2.2).

15. Appareils et installations choisis dans le groupe constitué par les routes, les ponts, les bâtiments, les places, les stades, les installations de climatisation, les cliniques, les appareils médicaux, les appareils électroniques, les laboratoires, les laboratoires sur puce, les laboratoires en salle blanche, les centrales électriques, les installations de combustion, les installations chimiques, les installations de séparation des gaz, les installations nucléaires, les moyens de déplacement sur terre, sur mer, dans l'air, sous terre et sous l'eau et les intérieurs de stations spatiales, **caractérisés en ce qu'**ils comprennent au moins une installation de filtration (1) selon l'une des revendications 1 à 12.
